# EUROPEAN PATENT SPECIFICATION

(11) **EP 1 658 726 B1**
(45) Date of publication and mention of the grant of the patent: **16.09.2020**
(21) Application number: 04783325.6
(22) Date of filing: 03.09.2004
(51) Int. Cl.: H04N 19/52

(54) **INNOVATIONS IN CODING AND DECODING MACROBLOCK AND MOTION INFORMATION FOR INTERLACED AND PROGRESSIVE VIDEO**
NEUERUNGEN BEI DER KODIERUNG UND DEKODIERUNG VON MAKROBLÖCKEN UND BEWEGUNGSINFORMATION FÜR ZEILENSPRUNG- UND PROGRESSIV-VIDEO
PERFECTIONNEMENTS DANS UN MACROBLOC DE CODAGE ET DE DECODAGE ET DANS L'INFORMATION DE DEPLACEMENT POUR BALAYAGE VIDEO ENTRELACE ET PROGRESSIF

(30) Priority: 07.09.2003 US 50108103 P; 27.05.2004 US 85747304; 02.09.2004 US 93388204
(43) Date of publication of application: 24.05.2006
(60) Divisional application: 10014708.1
(73) Proprietor: Microsoft Technology Licensing, LLC, Redmond, WA 98052 (US)
(72) Inventor: HSU, Pohsinag Microsoft Corporation, Redmond, WA 98052 (US); HOLCOMB, Thomas, W., Bothell ,WA 98012 (US); LI, Chih-Lung Microsoft Corporation, Redmond, WA 98052 (US); SRINIVASAN, Sridhar Microsoft Corporation, Redmond, WA 98052 (US); MUKERJEE, Kunal Microsoft Corporation, Redmond, WA 98053 (US)
(74) Representative: Grünecker Patent- und Rechtsanwälte PartG mbB
(86) International application number: PCT/US2004/029035
(87) International publication number: WO 2005/027497

(56) References cited:
- US-A- 5 973 743
- US-A- 6 026 195
- US-A- 6 026 195
- US-A- 6 094 225
- US-B1- 6 243 418
- "TEXT OF COMMITTEE DRAFT OF JOINT VIDEO SPECIFICATION (ITU-T REC. H-264 ISO/IEC 14496-10 AVC) MPEG02/N4810", ISO/IEC JTC1/SC29/WG11 MPEG02/N4810, FAIRFAX, US, 1 May 2002 (2002-05-01), pages I-X,1-133, XP001074690,
- CHAD FOGG ET AL: "Adaptive Field/Frame Block Coding Experiment Proposal", ITU-T VIDEO CODING EXPERTS GROUP VCEG, no. VCEG-N76, 24 September 2001 (2001-09-24), pages 1-7, XP030003323,
- "ISO/IEC CD 13818-2: INFORMATION TECHNOLOGY - GENERIC CODING OF MOVING PICTURES AND ASSOCIATED AUDIO INFORMATION PART 2: VIDEO", INTERNATIONAL STANDARD - ISO, ZUERICH, CH, no. 659, 1 December 1993 (1993-12-01), pages I-VII, 1-179, XP000567291,

## Description

### COPYRIGHT AUTHORIZATION

A portion of the disclosure of this patent document contains material which is subject to copyright protection. The copyright owner has no objection to the facsimile reproduction by any one of the patent disclosure, as it appears in the Patent and Trademark Office patent files or records, but otherwise reserves all copyright rights whatsoever.

### TECHNICAL FIELD

Techniques and tools for progressive and interlaced video coding and decoding are described. For example, an encoder signals macroblock mode information for macroblocks in an interlaced frame coded picture. As another example, an encoder/decoder codes and decodes luma and chroma motion vectors in an interlaced frame coded picture.

### BACKGROUND

Digital video consumes large amounts of storage and transmission capacity. A typical raw digital video sequence includes 15 or 30 pictures per second. Each picture can include tens or hundreds of thousands of pixels (also called pels). Each pixel represents a tiny element of the picture. In raw form, a computer commonly represents a pixel with 24 bits or more. Thus, the number of bits per second, or bit rate, of a typical raw digital video sequence can be 5 million bits/second or more.

Most computers and computer networks lack the resources to process raw digital video. For this reason, engineers use compression (also called coding or encoding) to reduce the bit rate of digital video. Compression can be lossless, in which quality of the video does not suffer but decreases in bit rate are limited by the complexity of the video. Or, compression can be lossy, in which quality of the video suffers but decreases in bit rate are more dramatic. Decompression reverses compression.

In general, video compression techniques include "intra" compression and "inter" or predictive compression. Intra compression techniques compress individual pictures, typically called I-frames or key frames. Inter compression techniques compress frames with reference to preceding and/or following frames, and inter-compressed frames are typically called predicted frames, P-frames, or B-frames.

### I. Inter Compression in Windows Media Video, Versions 8 and 9

Microsoft Corporation's Windows Media Video, Version 8 ["WMV8"] includes a video encoder and a video decoder. The WMV8 encoder uses intra and inter compression, and the WMV8 decoder uses intra and inter decompression. Windows Media Video, Version 9 ["WMV9"] uses a similar architecture for many operations.

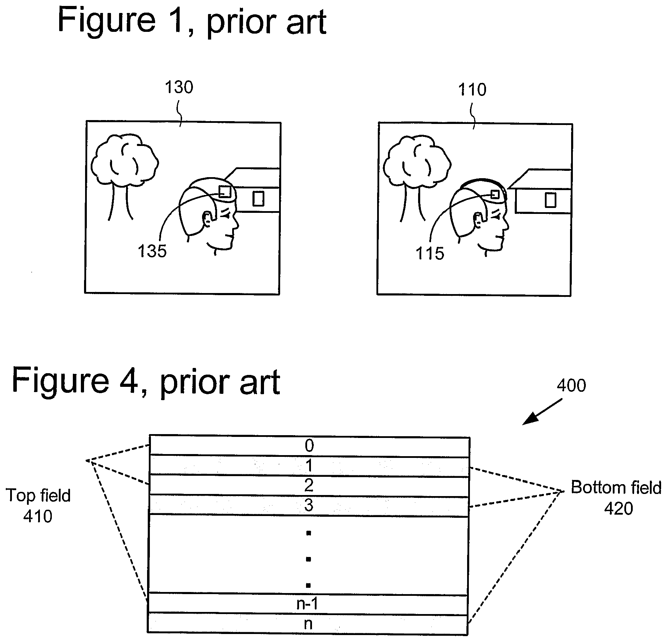

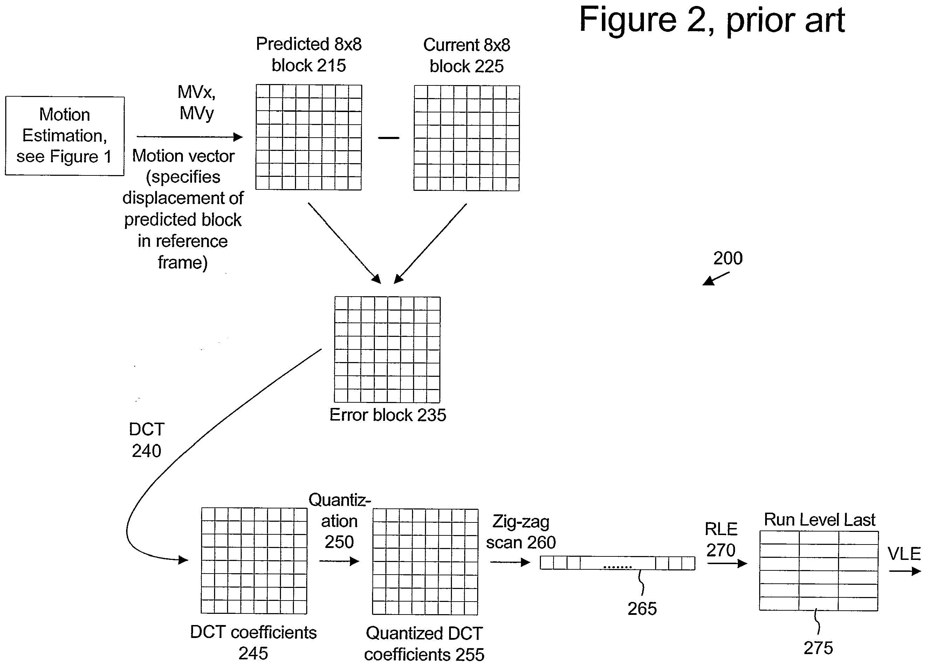

Inter compression in the WMV8 encoder uses block-based motion compensated prediction coding followed by transform coding of the residual error. Figures 1 and 2 illustrate the block-based inter compression for a predicted frame in the WMV8 encoder. In particular, Figure 1 illustrates motion estimation for a predicted frame 110 and Figure 2 illustrates compression of a prediction residual for a motion-compensated block of a predicted frame.

For example, in Figure 1, the WMV8 encoder computes a motion vector for a macroblock 115 in the predicted frame 110. To compute the motion vector, the encoder searches in a search area 135 of a reference frame 130. Within the search area 135, the encoder compares the macroblock 115 from the predicted frame 110 to various candidate macroblocks in order to find a candidate macroblock that is a good match. The encoder outputs information specifying the motion vector (entropy coded) for the matching macroblock.

Since a motion vector value is often correlated with the values of spatially surrounding motion vectors, compression of the data used to transmit the motion vector information can be achieved by selecting a motion vector predictor based upon motion vectors of neighboring macroblocks and predicting the motion vector for the current macroblock using the motion vector predictor. The encoder can encode the differential between the motion vector and the predictor. After reconstructing the motion vector by adding the differential to the predictor, a decoder uses the motion vector to compute a prediction macroblock for the macroblock 115 using information from the reference frame 130, which is a previously reconstructed frame available at the encoder and the decoder. The prediction is rarely perfect, so the encoder usually encodes blocks of pixel differences (also called the error or residual blocks) between the prediction macroblock and the macroblock 115 itself.

Figure 2 illustrates an example of computation and encoding of an error block 235 in the WMV8 encoder. The error block 235 is the difference between the predicted block 215 and the original current block 225. The encoder applies a discrete cosine transform ["DCT"] 240 to the error block 235, resulting in an 8x8 block 245 of coefficients. The encoder then quantizes 250 the DCT coefficients, resulting in an 8x8 block of quantized DCT coefficients 255. The encoder scans 260 the 8x8 block 255 into a one-dimensional array 265 such that coefficients are generally ordered from lowest frequency to highest frequency. The encoder entropy encodes the scanned coefficients using a variation of run length coding 270. The encoder selects an entropy code from one or more run/level/last tables 275 and outputs the entropy code.

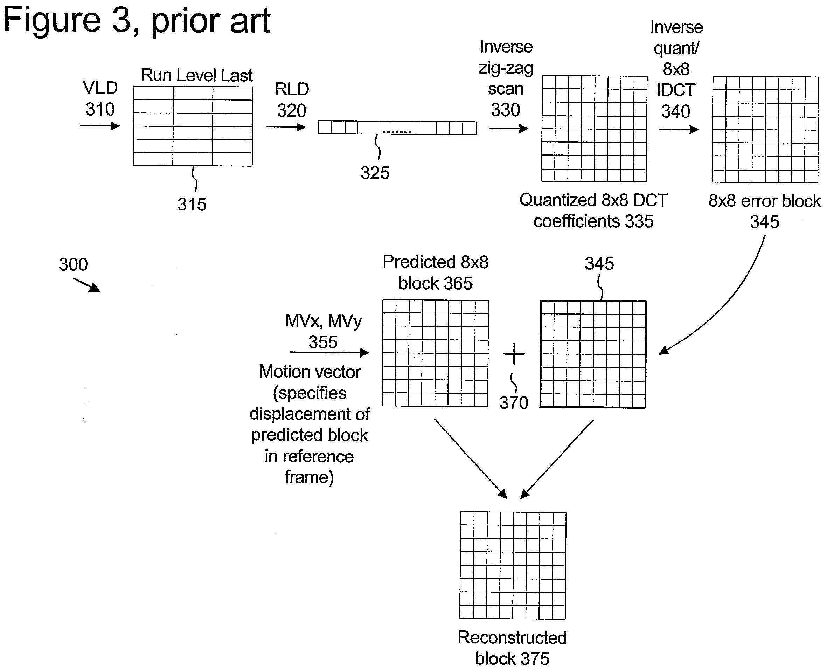

Figure 3 shows an example of a corresponding decoding process 300 for an inter-coded block. In summary of Figure 3, a decoder decodes (310, 320) entropy-coded information representing a prediction residual using variable length decoding 310 with one or more run/level/last tables 315 and run length decoding 320. The decoder inverse scans 330 a one-dimensional array 325 storing the entropy-decoded information into a two-dimensional block 335. The decoder inverse quantizes and inverse discrete cosine transforms (together, 340) the data, resulting in a reconstructed error block 345. In a separate motion compensation path, the decoder computes a predicted block 365 using motion vector information 355 for displacement from a reference frame. The decoder combines 370 the predicted block 365 with the reconstructed error block 345 to form the reconstructed block 375.

The amount of change between the original and reconstructed frames is the distortion and the number of bits required to code the frame indicates the rate for the frame. The amount of distortion is roughly inversely proportional to the rate.

### II. Interlaced Video and Progressive Video

A video frame contains lines of spatial information of a video signal. For progressive video, these lines contain samples starting from one time instant and continuing through successive lines to the bottom of the frame. A progressive I-frame is an intra-coded progressive video frame. A progressive P-frame is a progressive video frame coded using forward prediction, and a progressive B-frame is a progressive video frame coded using bi-directional prediction.

A typical interlaced video frame consists of two fields scanned starting at different times. For example, referring to Figure 4, an interlaced video frame 400 includes top field 410 and bottom field 420. Typically, the even-numbered lines (top field) are scanned starting at one time (e.g., time t) and the odd-numbered lines (bottom field) are scanned starting at a different (typically later) time (e.g., time t + 1). This timing can create jagged tooth-like features in regions of an interlaced video frame where motion is present because the two fields are scanned starting at different times. For this reason, interlaced video frames can be rearranged according to a field structure, with the odd lines grouped together in one field, and the even lines grouped together in another field. This arrangement, known as field coding, is useful in high-motion pictures for reduction of such jagged edge artifacts. On the other hand, in stationary regions, image detail in the interlaced video frame may be more efficiently preserved without such a rearrangement. Accordingly, frame coding is often used in stationary or low-motion interlaced video frames, in which the original alternating field line arrangement is preserved.

A typical progressive video frame consists of one frame of content with non-alternating lines. In contrast to interlaced video, progressive video does not divide video frames into separate fields, and an entire frame is scanned left to right, top to bottom starting at a single time.

### III. P-frame Coding and Decoding in a Previous WMV Encoder and Decoder

The encoder and decoder use progressive and interlace coding and decoding in P-frames. In interlaced and progressive P-frames, a motion vector is encoded in the encoder by computing a differential between the motion vector and a motion vector predictor, which is computed based on neighboring motion vectors. And, in the decoder, the motion vector is reconstructed by adding the motion vector differential to the motion vector predictor, which is again computed (this time in the decoder) based on neighboring motion vectors. Thus, a motion vector predictor for the current macroblock or field of the current macroblock is selected based on the candidates, and a motion vector differential is calculated based on the motion vector predictor. The motion vector can be reconstructed by adding the motion vector differential to the selected motion vector predictor at either the encoder or the decoder side. Typically, luminance motion vectors are reconstructed from the encoded motion information, and chrominance motion vectors are derived from the reconstructed luminance motion vectors.

### A. Progressive P-frame Coding and Decoding

For example, in the encoder and decoder, progressive P-frames can contain macroblocks encoded in one motion vector (1MV) mode or in four motion vector (4MV) mode, or skipped macroblocks, with a decision generally made on a macroblock-by-macroblock basis. P-frames with only 1MV macroblocks (and, potentially, skipped macroblocks) are referred to as 1MV P-frames, and P-frames with both 1MV and 4MV macroblocks (and, potentially, skipped macroblocks) are referred to as Mixed-MV P-frames. One luma motion vector is associated with each 1MV macroblock, and up to four luma motion vectors are associated with each 4MV macroblock (one for each block).

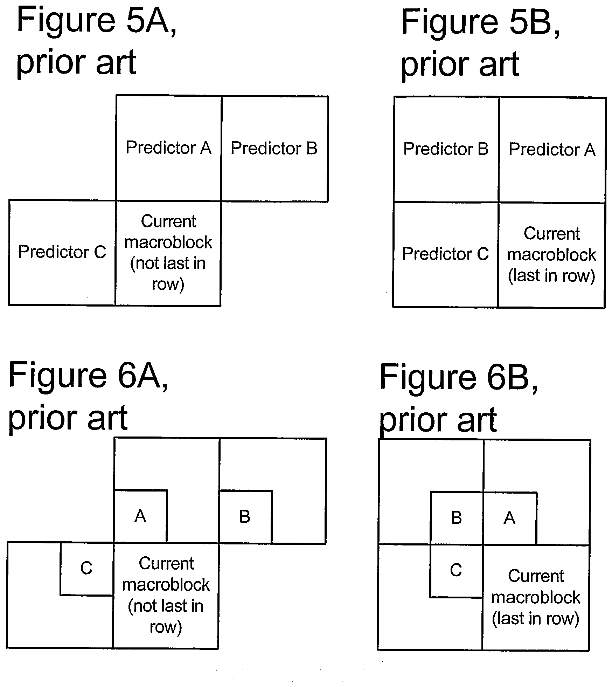

Figures 5A and 5B are diagrams showing the locations of macroblocks considered for candidate motion vector predictors for a macroblock in a 1 MV progressive P-frame. The candidate predictors are taken from the left, top and top-right macroblocks, except in the case where the macroblock is the last macroblock in the row. In this case, Predictor B is taken from the top-left macroblock instead of the top-right. For the special case where the frame is one macroblock wide, the predictor is always Predictor A (the top predictor). When Predictor A is out of bounds because the macroblock is in the top row, the predictor is Predictor C. Various other rules address other special cases such as intra-coded predictors.

Figures 6A-10 show the locations of the blocks or macroblocks considered for the up-to-three candidate motion vectors for a motion vector for a 1MV or 4MV macroblock in a Mixed-MV frame. In the following figures, the larger squares are macroblock boundaries and the smaller squares are block boundaries. For the special case where the frame is one macroblock wide, the predictor is always Predictor A (the top predictor). Various other rules address other special cases such as top row blocks for top row 4MV macroblocks, top row 1MV macroblocks, and intra-coded predictors.

Figures 6A and 6B are diagrams showing locations of blocks considered for candidate motion vector predictors for a 1MV current macroblock in a Mixed-MV frame. The neighboring macroblocks may be 1MV or 4MV macroblocks. Figures 6A and 6B show the locations for the candidate motion vectors assuming the neighbors are 4MV (i.e., predictor A is the motion vector for block 2 in the macroblock above the current macroblock, and predictor C is the motion vector for block 1 in the macroblock immediately to the left of the current macroblock). If any of the neighbors is a 1MV macroblock, then the motion vector predictor shown in Figures 5A and 5B is taken to be the motion vector predictor for the entire macroblock. As Figure 6B shows, if the macroblock is the last macroblock in the row, then Predictor B is from block 3 of the top-left macroblock instead of from block 2 in the top-right macroblock as is the case otherwise.

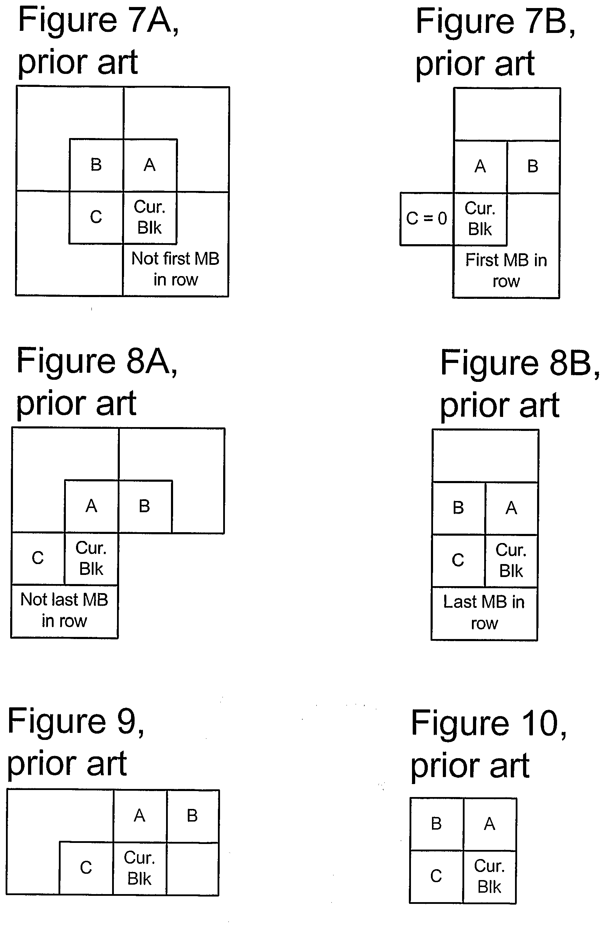

Figures 7A-10 show the locations of blocks considered for candidate motion vector predictors for each of the 4 luminance blocks in a 4MV macroblock. Figures 7A and 7B are diagrams showing the locations of blocks considered for candidate motion vector predictors for a block at position 0; Figures 8A and 8B are diagrams showing the locations of blocks considered for candidate motion vector predictors for a block at position 1; Figure 9 is a diagram showing the locations of blocks considered for candidate motion vector predictors for a block at position 2; and Figure 10 is a diagram showing the locations of blocks considered for candidate motion vector predictors for a block at position 3. Again, if a neighbor is a 1MV macroblock, the motion vector predictor for the macroblock is used for the blocks of the macroblock.

For the case where the macroblock is the first macroblock in the row, Predictor B for block 0 is handled differently than block 0 for the remaining macroblocks in the row (see Figures 7A and 7B). In this case, Predictor B is taken from block 3 in the macroblock immediately above the current macroblock instead of from block 3 in the macroblock above and to the left of current macroblock, as is the case otherwise. Similarly, for the case where the macroblock is the last macroblock in the row, Predictor B for block 1 is handled differently (Figures 8A and 8B). In this case, the predictor is taken from block 2 in the macroblock immediately above the current macroblock instead of from block 2 in the macroblock above and to the right of the current macroblock, as is the case otherwise. In general, if the macroblock is in the first macroblock column, then Predictor C for blocks 0 and 2 are set equal to 0.

### B. Interlaced P-frame Coding and Decoding

The encoder and decoder use a 4:1:1 macroblock format for interlaced P-frames, which can contain macroblocks encoded in field mode or in frame mode, or skipped macroblocks, with a decision generally made on a macroblock-by-macroblock basis. Two motion vectors are associated with each field-coded inter-macroblock (one motion vector per field), and one motion vector is associated with each frame-coded inter-macroblock. An encoder jointly encodes motion information, including horizontal and vertical motion vector differential components, potentially along with other signaling information.

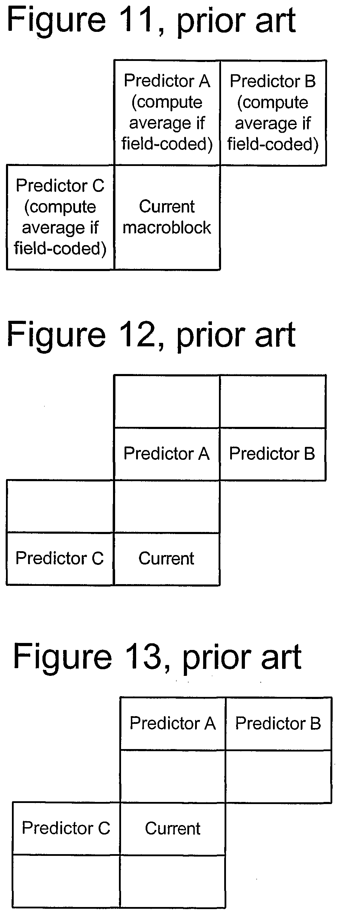

Figures 11, 12 and 13 show examples of candidate predictors for motion vector prediction for frame-coded 4:1:1 macroblocks and field-coded 4:1:1 macroblocks, respectively, in interlaced P-frames in the encoder and decoder. Figure 11 shows candidate predictors A, B and C for a current frame-coded 4:1:1 macroblock in an interior position in an interlaced P-frame (not the first or last macroblock in a macroblock row, not in the top row). Predictors can be obtained from different candidate directions other than those labeled A, B, and C (e.g., in special cases such as when the current macroblock is the first macroblock or last macroblock in a row, or in the top row, since certain predictors are unavailable for such cases). For a current frame-coded macroblock, predictor candidates are calculated differently depending on whether the neighboring macroblocks are field-coded or frame-coded. For a neighboring frame-coded macroblock, the motion vector is simply taken as the predictor candidate. For a neighboring field-coded macroblock, the candidate motion vector is determined by averaging the top and bottom field motion vectors.

Figures 12 and 13 show candidate predictors A, B and C for a current field in a field-coded 4:1:1 macroblock in an interior position in the field. In Figure 12, the current field is a bottom field, and the bottom field motion vectors in the neighboring macroblocks are used as candidate predictors. In Figure 13, the current field is a top field, and the top field motion vectors in the neighboring macroblocks are used as candidate predictors. Thus, for each field in a current field-coded macroblock, the number of motion vector predictor candidates for each field is at most three, with each candidate coming from the same field type (e.g., top or bottom) as the current field. Again, various special cases (not shown) apply when the current macroblock is the first macroblock or last macroblock in a row, or in the top row, since certain predictors are unavailable for such cases.

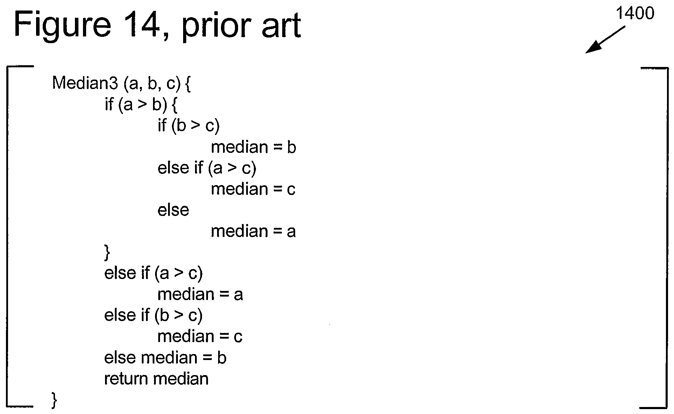

To select a predictor from a set of predictor candidates, the encoder and decoder use different selection algorithms, such as a median-of-three algorithm. A procedure for median-of-three prediction is described in pseudo-code 14 in Figure 14.

### IV. B-frame Coding and Decoding in a Previous WMV Encoder and Decoder

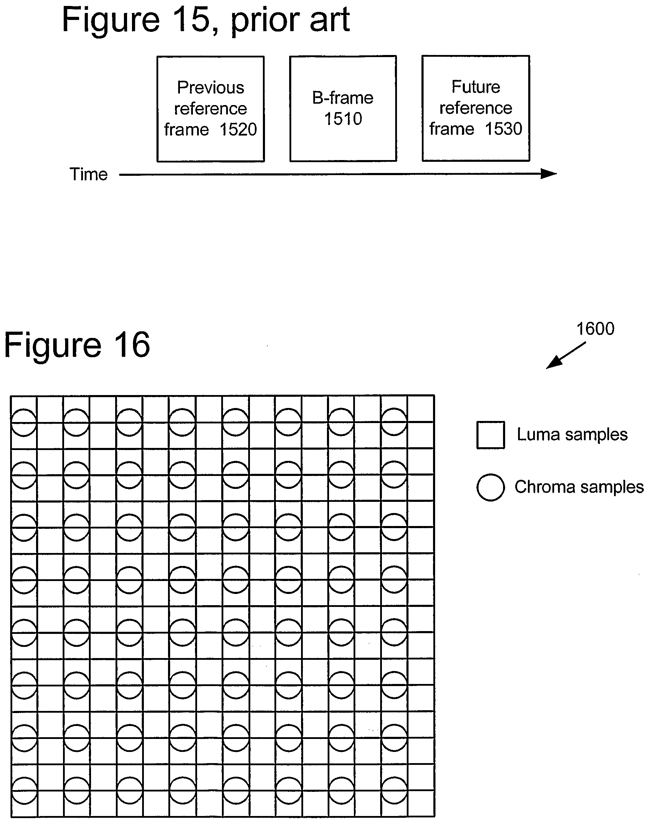

The encoder and decoder use progressive and interlaced B-frames. B-frames use two frames from the source video as reference (or anchor) frames rather than the one anchor used in P-frames. Among anchor frames for a typical B-frame, one anchor frame is from the temporal past and one anchor frame is from the temporal future. Referring to Figure 15, a B-frame 1510 in a video sequence has a temporally previous reference frame 1520 and a temporally future reference frame 1530. Encoded bit streams with B-frames typically use less bits than encoded bit streams with no B-frames, while providing similar visual quality. A decoder also can accommodate space and time restrictions by opting not to decode or display B-frames, since B-frames are not generally used as reference frames.

While macroblocks in forward-predicted frames (e.g., P-frames) have only one directional mode of prediction (forward, from previous I- or P-frames), macroblocks in B-frames can be predicted using five different prediction modes: forward, backward, direct, interpolated and intra. The encoder selects and signals different prediction modes in the bit stream. Forward mode is similar to conventional P-frame prediction. In forward mode, a macroblock is derived from a temporally previous anchor. In backward mode, a macroblock is derived from a temporally subsequent anchor. Macroblocks predicted in direct or interpolated modes use both forward and backward anchors for prediction.

### V. Signaling Macroblock Information in a Previous WMV Encoder and Decoder

In the encoder and decoder, macroblocks in interlaced P-frames can be one of three possible types: frame-coded, field-coded and skipped. The macroblock type is indicated by a multi-element combination of frame-level and macroblock-level syntax elements.

For interlaced P-frames, the frame-level element INTRLCF indicates the mode used to code the macroblocks in that frame. If INTRLCF = 0, all macroblocks in the frame are frame-coded. If INTRLCF = 1, the macroblocks may be field-coded or frame-coded. The INTRLCMB element is present at in the frame layer when INTRLCF = 1. INTRLCMB is a bitplane-coded array that indicates the field/frame coding status for each macroblock in the picture. The decoded bitplane represents the interlaced status for each macroblock as an array of 1-bit values. A value of 0 for a particular bit indicates that a corresponding macroblock is coded in frame mode. A value of 1 indicates that the corresponding macroblock is coded in field mode.

For frame-coded macroblocks, the macroblock-level MVDATA element is associated with all blocks in the macroblock. MVDATA signals whether the blocks in the macroblocks are intra-coded or inter-coded. If they are inter-coded, MVDATA also indicates the motion vector differential.

For field-coded macroblocks, a TOPMVDATA element is associated with the top field blocks in the macroblock and a BOTMVDATA element is associated with the bottom field blocks in the macroblock. TOPMVDATA and BOTMVDATA are sent at the first block of each field. TOPMVDATA indicates whether the top field blocks are intra-coded or inter-coded. Likewise, BOTMVDATA indicates whether the bottom field blocks are intra-coded or inter-coded. For inter-coded blocks, TOPMVDATA and BOTMVDATA also indicate motion vector differential information.

The CBPCY element indicates coded block pattern (CBP) information for luminance and chrominance components in a macroblock. The CBPCY element also indicates which fields have motion vector data elements present in the bitstream. CBPCY and the motion vector data elements are used to specify whether blocks have AC coefficients. CBPCY is present for a frame-coded macroblock of an interlaced P-frame if the "last" value decoded from MVDATA indicates that there are data following the motion vector to decode. If CBPCY is present, it decodes to a 6-bit field, one bit for each of the four Y blocks, one bit for both U blocks (top field and bottom field), and one bit for both V blocks (top field and bottom field).

CBPCY is always present for a field-coded macroblock. CBPCY and the two field motion vector data elements are used to determine the presence of AC coefficients in the blocks of the macroblock. The meaning of CBPCY is the same as for frame-coded macroblocks for bits 1, 3, 4 and 5. That is, they indicate the presence or absence of AC coefficients in the right top field Y block, right bottom field Y block, top/bottom U blocks, and top/bottom V blocks, respectively. For bit positions 0 and 2, the meaning is slightly different. A 0 in bit position 0 indicates that TOPMVDATA is not present and the motion vector predictor is used as the motion vector for the top field blocks. It also indicates that the left top field block does not contain any nonzero coefficients. A 1 in bit position 0 indicates that TOPMVDATA is present. TOPMVDATA indicates whether the top field blocks are inter or intra and, if they are inter, also indicates the motion vector differential. If the "last" value decoded from TOPMVDATA decodes to 1, then no AC coefficients are present for the left top field block, otherwise, there are nonzero AC coefficients for the left top field block. Similarly, the above rules apply to bit position 2 for BOTMVDATA and the left bottom field block.

### VI. Skipped Macroblocks in a Previous WMV Encoder and Decoder

The encoder and decoder use skipped macroblocks to reduce bitrate. For example, the encoder signals skipped macroblocks in the bitstream. When the decoder receives information (e.g., a skipped macroblock flag) in the bitstream indicating that a macroblock is skipped, the decoder skips decoding residual block information for the macroblock. Instead, the decoder uses corresponding pixel data from a co-located or motion compensated (with a motion vector predictor) macroblock in a reference frame to reconstruct the macroblock. The encoder and decoder select between multiple coding/decoding modes for encoding and decoding the skipped macroblock information. For example, skipped macroblock information is signaled at frame level of the bitstream (e.g., in a compressed bitplane) or at macroblock level (e.g., with one "skip" bit per macroblock). For bitplane coding, the encoder and decoder select between different bitplane coding modes.

One previous encoder and decoder define a skipped macroblock as a predicted macroblock whose motion is equal to its causally predicted motion and which has zero residual error. Another previous encoder and decoder define a skipped macroblock as a predicted macroblock with zero motion and zero residual error.

For more information on skipped macroblocks and bitplane coding, see U.S. Patent Application No. 10/321,415, entitled "Skip Macroblock Coding," filed December 16, 2002.

### VII. Chroma Motion Vectors in a Previous WMV Encoder and Decoder

Chroma motion vector derivation is an important aspect of video coding and decoding. Accordingly, software for a previous WMV encoder and decoder uses rounding and sub-sampling to derive chrominance (or "chroma") motion vectors from luminance (or "luma") motion vectors.

### A. Luma Motion Vector Reconstruction

A previous WMV encoder and decoder reconstruct motion vectors for 1MV and 4MV macroblocks in progressive frames, and frame-coded or field-coded macroblocks in interlaced frames. A luma motion vector is reconstructed by adding a motion vector differential to a motion vector predictor. In 1MV macroblocks in progressive frames and in frame-coded macroblocks in interlaced frames, a single luma motion vector applies to the four blocks that make up the luma component of the macroblock. In 4MV macroblocks in progressive frames, each of the inter-coded luma blocks in a macroblock has its own luma motion vector. Therefore, there are up to four luma motion vectors for each 4MV macroblock, depending on the number of inter-coded blocks in the macroblock. In field-coded macroblocks in interlaced frames, there are two luma motion vectors -- one for each field.

### B. Derivation and Reconstruction of Chroma Motion Vectors

The encoder and decoder use a 4:2:0 macroblock format for progressive frames. The frame data includes a luma ("Y") component and chroma components ("U" and "V"). Each macroblock including four 8x8 luminance blocks (at times treated as one 16x16 macroblock) and two 8x8 chrominance blocks. Figure 16 shows a 4:2:0 YUV sampling grid. The 4:2:0 YUV sampling grid of Figure 16 shows a spatial relationship between luma and chroma samples of a macroblock. The resolution of the chroma samples is half the resolution of the luma samples in both horizontal (x) and vertical (y) directions. Thus, in order to derive distances on the chroma grid from corresponding distances on the luma grid, a previous WMV encoder and decoder divides luma motion vector components by 2. This is the basis for a down-sampling step in deriving chroma motion vectors from luma motion vectors in progressive frames.

The encoder and decoder, chroma vectors in progressive frames are reconstructed in two steps. First, the nominal chroma motion vector is obtained by combining and scaling the luma motion vectors appropriately. Second, rounding is optionally performed after scaling to reduce decoding time.

For example, in a 1MV macroblock, chroma motion vector components (cmv_x and cmv_y) are derived from luma motion vector components (lmv_x and lmv_y) by scaling the luma components according to the following pseudo code:

```
        // s_RndTbl[0] = 0, s_RndTbl[1] = 0, s_RndTbl[2] = 0, s_RndTbl[3] = 1
        cmv_x = (lmv_x + s_RndTbl[1mv_x & 3]) >> 1
        cmv_y = (lmv_y + s_RndTbl[1mv_y & 3])>> 1
```

Scaling is performed with a rounding table array (s_RndTbl[]) such that half-pixel offsets are preferred over quarter-pixel offsets. Additional rounding can be performed after the scaling operation to reduce decoding time.

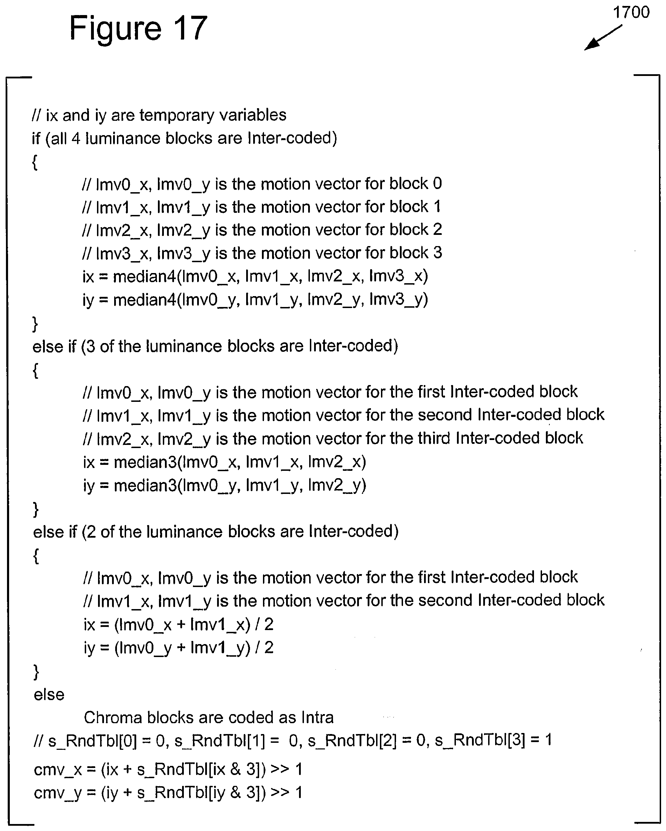

In a 4MV macroblock, the encoder and decoder derive a chroma motion vector from the motion information in the four luma blocks according to the pseudocode 1700 of Figure 17. As shown in Figure 17, the encoder and decoder derive chroma motion vector components using median prediction or averaging of luma motion vectors of inter-coded blocks in the macroblock. In the special case where three or more of the blocks are intra-coded, the chroma blocks are also intra-coded.

The encoder and decoder perform additional rounding if the sequence-level bit FASTUVMC = 1. The rounding signaled by FASTUVMC favors half-pixel and integer pixel positions for chroma motion vectors, which can speed up encoding.

A previous WMV encoder and decoder use a 4:1:1 macroblock format for interlaced frames. For interlaced frames, the frame data also includes a luma ("Y") component and chroma components ("U" and "V"). However, in a 4:1:1 macroblock format, the resolution of the chroma samples is one-quarter the resolution of the luma samples in the horizontal direction, and full resolution in the vertical direction. Thus, in order to derive distances on the chroma grid from corresponding distances on the luma grid, a previous WMV encoder and decoder divides horizontal luma motion vector components by 4.

For a frame-coded macroblock, one chroma motion vector corresponding to the single luminance motion vector is derived. For a field-coded macroblock, two chrominance motion vectors are derived corresponding to the two luminance motion vectors -- one for the top field and one for the bottom field.

In a previous WMV encoder and decoder, the rules for deriving chroma motion vectors in interlaced frames are the same for both field-coded macroblocks and frame-coded macroblocks. The x-component of the chrominance motion vector is scaled (down-sampled) by a factor of four, while the y-component of the chrominance motion vector remains the same as the luminance motion vector. The scaled x-component of the chrominance motion vector is also rounded to a neighboring quarter pixel location. Chroma motion vectors are reconstructed according to the pseudo-code below, in which cmv_x and cmv_y denote the chroma motion vector components, and lmv_x and lmv_y denote the corresponding luminance motion vector components.

```
    frac_x4 = (lmv_x << 2) % 16;
    int_x4= (lmv_x << 2) - frac_x;
    ChromaMvRound [16] = {0, 0, 0, .25, .25, .25, .5, .5, .5, .5, .5, .75, .75, .75, 1, 1};
    cmv_y = lmv_y;
    cmv_x = Sign (lmv_x) * (int_x4 >> 2) + ChromaMvRound [frac_x4];
```

### VIII. Standards for Video Compression and Decompression

Several international standards relate to video compression and decompression. These standards include the Motion Picture Experts Group ["MPEG"] 1, 2, and 4 standards and the H.261, H.262 (another title for MPEG 2), H.263 and H.264 (also called JVT/AVC) standards from the International Telecommunication Union ["ITU']. These standards specify aspects of video decoders and formats for compressed video information. Directly or by implication, they also specify certain encoder details, but other encoder details are not specified. These standards use (or support the use of) different combinations of intraframe and interframe decompression and compression.

### A. Motion Estimation/Compensation in the Standards

One of the primary methods used to achieve data compression of digital video sequences in the international standards is to reduce the temporal redundancy between pictures. These popular compression schemes (MPEG-1, MPEG-2, MPEG-4, H.261, H.263, etc.) use motion estimation and compensation. For example, a current frame is divided into uniform square regions (e.g., blocks and/or macroblocks). A matching region for each current region is specified by sending motion vector information for the region. The motion vector indicates the location of the region in a previously coded (and reconstructed) reference frame that is to be used as a predictor for the current region. A pixel-by-pixel difference, called the error signal, between the current region and the region in the reference frame is derived. This error signal usually has lower entropy than the original signal. Therefore, the information can be encoded at a lower rate. As in WMV 8 and 9 encoders and decoders, since a motion vector value is often correlated with spatially surrounding motion vectors, compression of the data used to represent the motion vector information can be achieved by coding the differential between the current motion vector and a motion vector predictor that is based upon previously coded, neighboring motion vectors.

Some international standards describe motion estimation and compensation in interlaced video frames. For example, Section 7.6.1 of the MPEG-2 standard describes a dual-prime encoding mode. In dual-prime encoding only one motion vector is encoded (in its full format) in the bitstream together with a differential motion vector. In the case of field pictures, two motion vectors are derived from this information. The two derived motion vectors are used to form predictions from two reference fields (one top field and one bottom field) which are averaged to form the final prediction. In the case of frame pictures, this process is repeated for the two fields so that a total of four field predictions are made.

The May 28, 1998 committee draft of the MPEG-4 standard describes motion compensation for interlaced and progressive video. Section 7.5.5 describes motion compensation in progressive video object planes (VOPs). Candidate motion vectors are collected from neighboring macroblocks or blocks. Candidate motion vectors from outside the VOP are treated as not valid. If only one candidate motion vector is not valid, it is set to 0. If only two are not valid, they are set to equal the third motion vector. If all three are not valid, they are set to 0. Median filtering is performed on the three candidates to calculate a predictor.

Section 7.6.2 of the committee draft of the MPEG-4 standard describes motion compensation for interlaced video. For example, Section 7.6.2.1 describes field-predicted macroblocks with one motion vector for each field, and frame-predicted macroblocks with either one motion vector per block or one motion vector per macroblock. Candidate motion vectors are collected from neighboring macroblocks or blocks, with the predictor selected by median filtering.

Section 8.4 of draft JVT-d157 of the JVT/AVC standard also describes motion compensation. The components of a motion vector of a current block are predicted using median prediction. (Prediction does not take place across boundaries of macroblocks that do not belong to the same slice.) First, the motion vector values and reference pictures of three candidate neighboring blocks are determined. If the top right block is outside the current picture or slice or not available due to decoding order, the motion vector and reference picture of the top right block are considered equal to those of the top left block. If the top, top right, and top left blocks are all outside the current picture or slice, their motion vectors and reference pictures are considered equal to those of the left block. In other cases, the motion vector value for a candidate predictor block that is intra-coded or outside the current picture or slice is considered to be 0, and the reference picture is considered to be different than the current block.

Once the motion vector values and reference pictures of the candidate predictors have been determined, if only one of the left, top, and top right blocks has the same reference picture as the current block, the predicted motion vector for the current block is equal to the motion vector value of the block with the same reference picture. Otherwise, each component of the predicted motion vector value for the current block is calculated as the median of the corresponding candidate motion vector component values of the left, top and top right blocks.

Section 8.4 also describes macroblock-adaptive frame/field coding. In interlaced frames, macroblocks are grouped into macroblock pairs (top and bottom). Macroblock pairs can be field-coded or frame-coded. In a frame-coded macroblock pair, the macroblock pair is decoded as two frame-coded macroblocks. In a field-coded macroblock pair, the top macroblock consists of the top-field lines in the macroblock pair, and the bottom macroblock consists of the bottom-field lines in the macroblock pair. If the current block is in frame coding mode, the candidate motion vectors of the neighboring blocks are also frame-based. If the current block is in field-coding mode, the candidate motion vectors of the neighboring blocks are also field-based, in the same field parity.

### B. Signaling Field- or Frame-coded Macroblocks in the Standards

Some international standards describe signaling of field/frame coding type (e.g., field-coding or frame-coding) for macroblocks in interlaced pictures.

Draft JVT-d157 of the JVT/AVC standard describes the mb_field_decoding_flag syntax element, which is used to signal whether a macroblock pair is decoded in frame mode or field mode in interlaced P-frames. Section 7.3.4 describes a bitstream syntax where mb_field_decoding_flag is sent as an element of slice data in cases where a sequence parameter (mb_frame_field_adaptive_flag) indicates switching between frame and field decoding in macroblocks and a slice header element (pic_structure) identifies the picture structure as a progressive picture or an interlaced frame picture.

The May 28, 1998 committee draft of MPEG-4 describes the dct_type syntax element, which is used to signal whether a macroblock is frame DCT coded or field DCT coded. According to Sections 6.2.7.3 and 6.3.7.3, dct_type is a macroblock-layer element that is only present in the MPEG-4 bitstream in interlaced content where the macroblock has a non-zero coded block pattern or is intra-coded.

In MPEG-2, the dct_type element indicates whether a macroblock is frame DCT coded or field DCT coded. MPEG-2 also describes a picture coding extension element frame_pred_frame_dct. When frame_pred_frame_dct is set to '1', only frame DCT coding is used in interlaced frames. The condition dct_type = 0 is "derived" when frame_pred_frame_dct = 1 and the dct_type element is not present in the bitstream.

### C. Skipped Macroblocks in the Standards

Some international standards use skipped macroblocks. For example, draft JVT-d157 of the JVT/AVC standard defines a skipped macroblock as "a macroblock for which no data is coded other than an indication that the macroblock is to be decoded as 'skipped.'" Similarly, the committee draft of MPEG-4 states, "A skipped macroblock is one for which no information is transmitted."

### D. Chroma Motion Vectors in the Standards

One of the primary methods used to achieve data compression of digital video sequences in the international standards is to reduce the temporal redundancy between pictures. These popular compression schemes (MPEG-1, MPEG-2, MPEG-4, H.261, H.263, etc) use motion estimation and compensation. For example, a current frame is divided into uniform square regions (e.g., blocks and/or macroblocks) of luma and chroma information. A matching region for each current region is specified by sending motion vector information for the region. For example, a luma motion vector indicates the location of the region of luma samples in a previously coded (and reconstructed) frame that is to be used as a predictor for the current region. A pixel-by-pixel difference, called the error signal, between the current region and the region in the reference frame is derived. This error signal usually has lower entropy than the original signal. Therefore, the information can be encoded at a lower rate. As in previous WMV encoders and decoders, since a motion vector value is often correlated with spatially surrounding motion vectors, compression of the data used to represent the motion vector information can be achieved by coding the differential between the current motion vector and a motion vector predictor based upon previously coded, neighboring motion vectors. Typically, chroma motion vectors are derived from luma motion vectors to avoid overhead associated with separately calculating and encoding chroma motion vectors.

Some international standards describe deriving chroma motion vectors from luma motion vectors. Section 7.6.3.7 of the MPEG-2 standard describes deriving chroma motion vectors from luma motion vectors in a 4:2:0 macroblock format by dividing each of the horizontal and vertical luma motion vector components by two to scale the chroma motion vector components appropriately. In a 4:2:2 format, the chroma information is sub-sampled only in the horizontal direction, so the vertical component is not divided by two. In a 4:4:4 format, chroma information is sampled at the same resolution as luma information, so neither component is divided by two.

Annex F of the H.263 standard describes an advanced prediction mode that uses four motion vectors per macroblock for prediction. In the advanced prediction mode, each of the four motion vectors is used for all pixels in one of the four luminance blocks in the macroblock. The motion vector for both chrominance blocks (in a 4:2:0 format) is derived by calculating the sum of the four luminance motion vector components in each direction and dividing by eight. Similarly, section 7.5.5 of the May 28, 1998 committee draft of the MPEG-4 standard describes deriving a motion vector MVD_{CHR} for both chrominance blocks in a 4:2:0 format by calculating the sum of K motion vectors corresponding to *K* 8x8 block and dividing the sum by 2**K*. Prediction for chrominance is obtained by applying the motion vector MVD_{CHR} to all pixels in the two chrominance blocks.

Section 8.4.1.4 of draft JVT-d157 of the JVT/AVC standard also describes deriving chroma motion vectors from luma motion vectors in a 4:2:0 macroblock format by dividing each of the horizontal and vertical luma motion vector components by two. Section 7.4.5 of draft JVT-d157 describes macroblocks with different luma block sizes (e.g., 16x16, 16x8, 8x16 and 8x8) and associated chroma blocks. For example, for P-slices and SP-slices, "a motion vector is provided for each NxM luma block and the associated chroma blocks."

### E. Limitations of the Standards

These international standards are limited in several important ways. For example, draft JVT-d157 of the JVT/AVC standard and the committee draft of the MPEG-4 standard describe using median prediction to calculate motion vector predictors even when one or more candidate motion vectors are set to 0. Using median prediction when candidates are set to 0 often produces skewed motion vector predictors. The standards also do not describe predicting macroblocks with four coded field motion vectors, which places restrictive limitations on the spatial adaptivity of motion estimation and compensation. Furthermore, draft JVT-d157 performs interlaced coding and decoding through the use of macroblock pairs rather than through individual interlaced macroblocks, which limits the adaptivity of field-coding/frame-coding within a picture.

As another example, although the standards provide for signaling of macroblock types, field/frame coding type information is signaled separately from motion compensation types (e.g., field prediction or frame prediction, one motion vector or multiple motion vectors, etc.).

As another example, although some international standards allow for bitrate savings by skipping certain macroblocks, the skipped macroblock condition in these standards only indicates that no further information for the macroblock is encoded, and fails to provide other potentially valuable information about the macroblock.

As another example, several standards use chroma motion vectors that do not sufficiently represent local changes in chroma motion. Another problem is inefficient rounding mechanisms In chroma motion vector derivation, especially for field-coded content.

Given the critical importance of video compression and decompression to digital video, it is not surprising that video compression and decompression are richly developed fields. Whatever the benefits of previous video compression and decompression techniques, however, they do not have the advantages of the following techniques and tools.

US 6 026 195 A discloses a motion estimation and compensation technique for interlaced digital video. Predictor motion vectors for use in differentially encoding a current field coded macroblock are obtained using the median of motion vectors of surrounding blocks or macroblocks.

"TEXT OF COMMITTEE DRAFT OF JOINT VIDEO SPECIFICATION (ITU-T REC. H-264 ISO/IEC 14496-10 AVC) MPEG02/N4810", ISO/IEC JTC1/SC29/WG11 MPEG02/N4810, FAIRFAX, US, 1 May 2002 (2992-05-01), pages I-X, 1-133, concerns the text of the joint video specification ITU-T Rec. H.264.

CHAD FOGG ET AL: "Adaptive Field/Frame Block Coding Experiment Proposal", ITU-T VIDEO CODING EXPERTS GROUP VCEG, no. VCEG-N76; 24 September 2001 (2001-09-24), pages 1-7, discloses an adaptive field/frame block coding proposal in which a field coded macroblock breaks the usual 16x16 macroblocks into top and bottom halves, each half having its own motion vector and associated side information, while sharing other side information such as macroblock type or coded block pattern.

### SUMMARY

It is therefore the object of the present invention to provide an improved method for computing a motion vector predictor for a current field motion vector for a current field of a current macroblock in an interlaced frame coded picture, as well as a corresponding computer readable medium and a corresponding device implementing a video decoder.

This object is solved by the subject matter of the independent claims.

Preferred embodiments are defined by the dependent claims.

In summary, the detailed description is directed to various techniques and tools for encoding and decoding video frames. Described embodiments implement one or more of the described techniques and tools including, but not limited to, the following:
In one aspect, an encoder/decoder receives motion vector information comprising information for four field motion vectors for a macroblock in an interlaced frame-coded, forward-predicted picture (e.g., an interlaced P-frame). The encoder/decoder processes the macroblock using the four field motion vectors. Two of the four field motion vectors represent motion in a first field of the macroblock, and the other two of the four field motion vectors represent motion in a second field of the macroblock. The information for the four field motion vectors can Include motion vector differentials for the four field motion vectors.

In another aspect, an encoder/decoder determines a number of valid candidate motion vectors (e.g., frame or field motion vectors from neighboring macroblocks) for predicting a field motion vector in a current macroblock (e.g., a two field motion vector macroblock or a four field motion vector macroblock) in an interlaced frame coded picture (e.g., an interlaced P-frame). The encoder/decoder calculates a motion vector predictor for the field motion vector based at least in part on the valid candidate motion vectors.

The calculation comprises determining whether to perform a median operation (e.g., a component-wise median operation) on the valid candidate motion vectors based on whether the number of valid candidate motion vectors is three. If the number of valid candidate motion vectors is three, the calculation can further comprise performing a median operation on the valid candidate motion vectors. If the number is less than three, the calculation can comprise selecting a valid candidate motion vector as the motion vector predictor, without performing a median operation. The encoder/decoder can reconstruct the field motion vector based at least in part on the motion vector predictor and motion vector differential information (which may indicate that no differential is present).

The valid candidate motion vectors can be characterized by being for a block, macroblock field, macroblock field portion, or macroblock within the interlaced frame coded picture, or within the same slice as the current macroblock, and can be an actual motion vector value and not for an intra block, macroblock field, macroblock field portion, or macroblock.

In another aspect, an encoder/decoder determines candidate motion vectors for predicting a field motion vector for a current field of a current macroblock in an interlaced frame coded picture, determines a field polarity for one or more of the candidate motion vectors, and calculates a motion vector predictor for the field motion vector based at least in part on the field polarity. The candidate motion vectors can be measured in quarter-pixel increments. The field polarities can be determined by performing a bitwise AND operation on a y-component of a candidate motion vector.

Determining a field polarity for a candidate motion vector can comprise determining whether the candidate motion vector indicates a displacement in a top field or bottom field of a reference frame, or whether the candidate motion vector indicates a displacement in a field with same polarity or opposite polarity as the current field.

In another aspect, an encoder/decoder determines one or more valid candidate motion vectors for predicting a field motion vector, determines a field polarity for each individual valid candidate motion vector of the one or more valid candidate motion vectors, allocates each individual valid candidate motion vector to one of two sets depending on its field polarity, and calculates a motion vector predictor for the field motion vector based at least in part on the two sets. The two sets can be an opposite polarity set and a same polarity set. Calculating the motion vector predictor can comprise selecting a dominant polarity valid candidate motion vector (e.g., a candidate from the set having the greatest number of valid candidates). The candidate can be selected in a specified selection order. If only one valid candidate is allocated to each set, calculating the motion vector predictor can comprise selecting the same polarity candidate rather than the opposite polarity candidate. If three valid candidates are allocated to one of the two sets, calculating the motion vector predictor can comprise performing a median operation on the three valid candidates.

In another aspect, a decoder decodes one or more skipped macroblocks among plural macroblocks of an interlaced frame (e.g., an interlaced P-frame, interlaced B-frame, or a frame having interlaced P-fields and/or interlaced B-fields). Each of the one or more skipped macroblocks (1) is indicated by a skipped macroblock signal in a bitstream, (2) uses exactly one predicted motion vector (e.g., a frame motion vector) and has no motion vector differential information, and (3) lacks residual information. The skipped macroblock signal for each of the one or more skipped macroblocks indicates one-motion-vector motion-compensated decoding for the respective skipped macroblock. The skipped macroblock signal can be part of a compressed bitplane sent at frame layer in a bitstream having plural layers. Or, the skipped macroblock signal can be an individual bit sent at macroblock layer.

In another aspect, a coding mode from a group of plural available coding modes is selected, and a bitplane is processed in an encoder or decoder according to the selected coding mode. The bitplane includes binary information signifying whether macroblocks in an interlaced frame are skipped or not skipped. A macroblock in the interlaced frame is skipped if the macroblock has only one motion vector, the only one motion vector is equal to a predicted motion vector for the macroblock, and the macroblock has no residual error; A macroblock is not skipped if it has plural motion vectors.

In another aspect, an encoder selects a motion compensation type (e.g., 1MV, 4 Frame MV, 2 Field MV, or 4 Field MV) for a macroblock in an interlaced P-frame and selects a field/frame coding type (e.g., field-coded, frame-coded, or no coded blocks) for the macroblock. The encoder jointly encodes the motion compensation type and the field/frame coding type for the macroblock. The encoder also can jointly encode other information for the macroblock with the motion compensation type and the field/frame coding type (e.g., an indicator of the presence of a differential motion vector, such as for a one-motion-vector macroblock).

In another aspect, a decoder receives macroblock information for a macroblock in an interlaced P-frame, including a joint code representing motion compensation type and field/frame coding type for the macroblock. The decoder decodes the joint code (e.g., a variable length code in a variable length coding table) to obtain both motion compensation type information and field/frame coding type information for the macroblock.

In another aspect, a decoder receives luma motion vector information for more than two luma motion vectors for one macroblock, each of the more than two luma motion vectors associated with at least part of the macroblock (e.g., a 4:2:0 macroblock). The decoder derives a chroma motion vector associated with at least part of the macroblock for each of the more than two luma motion vectors by performing at least one calculation involving a rounding table (e.g., a field-based rounding table) on the luma motion vector information, maintaining a 1:1 ratio of chroma motion vectors to luma motion vectors for the macroblock. For example, the decoder receives four luma (frame or field) motion vectors for a macroblock and derives four chroma motion vectors for the macroblock. The deriving can comprise sub-sampling and/or rounding at least a portion of the luma motion vector information using a field-based rounding table.

In another aspect, a decoder derives a chroma motion vector associated with at least part of a macroblock in an interlaced frame coded pictures (e.g., interlaced P-frame, interlaced B-frame) for each of one or more luma motion vectors, based at least in part on motion vector information for the one or more luma motion vectors. The decoder is operable to decode macroblocks predicted using four luma field motion vectors. For example, the decoder derives four chroma field motion vectors, such as by applying a field-based rounding lookup table to at least a portion of the luma motion vector information.

In another aspect, a decoder derives a chroma motion vector associated with at least part of a macroblock for each of one or more luma field motion vectors by rounding a luma field motion vector component using a field-based rounding table (e.g., an integer array) and sub-sampling the luma field motion vector component.

The various techniques and tools can be used in combination or independently.

Additional features and advantages will be made apparent from the following detailed description of different embodiments that proceeds with reference to the accompanying drawings.

### BRIEF DESCRIPTION OF THE DRAWINGS

Figure 1 is a diagram showing motion estimation in a video encoder according to the prior art.
Figure 2 is a diagram showing block-based compression for an 8x8 block of prediction residuals in a video encoder according to the prior art.
Figure 3 is a diagram showing block-based decompression for an 8x8 block of prediction residuals in a video encoder according to the prior art.
Figure 4 is a diagram showing an interlaced frame according to the prior art.
Figures 5A and 5B are diagrams showing locations of macroblocks for candidate motion vector predictors for a 1MV macroblock in a progressive P-frame according to the prior art.
Figures 6A and 6B are diagrams showing locations of blocks for candidate motion vector predictors for a 1MV macroblock in a mixed 1MV/4MV progressive P-frame according to the prior art.
Figures 7A, 7B, 8A, 8B, 9, and 10 are diagrams showing the locations of blocks for candidate motion vector predictors for a block at various positions in a 4MV macroblock in a mixed 1MV/4MV progressive P-frame according to the prior art.
Figure 11 is a diagram showing candidate motion vector predictors for a current frame-coded macroblock in an interlaced P-frame according to the prior art.
Figures 12 and 13 are diagrams showing candidate motion vector predictors for a current field-coded macroblock in an interlaced P-frame according to the prior art.
Figure 14 is a code diagram showing pseudo-code for performing a median-of-3 calculation according to the prior art.
Figure 15 is a diagram showing a B-frame with past and future reference frames according to the prior art.
Figure 16 is a diagram showing a 4:2:0 YUV sampling grid according to the prior art.
Figure 17 is a code diagram showing pseudocode for deriving a chroma motion vector from motion information in four luma blocks of a 4MV macroblock according to the prior art.
Figure 18 is a block diagram of a suitable computing environment in conjunction with which several described embodiments may be implemented.
Figure 19 is a block diagram of a generalized video encoder system in conjunction with which several described embodiments may be implemented.
Figure 20 is a block diagram of a generalized video decoder system in conjunction with which several described embodiments may be implemented.
Figure 21 is a diagram of a macroblock format used in several described embodiments.
Figure 22A is a diagram of part of an interlaced video frame, showing alternating lines of a top field and a bottom field. Figure 22B is a diagram of the interlaced video frame organized for encoding/decoding as a frame, and Figure 22C is a diagram of the interlaced video frame organized for encoding/decoding as fields.
Figure 23 is a diagram showing motion vectors for luminance blocks and derived motion vectors for chrominance blocks in a 2 field MV macroblock of an interlaced P-frame.
Figure 24 is a diagram showing different motion vectors for each of four luminance blocks, and derived motion vectors for each of four chrominance sub-blocks, in a 4 frame MV macroblock of an interlaced P-frame.
Figure 25 is a diagram showing motion vectors for luminance blocks and derived motion vectors for chrominance blocks in a 4 field MV macroblock of an interlaced P-frame.
Figures 26A-26B are diagrams showing candidate predictors for a current macroblock of an interlaced P-frame.
Figure 27 is a flow chart showing a technique for processing a macroblock having four field motion vectors in an interlaced P-frame.
Figure 28 is a flow chart showing a technique for calculating motion vector predictors for a field-coded macroblock based on the polarity of candidate motion vectors.
Figure 29 is a flow chart showing a technique for determining whether to perform a median operation when calculating a motion vector predictor for a field motion vector.
Figure 30 is a flow chart showing a technique for determining whether to skip coding of particular macroblocks in an interlaced predicted frame.
Figure 31 is a flow chart showing a technique for decoding jointly coded motion compensation type information and field/frame coding type information for a macroblock in an interlaced P-frame.
Figure 32 is a flow chart showing a technique for deriving one chroma motion vector for each of the plural luma motion vectors.
Figure 33 is a flow chart showing a technique for using a field-based rounding lookup table to derive chroma field motion vectors.
Figure 34 is a code diagram showing pseudocode for deriving chroma motion vector components from luma motion vector components using a field-based rounding lookup table.
Figure 35 is a diagram showing field designations for values in a field-based rounding lookup table.
Figure 36 is a diagram showing an entry-point-layer bitstream syntax in a combined implementation.
Figure 37 is a diagram showing a frame-layer bitstream syntax for interlaced P-frames in a combined implementation.
Figure 38 is a diagram showing a frame-layer bitstream syntax for interlaced B-frames in a combined implementation.
Figure 39 is a diagram showing a frame-layer bitstream syntax for interlaced P-fields or B-fields in a combined implementation.
Figure 40 is a diagram showing a macroblock-layer bitstream syntax for macroblocks of interlaced P-frames in a combined implementation.
Figure 41 is a code listing showing pseudo-code for collecting candidate motion vectors for 1MV macroblocks in an interlaced P-frame in a combined implementation.
Figures 42, 43, 44, and 45 are code listings showing pseudo-code for collecting candidate motion vectors for 4 Frame MV macroblocks in an interlaced P-frame in a combined implementation.
Figures 46 and 47 are code listings showing pseudo-code for collecting candidate motion vectors for 2 Field MV macroblocks in an interlaced P-frame in a combined implementation.
Figures 48, 49, 50, and 51 are code listings showing pseudo-code for collecting candidate motion vectors for 4 Field MV macroblocks in an interlaced P-frame in a combined implementation.
Figure 52 is a code listing showing pseudo-code for computing motion vector predictors for frame motion vectors in an interlaced P-frame in a combined implementation.
Figure 53 is a code listing showing pseudo-code for computing motion vector predictors for field motion vectors in an interlaced P-frame in a combined implementation.
Figure 54A and 54B are code listings showing pseudo-code for decoding a motion vector differential for interlaced P-frames in a combined implementation.
Figures 55A - 55C are diagrams showing tiles for Norm-6 and Diff-6 bitplane coding modes in a combined implementation.

### DETAILED DESCRIPTION

The present application relates to techniques and tools for efficient compression and decompression of interlaced and progressive video. In various described embodiments, a video encoder and decoder incorporate techniques for encoding and decoding interlaced and progressive video, and corresponding signaling techniques for use with a bit stream format or syntax comprising different layers or levels (e.g., sequence level, frame level, field level, macroblock level, and/or block level).

Various alternatives to the implementations described herein are possible. For example, techniques described with reference to flowchart diagrams can be altered by changing the ordering of stages shown in the flowcharts, by repeating or omitting certain stages, etc. As another example, although some implementations are described with reference to specific macroblock formats, other formats also can be used. Further, techniques and tools described with reference to forward prediction may also be applicable to other types of prediction.

The various techniques and tools can be used in combination or independently. Different embodiments implement one or more of the described techniques and tools. Some techniques and tools described herein can be used in a video encoder or decoder, or in some other system not specifically limited to video encoding or decoding.

### I. Computing Environment

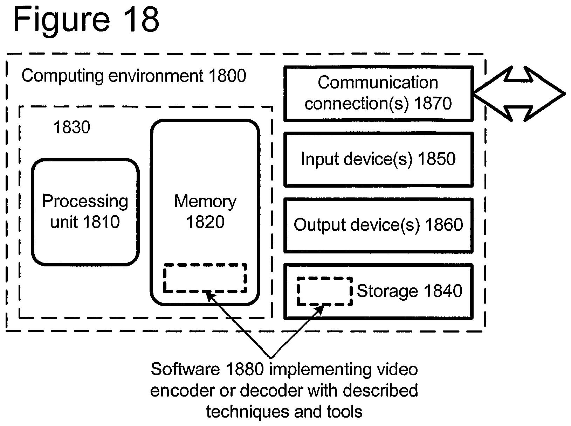

Figure 18 illustrates a generalized example of a suitable computing environment 1800 in which several of the described embodiments may be implemented. The computing environment 1800 is not intended to suggest any limitation as to scope of use or functionality, as the techniques and tools may be implemented in diverse general-purpose or special-purpose computing environments.

With reference to Figure 18, the computing environment 1800 includes at least one processing unit 1810 and memory 1820. In Figure 18, this most basic configuration 1830 is included within a dashed line. The processing unit 1810 executes computer-executable instructions and may be a real or a virtual processor. In a multi-processing system, multiple processing units execute computer-executable instructions to increase processing power. The memory 1820 may be volatile memory (e.g., registers, cache, RAM), non-volatile memory (e.g., ROM, EEPROM, flash memory, etc.), or some combination of the two. The memory 1820 stores software 1880 implementing a video encoder or decoder with one or more of the described techniques and tools.

A computing environment may have additional features. For example, the computing environment 1800 includes storage 1840, one or more input devices 1850, one or more output devices 1860, and one or more communication connections 1870. An interconnection mechanism (not shown) such as a bus, controller, or network interconnects the components of the computing environment 1800. Typically, operating system software (not shown) provides an operating environment for other software executing in the computing environment 1800, and coordinates activities of the components of the computing environment 1800.

The storage 1840 may be removable or non-removable, and includes magnetic disks, magnetic tapes or cassettes, CD-ROMs, DVDs, or any other medium which can be used to store information and which can be accessed within the computing environment 1800. The storage 1840 stores instructions for the software 1880 implementing the video encoder or decoder.

The input device(s) 1850 may be a touch input device such as a keyboard, mouse, pen, or trackball, a voice input device, a scanning device, or another device that provides input to the computing environment 1800. For audio or video encoding, the input device(s) 1850 may be a sound card, video card, TV tuner card, or similar device that accepts audio or video input in analog or digital form, or a CD-ROM or CD-RW that reads audio or video samples into the computing environment 1800. The output device(s) 1860 may be a display, printer, speaker, CD-writer, or another device that provides output from the computing environment 1800.

The communication connection(s) 1870 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The techniques and tools can be described in the general context of computer-readable media. Computer-readable media are any available media that can be accessed within a computing environment. By way of example, and not limitation, with the computing environment 1800, computer-readable media include memory 1820, storage 1840, communication media, and combinations of any of the above.

The techniques and tools can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

For the sake of presentation, the detailed description uses terms like "estimate," "compensate," "predict," and "apply" to describe computer operations in a computing environment. These terms are high-level abstractions for operations performed by a computer, and should not be confused with acts performed by a human being. The actual computer operations corresponding to these terms vary depending on implementation.

### II. Generalized Video Encoder and Decoder

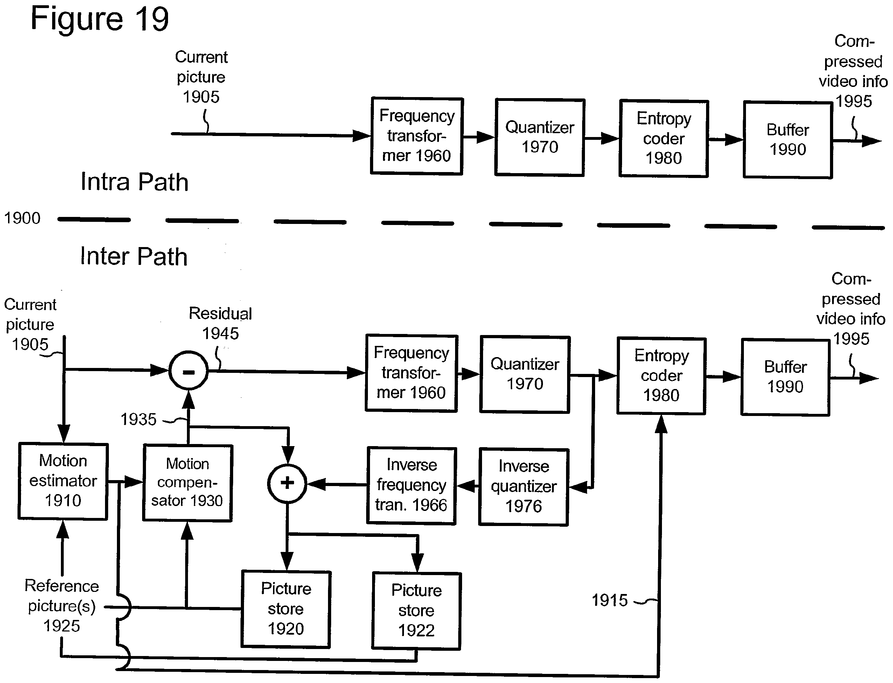

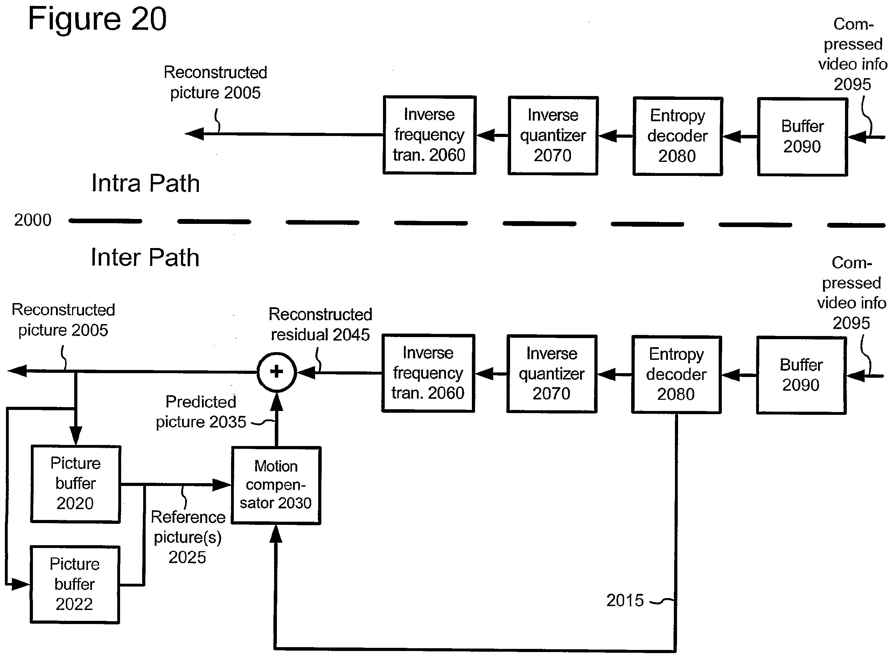

Figure 19 is a block diagram of a generalized video encoder 1900 in conjunction with which some described embodiments may be implemented. Figure 20 is a block diagram of a generalized video decoder 2000 in conjunction with which some described embodiments may be implemented.

The relationships shown between modules within the encoder 1900 and decoder 2000 indicate general flows of information in the encoder and decoder; other relationships are not shown for the sake of simplicity. In particular, Figures 19 and 20 usually do not show side information indicating the encoder settings, modes, tables, etc. used for a video sequence, picture, macroblock, block, etc. Such side information is sent in the output bitstream, typically after entropy encoding of the side information. The format of the output bitstream can be a Windows Media Video version 9 format or other format.

The encoder 1900 and decoder 2000 process video pictures, which may be video frames, video fields or combinations of frames and fields. The bitstream syntax and semantics at the picture and macroblock levels may depend on whether frames or fields are used. There may be changes to macroblock organization and overall timing as well. The encoder 1900 and decoder 2000 are block-based and use a 4:2:0 macroblock format for frames, with each macroblock including four 8x8 luminance blocks (at times treated as one 16x16 macroblock) and two 8x8 chrominance blocks. For fields, the same or a different macroblock organization and format may be used. The 8x8 blocks may be further sub-divided at different stages, e.g., at the frequency transform and entropy encoding stages. Example video frame organizations are described in more detail below. Alternatively, the encoder 1900 and decoder 2000 are object-based, use a different macroblock or block format, or perform operations on sets of pixels of different size or configuration than 8x8 blocks and 16x16 macroblocks.

Depending on implementation and the type of compression desired, modules of the encoder or decoder can be added, omitted, split into multiple modules, combined with other modules, and/or replaced with like modules. In alternative embodiments, encoders or decoders with different modules and/or other configurations of modules perform one or more of the described techniques.

### A. Video Frame Organizations

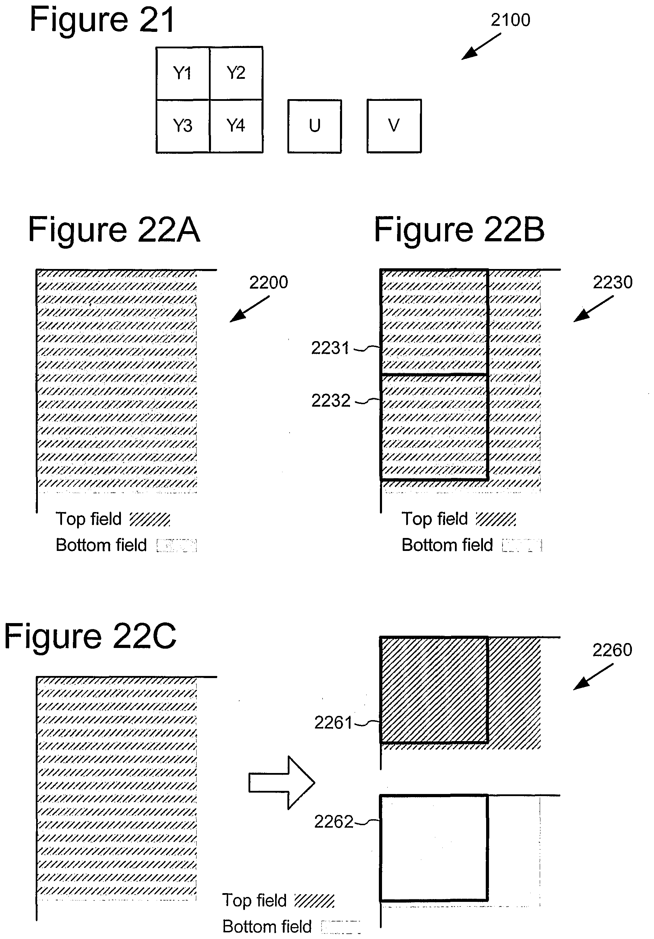

In some implementations, the encoder 1900 and decoder 2000 process video frames organized as follows. A frame contains lines of spatial information of a video signal. For progressive video, these lines contain samples starting from one time instant and continuing through successive lines to the bottom of the frame. A progressive video frame is divided into macroblocks such as the macroblock 2100 shown in Figure 21. The macroblock 2100 includes four 8x8 luminance blocks (Y1 through Y4) and two 8x8 chrominance blocks that are co-located with the four luminance blocks but half resolution horizontally and vertically, following the conventional 4:2:0 macroblock format. The 8x8 blocks may be further sub-divided at different stages, e.g., at the frequency transform (e.g., 8x4, 4x8 or 4x4 DCTs) and entropy encoding stages. A progressive I-frame is an intra-coded progressive video frame. A progressive P-frame is a progressive video frame coded using forward prediction, and a progressive B-frame is a progressive video frame coded using bi-directional prediction. Progressive P- and B-frames may include intra-coded macroblocks as well as different types of predicted macroblocks.

An interlaced video frame consists of two scans of a frame - one comprising the even lines of the frame (the top field) and the other comprising the odd lines of the frame (the bottom field). The two fields may represent two different time periods or they may be from the same time period. Figure 22A shows part of an interlaced video frame 2200, including the alternating lines of the top field and bottom field at the top left part of the interlaced video frame 2200.

Figure 22B shows the interlaced video frame 2200 of Figure 22A organized for encoding/decoding as a frame 2230. The interlaced video frame 2200 has been partitioned into macroblocks such as the macroblocks 2231 and 2232, which use a 4:2:0 format as shown in Figure 21. In the luminance plane, each macroblock 2231, 2232 includes 8 lines from the top field alternating with 8 lines from the bottom field for 16 lines total, and each line is 16 pixels long. (The actual organization and placement of luminance blocks and chrominance blocks within the macroblocks 2231, 2232 are not shown, and in fact may vary for different encoding decisions.) Within a given macroblock, the top-field information and bottom-field information may be coded jointly or separately at any of various phases. An interlaced I-frame is two intra-coded fields of an interlaced video frame, where a macroblock includes information for the two fields. An interlaced P-frame is two fields of an interlaced video frame coded using forward prediction, and an interlaced B-frame is two fields of an interlaced video frame coded using bi-directional prediction, where a macroblock includes information for the two fields. Interlaced P-and B-frames may include intra-coded macroblocks as well as different types of predicted macroblocks. Interlaced BI-frames are a hybrid of interlaced I-frames and interlaced B-frames; they are intra-coded, but are not used as anchors for other frames.

Figure 22C shows the interlaced video frame 2200 of Figure 22A organized for encoding/decoding as fields 2260. Each of the two fields of the interlaced video frame 2200 is partitioned into macroblocks. The top field is partitioned into macroblocks such as the macroblock 2261, and the bottom field is partitioned into macroblocks such as the macroblock 2262. (Again, the macroblocks use a 4:2:0 format as shown in Figure 21, and the organization and placement of luminance blocks and chrominance blocks within the macroblocks are not shown.) In the luminance plane, the macroblock 2261 includes 16 lines from the top field and the macroblock 2262 includes 16 lines from the bottom field, and each line is 16 pixels long. An interlaced I-field is a single, separately represented field of an interlaced video frame. An interlaced P-field is a single, separately represented field of an interlaced video frame coded using forward prediction, and an interlaced B-field is a single, separately represented field of an interlaced video frame coded using bi-directional prediction. Interlaced P- and B-fields may include intra-coded macroblocks as well as different types of predicted macroblocks. Interlaced BI-fields are a hybrid of interlaced I-fields and interlaced B-fields; they are intra-coded, but are not used as anchors for other fields.

Interlaced video frames organized for encoding/decoding as fields can include various combinations of different field types. For example, such a frame can have the same field type in both the top and bottom fields or different field types in each field. In one implementation, the possible combinations of field types include I/I, I/P, P/I, P/P, B/B, B/BI, BI/B, and BI/BI.

The term picture generally refers to source, coded or reconstructed image data. For progressive video, a picture is a progressive video frame. For interlaced video, a picture may refer to an interlaced video frame, the top field of the frame, or the bottom field of the frame, depending on the context.

Alternatively, the encoder 1900 and decoder 2000 are object-based, use a different macroblock or block format, or perform operations on sets of pixels of different size or configuration than 8x8 blocks and 16x16 macroblocks.

### B. Video Encoder

Figure 19 is a block diagram of a generalized video encoder system 1900. The encoder system 1900 receives a sequence of video pictures including a current picture 1905 (e.g., progressive video frame, interlaced video frame, or field of an interlaced video frame), and produces compressed video information 1995 as output. Particular embodiments of video encoders typically use a variation or supplemented version of the generalized encoder 1900.

The encoder system 1900 compresses predicted pictures and key pictures. For the sake of presentation, Figure 19 shows a path for key pictures through the encoder system 1900 and a path for predicted pictures. Many of the components of the encoder system 1900 are used for compressing both key pictures and predicted pictures. The exact operations performed by those components can vary depending on the type of information being compressed.

A predicted picture (e.g., progressive P-frame or B-frame, interlaced P-field or B-field, or interlaced P-frame or B-frame) is represented in terms of prediction (or difference) from one or more other pictures (which are typically referred to as reference pictures or anchors). A prediction residual is the difference between what was predicted and the original picture. In contrast, a key picture (e.g., progressive I-frame, interlaced I-field, or interlaced I-frame) is compressed without reference to other pictures.

If the current picture 1905 is a forward-predicted picture, a motion estimator 1910 estimates motion of macroblocks or other sets of pixels of the current picture 1905 with respect to one or more reference pictures, for example, the reconstructed previous picture 1925 buffered in the picture store 1920. If the current picture 1905 is a bi-directionally-predicted picture, a motion estimator 1910 estimates motion in the current picture 1905 with respect to up to four reconstructed reference pictures (for an interlaced B-field, for example). Typically, a motion estimator estimates motion in a B-picture with respect to one or more temporally previous reference pictures and one or more temporally future reference pictures. Accordingly, the encoder system 1900 can use the separate stores 1920 and 1922 for multiple reference pictures. For more information on progressive B-frames and interlaced B-frames and B-fields, see U.S. Patent Application Serial No. 10/622,378, entitled, "Advanced Bi-Directional Predictive Coding of Video Frames," filed July 18, 2003, and U.S. Patent Application Serial No. 10/882,135, entitled, "Advanced Bi-Directional Predictive Coding of Interlaced Video," filed June 29, 2004.

The motion estimator 1910 can estimate motion by pixel, ½ pixel, ¼ pixel, or other increments, and can switch the resolution of the motion estimation on a picture-by-picture basis or other basis. The motion estimator 1910 (and compensator 1930) also can switch between types of reference picture pixel interpolation (e.g., between bicubic and bilinear) on a per-frame or other basis. The resolution of the motion estimation can be the same or different horizontally and vertically. The motion estimator 1910 outputs as side information motion information 1915 such as differential motion vector information. The encoder 1900 encodes the motion information 1915 by, for example, computing one or more predictors for motion vectors, computing differentials between the motion vectors and predictors, and entropy coding the differentials. To reconstruct a motion vector, a motion compensator 1930 combines a predictor with differential motion vector information. Various techniques for computing motion vector predictors, computing differential motion vectors, and reconstructing motion vectors are described below.

The motion compensator 1930 applies the reconstructed motion vector to the reconstructed picture(s) 1925 to form a motion-compensated current picture 1935. The prediction is rarely perfect, however, and the difference between the motion-compensated current picture 1935 and the original current picture 1905 is the prediction residual 1945. During later reconstruction of the picture, the prediction residual 1945 is added to the motion compensated current picture 1935 to obtain a reconstructed picture that is closer to the original current picture 1905. In lossy compression, however, some information is still lost from the original current picture 1905. Alternatively, a motion estimator and motion compensator apply another type of motion estimation/compensation.

A frequency transformer 1960 converts the spatial domain video information into frequency domain (i.e., spectral) data. For block-based video pictures, the frequency transformer 1960 applies a DCT, variant of DCT, or other block transform to blocks of the pixel data or prediction residual data, producing blocks of frequency transform coefficients. Alternatively, the frequency transformer 1960 applies another conventional frequency transform such as a Fourier transform or uses wavelet or sub-band analysis. The frequency transformer 1960 may apply an 8x8, 8x4, 4x8, 4x4 or other size frequency transform.

A quantizer 1970 then quantizes the blocks of spectral data coefficients. The quantizer applies uniform, scalar quantization to the spectral data with a step-size that varies on a picture-by-picture basis or other basis. Alternatively, the quantizer applies another type of quantization to the spectral data coefficients, for example, a non-uniform, vector, or non-adaptive quantization, or directly quantizes spatial domain data in an encoder system that does not use frequency transformations. In addition to adaptive quantization, the encoder 1900 can use frame dropping, adaptive filtering, or other techniques for rate control.

The encoder 1900 may use special signaling for a skipped macroblock, which is a macroblock that has no information of certain types. Skipped macroblocks are described in further detail below.

When a reconstructed current picture is needed for subsequent motion estimation/compensation, an inverse quantizer 1976 performs inverse quantization on the quantized spectral data coefficients. An inverse frequency transformer 1966 then performs the inverse of the operations of the frequency transformer 1960, producing a reconstructed prediction residual (for a predicted picture) or a reconstructed key picture. If the current picture 1905 was a key picture, the reconstructed key picture is taken as the reconstructed current picture (not shown). If the current picture 1905 was a predicted picture, the reconstructed prediction residual is added to the motion-compensated current picture 1935 to form the reconstructed current picture. One or both of the picture stores 1920, 1922 buffers the reconstructed current picture for use in motion compensated prediction. In some examples, the encoder applies a de-blocking filter to the reconstructed frame to adaptively smooth discontinuities and other artifacts in the picture.

The entropy coder 1980 compresses the output of the quantizer 1970 as well as certain side information (e.g., motion information 1915, quantization step size). Typical entropy coding techniques include arithmetic coding, differential coding, Huffman coding, run length coding, LZ coding, dictionary coding, and combinations of the above. The entropy coder 1980 typically uses different coding techniques for different kinds of information (e.g., DC coefficients, AC coefficients, different kinds of side information), and can choose from among multiple code tables within a particular coding technique.

The entropy coder 1980 provides compressed video information 1995 to the multiplexer ["MUX"] 1990. The MUX 1990 may include a buffer, and a buffer level indicator may be fed back to bit rate adaptive modules for rate control. Before or after the MUX 1990, the compressed video information 1995 can be channel coded for transmission over the network. The channel coding can apply error detection and correction data to the compressed video information 1995.

### C. Video Decoder

Figure 20 is a block diagram of a general video decoder system 2000. The decoder system 2000 receives information 2095 for a compressed sequence of video pictures and produces output including a reconstructed picture 2005 (e.g., progressive video frame, interlaced video frame, or field of an interlaced video frame). Particular embodiments of video decoders typically use a variation or supplemented version of the generalized decoder 2000.

The decoder system 2000 decompresses predicted pictures and key pictures. For the sake of presentation, Figure 20 shows a path for key pictures through the decoder system 2000 and a path for forward-predicted pictures. Many of the components of the decoder system 2000 are used for decompressing both key pictures and predicted pictures. The exact operations performed by those components can vary depending on the type of information being decompressed.

A DEMUX 2090 receives the information 2095 for the compressed video sequence and makes the received information available to the entropy decoder 2080. The DEMUX 2090 may include a jitter buffer and other buffers as well. Before or after the DEMUX 2090, the compressed video information can be channel decoded and processed for error detection and correction.

The entropy decoder 2080 entropy decodes entropy-coded quantized data as well as entropy-coded side information (e.g., motion information 2015, quantization step size), typically applying the inverse of the entropy encoding performed in the encoder. Entropy decoding techniques include arithmetic decoding, differential decoding, Huffman decoding, run length decoding, LZ decoding, dictionary decoding, and combinations of the above. The entropy decoder 2080 typically uses different decoding techniques for different kinds of information (e.g., DC coefficients, AC coefficients, different kinds of side information), and can choose from among multiple code tables within a particular decoding technique.

The decoder 2000 decodes the motion information 2015 by, for example, computing one or more predictors for motion vectors, entropy decoding differential motion vectors, and combining decoded differential motion vectors with predictors to reconstruct motion vectors.

A motion compensator 2030 applies motion information 2015 to one or more reference pictures 2025 to form a prediction 2035 of the picture 2005 being reconstructed. For example, the motion compensator 2030 uses one or more macroblock motion vector to find macroblock(s) in the reference picture(s) 2025. One or more picture stores (e.g., picture store 2020, 2022) store previous reconstructed pictures for use as reference pictures. Typically, B-pictures have more than one reference picture (e.g., at least one temporally previous reference picture and at least one temporally future reference picture). Accordingly, the decoder system 2000 can use separate picture stores 2020 and 2022 for multiple reference pictures. The motion compensator 2030 can compensate for motion at pixel, ½ pixel, ¼ pixel, or other increments, and can switch the resolution of the motion compensation on a picture-by-picture basis or other basis. The motion compensator 2030 also can switch between types of reference picture pixel interpolation (e.g., between bicubic and bilinear) on a per-frame or other basis. The resolution of the motion compensation can be the same or different horizontally and vertically. Alternatively, a motion compensator applies another type of motion compensation. The prediction by the motion compensator is rarely perfect, so the decoder 2000 also reconstructs prediction residuals.

An inverse quantizer 2070 inverse quantizes entropy-decoded data. In general, the inverse quantizer applies uniform, scalar inverse quantization to the entropy-decoded data with a step-size that varies on a picture-by-picture basis or other basis. Alternatively, the inverse quantizer applies another type of inverse quantization to the data, for example, to reconstruct after a non-uniform, vector, or non-adaptive quantization, or directly inverse quantizes spatial domain data in a decoder system that does not use inverse frequency transformations.

An inverse frequency transformer 2060 converts the quantized, frequency domain data into spatial domain video information. For block-based video pictures, the inverse frequency transformer 2060 applies an inverse DCT ["IDCT"], variant of IDCT, or other inverse block transform to blocks of the frequency transform coefficients, producing pixel data or prediction residual data for key pictures or predicted pictures, respectively. Alternatively, the inverse frequency transformer 2060 applies another conventional inverse frequency transform such as an inverse Fourier transform or uses wavelet or sub-band synthesis. The inverse frequency transformer 2060 may apply an 8x8, 8x4, 4x8, 4x4, or other size inverse frequency transform.

For a predicted picture, the decoder 2000 combines the reconstructed prediction residual 2045 with the motion compensated prediction 2035 to form the reconstructed picture 2005. When the decoder needs a reconstructed picture 2005 for subsequent motion compensation, one or both of the picture stores (e.g., picture store 2020) buffers the reconstructed picture 2005 for use in predicting the next picture. In some examples, the decoder 2000 applies a de-blocking filter to the reconstructed picture to adaptively smooth discontinuities and other artifacts in the picture.

### III. Interlaced P-frames

A typical interlaced video frame consists of two fields (e.g., a top field and a bottom field) scanned at different times. In general, it is more efficient to encode stationary regions of an interlaced video frame by coding fields together ("frame mode" coding). On the other hand, it is often more efficient to code moving regions of an interlaced video frame by coding fields separately ("field mode" coding), because the two fields tend to have different motion. A forward-predicted interlaced video frame may be coded as two separate forward-predicted fields -- interlaced P-fields. Coding fields separately for a forward-predicted interlaced video frame may be efficient, for example, when there is high motion throughout the interlaced video frame, and hence much difference between the fields. An interlaced P-field references one or more previously decoded fields. For example, in some implementations, an interlaced P-field references either one or two previously decoded fields. For more information on interlaced P-fields, see U.S. Provisional Patent Application No. 60/501,081, entitled "Video Encoding and Decoding Tools and Techniques," filed September 7, 2003, and U.S. Patent Application Serial No. 10/857,473, entitled, "Predicting Motion Vectors for Fields of Forward-predicted Interlaced Video Frames," filed May 27, 2004.

Or, a forward-predicted interlaced video frame may be coded using a mixture of field coding and frame coding, as an interlaced P-frame. For a macroblock of an interlaced P-frame, the macroblock includes lines of pixels for the top and bottom fields, and the lines may be coded collectively in a frame-coding mode or separately in a field-coding mode.

### A. Macroblock Types in Interlaced P-frames

In some implementations, macroblocks in interlaced P-frames can be one of five types: 1MV, 2 Field MV, 4 Frame MV, 4 Field MV, and Intra.

In a 1MV macroblock, the displacement of the four luminance blocks in the macroblock is represented by a single motion vector. A corresponding chroma motion vector can be derived from the luma motion vector to represent the displacements of each of the two 8x8 chroma blocks for the motion vector. For example, referring again to the macroblock arrangement shown in Figure 21, a 1MV macroblock 2100 includes four 8x8 luminance blocks and two 8x8 chrominance blocks. The displacement of the luminance blocks (Y1 through Y4) are represented by single motion vector, and a corresponding chroma motion vector can be derived from the luma motion vector to represent the displacements of each of the two chroma blocks (U and V).

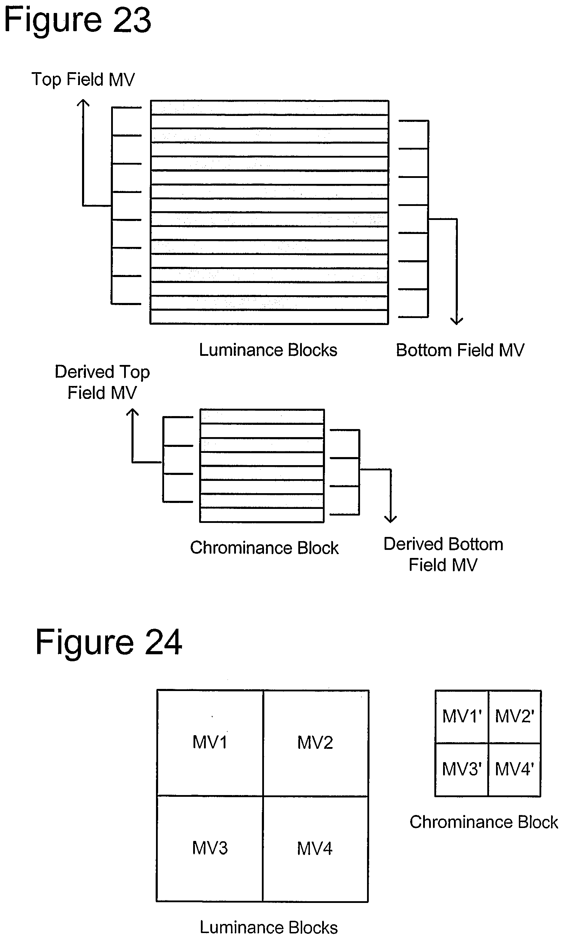

In a 2 Field MV macroblock, the displacement of each field for the 16x16 luminance component in the macroblock is described by a different motion vector. For example, Figure 23 shows that a top field motion vector describes the displacement of the even lines of the luminance component and that a bottom field motion vector describes the displacement of the odd lines of the luminance component. Using the top field motion vector, an encoder can derive a corresponding top field chroma motion vector that describes the displacement of the even lines of the chroma blocks. Similarly, an encoder can derive a bottom field chroma motion vector that describes the displacements of the odd lines of the chroma blocks.

Referring to Figure 24, in a 4 Frame MV macroblock, the displacement of each of the four luminance blocks is described by a different motion vector (MV1, MV2, MV3 and MV4). Each chroma block can be motion compensated by using four derived chroma motion vectors (MV1', MV2', MV3' and MV4') that describe the displacement of four 4x4 chroma sub-blocks. A motion vector for each 4x4 chroma sub-block can be derived from the motion vector for the spatially corresponding luminance block.

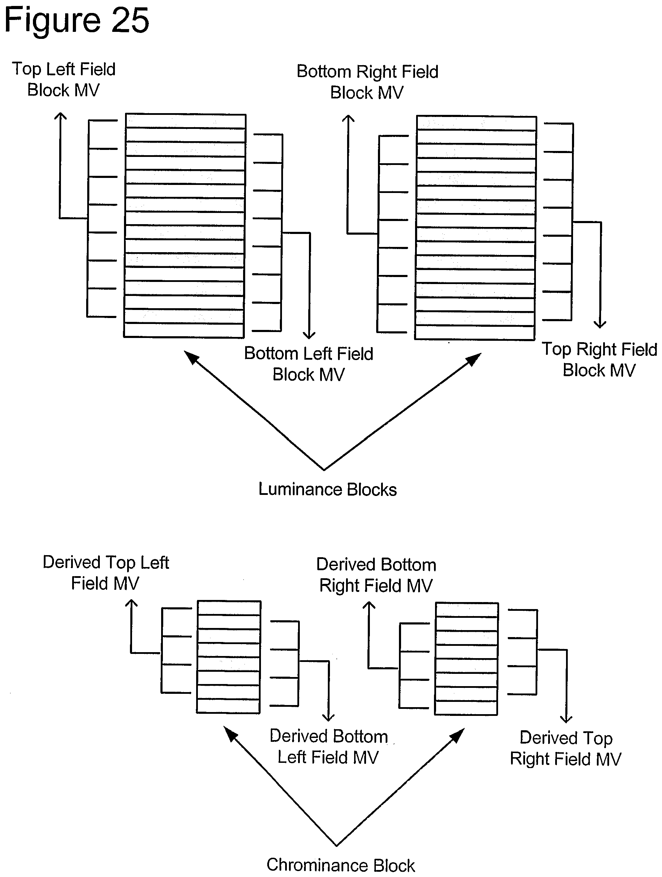

Referring to Figure 25, in a 4 Field MV macroblock, the displacement of each field in the 16x16 luminance component is described by two different motion vectors. The lines of the luminance component are subdivided vertically to form two 8x16 regions each comprised of an 8x8 region of even lines interleaved with an 8x8 region of odd lines. For the even lines, the displacement of the left 8x8 region is described by the top left field block motion vector and the displacement of the right 8x8 region is described by the top right field block motion vector. For the odd lines, the displacement of the left 8x8 region is described by the bottom left field block motion vector and the displacement of the right 8x8 region is described by the bottom right field block motion vector. Each chroma block also can be partitioned into four regions and each chroma block region can be motion compensated using a derived motion vector.

For Intra macroblocks, motion is assumed to be zero.

### B. Computing Motion Vector Predictors in Interlaced P-frames

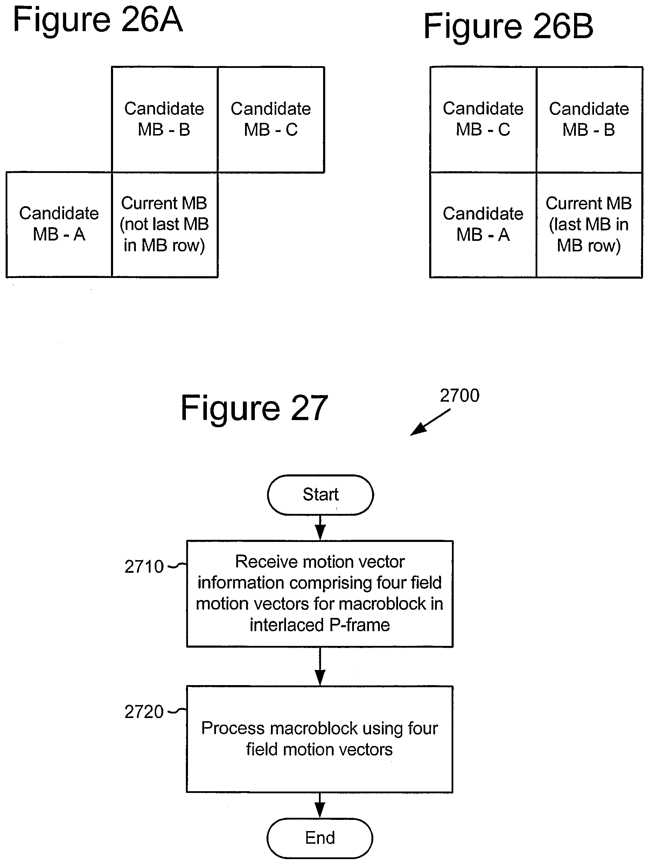

In general, the process of computing the motion vector predictor(s) for a current macroblock in an interlaced P-frame consists of two steps. First, up to three candidate motion vectors for the current macroblock are gathered from its neighboring macroblocks. For example, in one implementation, candidate motion vectors are gathered based on the arrangement shown in Figures 26A-26B (and various special cases for top row macroblocks, etc.). Alternatively, candidate motion vectors can be gathered in some other order or arrangement. Second, the motion vector predictor(s) for the current macroblock is computed from the set of candidate motion vectors. For example, the predictor can be computed using median-of-3 prediction, or by some other method.

### IV. Innovations in Motion Vector Prediction in Interlaced P-frames

The process of motion vector prediction can be conceptually separated into two steps. First, a set of candidate motion vectors is collected from the neighboring blocks and, if appropriate, converted to an appropriate type depending on the type of prediction used for the current motion vector. Then, a motion vector predictor is derived from the set of candidate motion vectors. As described in detail below, a current motion vector predictor can be derived from candidate motion vectors in different ways, such as by performing a median operation on a full set of valid candidate motion vectors, by just choosing one of the candidate motion vectors if a full set of valid candidate motion vector is not available, or by some other method.

As explained above in Section III, each macroblock in an interlaced P-frame can be motion compensated using 1 frame motion vector, 4 frame motion vectors, 2 field motion vectors, or 4 field motion vectors. Each field motion vector can refer to either the top field or bottom field of the reference frame, independent of which field is referred to by the other. In some implementations, motion vector prediction takes into account several factors, such as a neighboring macroblock or block's motion vector and motion prediction type, current motion vector type, etc., to derive a motion vector predictor for the current motion vector of the current macroblock (or block or field thereof).

Described embodiments implement one or more of the described techniques and tools for predicting, coding and decoding motion vectors in interlaced frame coded pictures, including, but not limited to, the following:
1. Predicting macroblocks in interlaced P-frames using four field motion vectors (e.g., in combination with other macroblock types such as 1MV, 4 Frame MV, 2 Field MV, and/or intra.)
2. Improving motion vector prediction by limiting use of median operations to cases where all three candidate neighbor motion vectors are available, and taking one of the neighboring motion vectors in a pre-specified order in other cases.
3. For field motion vectors, considering field polarities in the collection of legal candidate motion vectors.

The described techniques and tools can be used in combination with one another or with other techniques and tools, or can be used independently.

### A. 4 Field MV Macroblocks in Interlaced P-frames

In some implementations, an encoder/decoder processes macroblocks having four field motion vectors (e.g., 4 Field MV macroblocks) in interlaced P-frames. 4 Field MV macroblocks provide improved spatial adaptivity to motion for motion estimation and compensation for field-coded macroblocks in interlaced P-frames.

For example, Figure 27 shows a technique 2700 for processing a macroblock having four field motion vectors in an interlaced P-frame. At 2710, an encoder/decoder receives motion vector information (e.g., motion vector differentials, motion vector values) for four field motion vectors for a macroblock in an interlaced P-frame. Then, at 2720, the encoder/decoder processes the macroblock (e.g., by reconstructing the macroblock) using the four field motion vectors.

Alternatively, an encoder/decoder performs motion estimation/compensation in an interlaced P-frame without 4 Field MV macroblocks.

### B. Gathering Candidate Motion Vectors

In some implementations, the order of the collection of candidate motion vectors is important. For example, three candidate motion vectors for a current macroblock in an interlaced P-frame are gathered from its neighboring macroblocks, as shown in Figures 26A-26B. In one implementation the order of collection starts with neighboring macroblock A, proceeds to macroblock B, and ends at macroblock C.

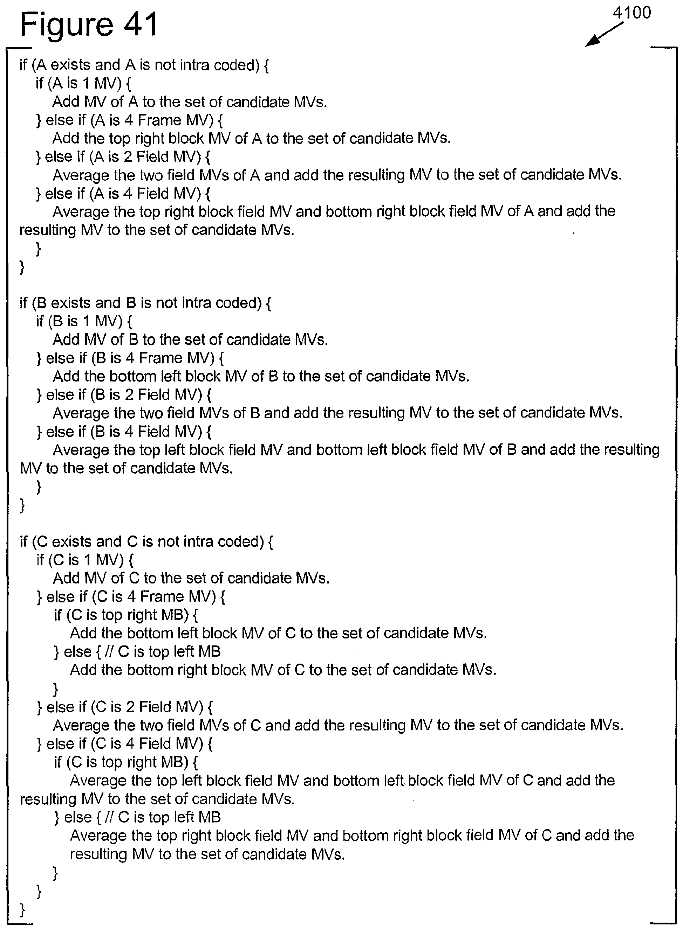

The pseudo-code in Figures 41-51 describes how candidate motion vectors are collected in one implementation. The encoder/decoder checks neighboring macroblocks to determine if they "exist" (i.e., are valid) for purposes of predicting a motion vector for a current macroblock (including for a block, field of the macroblock, or half field of the macroblock). A predictor candidate is considered to be non-existent (i.e., not valid) if the corresponding macroblock/block is outside the frame boundary or if the corresponding macroblock/block is part of a different slice. Thus, motion vector prediction is not performed across slice boundaries.

As shown in Figures 41-51, if a neighboring macroblock is valid and is not intra-coded, a motion vector from the neighboring macroblock is added to a set of candidate motion vectors. The actual motion vector added to the set of candidates depends on the position of the neighboring macroblock relative to the current macroblock (e.g., position A, B, or C), and on the type (e.g., 1MV, 4 Frame MV, 2 Field MV, or 4 Frame MV) of both the neighboring macroblock and the current macroblock.

Pseudo-code 4100 in Figure 41 shows how the up to three candidate motion vectors for a current motion vector in 1MV macroblocks are collected in one implementation.

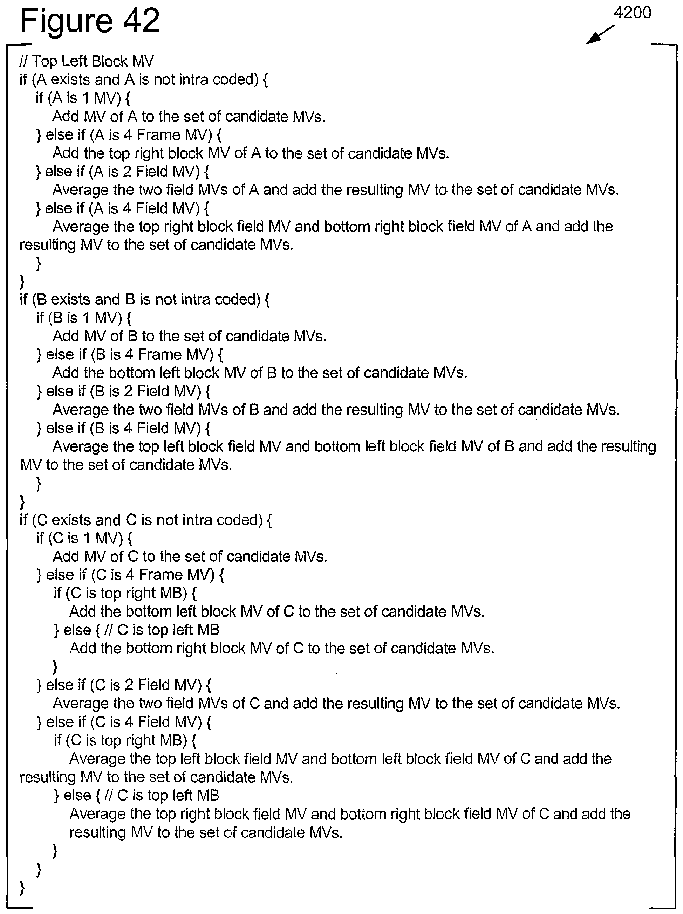

Pseudo-code 4200, 4300, 4400, and 4500 in Figures 42, 43, 44, and 45, respectively, show how the candidate motion vectors from the neighboring macroblocks/blocks are collected for each of the four frame block motion vectors in a current 4 Frame MV macroblock in one implementation. In this implementation, the encoder/decoder uses the algorithms shown in pseudo-code 4200, 4300, 4400, and 4500 to collect the up to three candidate motion vectors for the top left frame block motion vector, the top right frame block motion vector, the bottom left frame block motion vector, and the bottom right frame block motion vector, respectively.

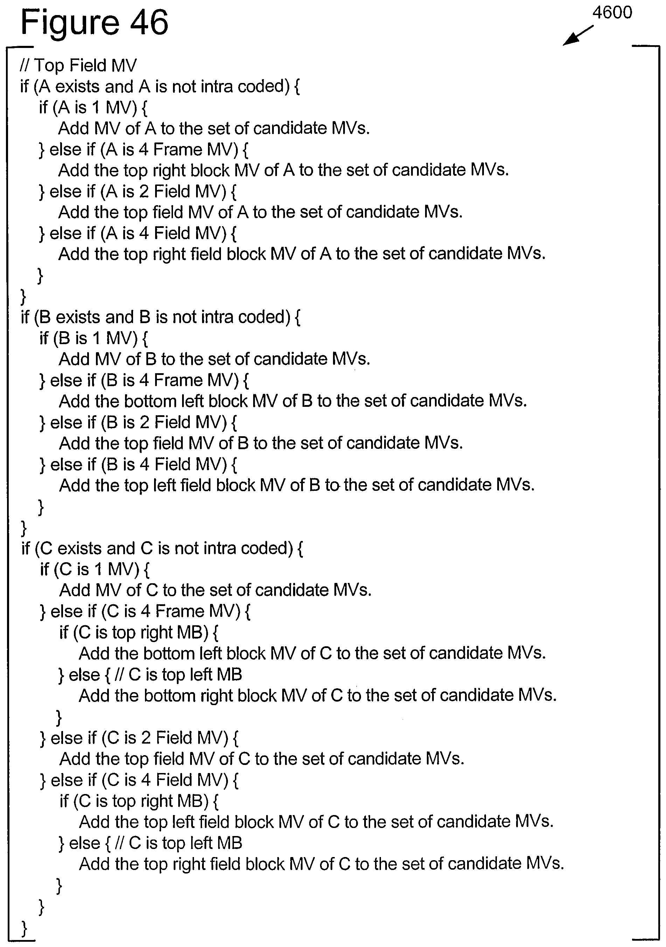

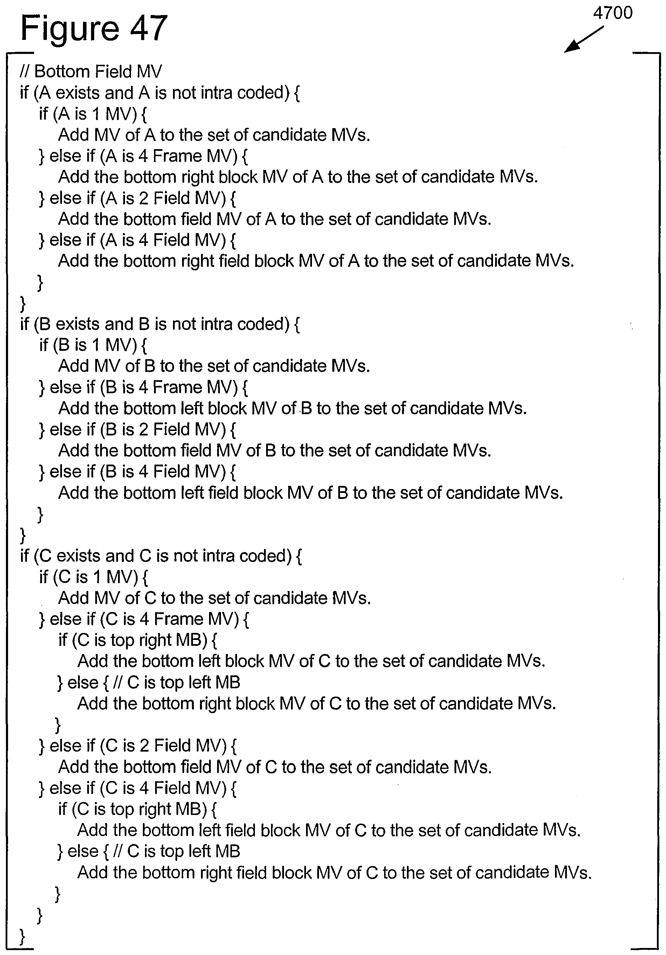

Pseudo-code 4600 and 4700 in Figures 46 and 47, respectively, show how the candidate motion vectors from the neighboring macroblocks are collected for each of the two field motion vectors in a current 2 Field MV macroblock in one implementation. In this implementation, the encoder/decoder uses the algorithms shown in pseudo-code 4600 and 4700 to collect the up to three candidate motion vectors for the top field motion vector and the bottom field motion vector, respectively.

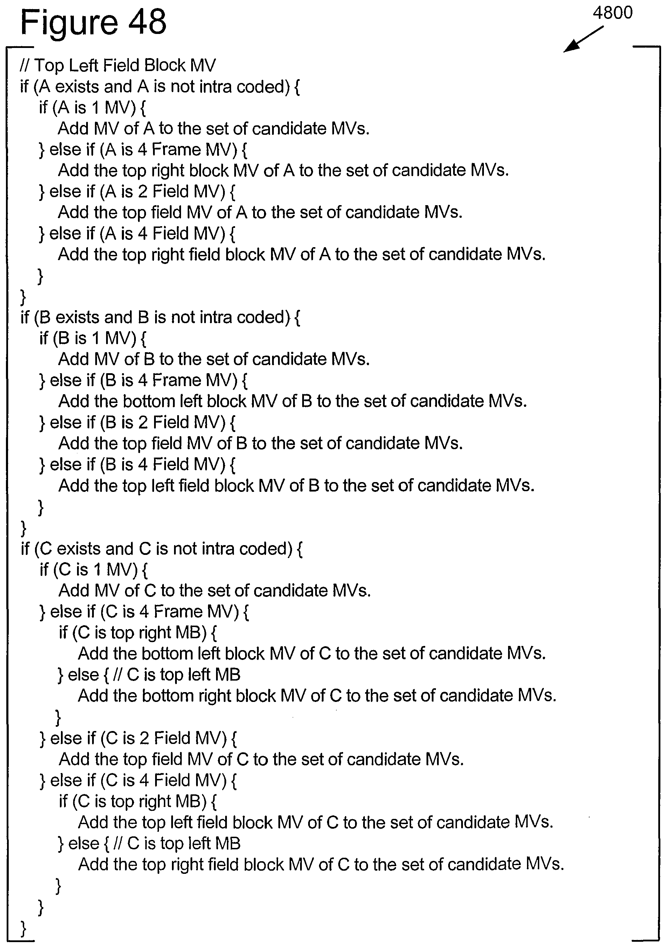

Pseudo-code 4800, 4900, 5000, and 5100 in Figures 48, 49, 50 and 51, respectively, show how the candidate motion vectors from the neighboring macroblocks/blocks are collected for each of the four field block motion vectors in a current 4 Field MV macroblock in one implementation. In this implementation, the encoder/decoder uses the algorithms shown in pseudo-code 4800, 4900, 5000, and 5100 to collect the up to three candidate motion vectors for the top left field block motion vector, the top right field block motion vector, the bottom left field block motion vector, and the bottom right field block motion vector, respectively.

In some cases, the selected candidate motion vector is actually an average of motion vectors in the neighboring macroblock. In one implementation, given two field motion vectors (MVX₁, MVY₁) and (MVX₂, MVY₂), the average operation used to form a candidate frame motion vector (MVX_{A}, MVY_{A}) is: ${MVX}_{A} = \left({MVX}_{1}+{MVX}_{2}+1\right) > > 1 ;$ ${MVY}_{A} = \left({MVY}_{1}+{MVY}_{2}+1\right) > > 1 ;$

Alternatively, candidate motion vectors can be collected according to collection rules differing from those shown in Figures 41-51. For example, the particular motion vectors chosen to be candidates from neighboring macroblocks having more than one motion vector (e.g., 4 Frame MV, 2 Field MV, or 4 Field MV macroblocks) can be varied. As another example, the ordering of the motion vectors in the set of candidates can be adjusted from the described A-B-C ordering to some other ordering.

### C. Computing Frame MV Predictors from Candidate Motion Vectors

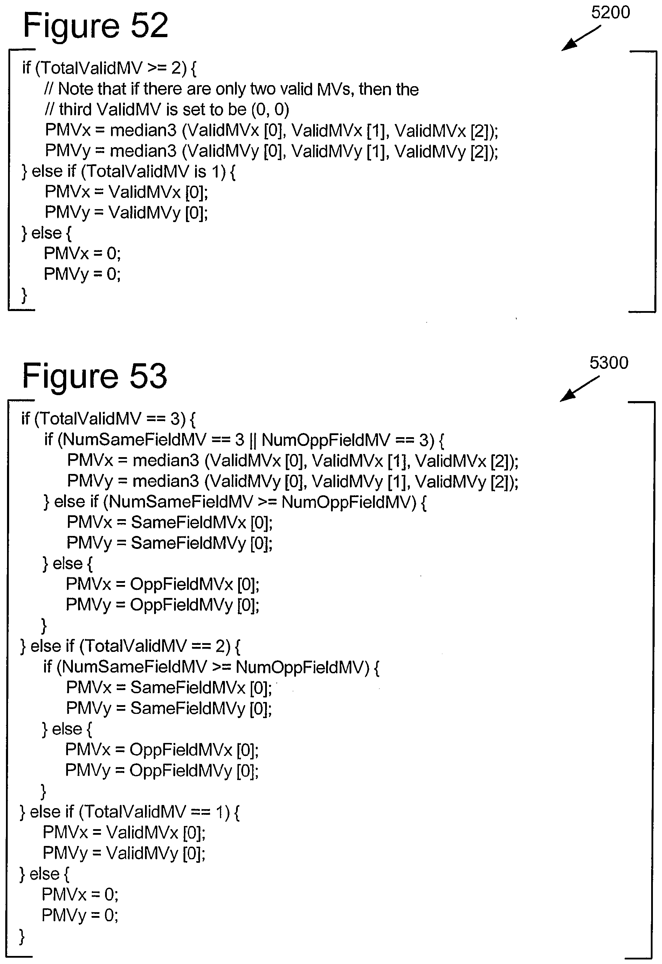

The pseudo-code 5200 in Figure 52 describes how the motion vector predictor (PMVₓ, PMV_{y}) is computed for frame motion vectors in one implementation. In the pseudo-code 5200, TotalValidMV denotes the total number of valid motion vectors in the set of candidate motion vectors (TotalValidMV = 0, 1, 2, or 3), and the ValidMV array includes the valid motion vectors in the set of candidate motion vectors.

In one implementation, pseudo-code 5200 is used to compute the predictor from a set of candidate motion vectors for the motion vector in 1MV macroblocks as well as for each one of the four frame block motion vectors in 4 Frame MV macroblocks.

### D. Computing Field MV Predictors from Candidate Motion Vectors

Techniques and tools for computing motion vector predictors for field motion vectors given a set of candidate motion vectors are described in this section. The techniques and tools described in this section can be used for computing the predictor for each of the two field motion vectors (in 2 Field MV macroblocks) as well as for each one of the four field motion vectors (in 4 Field MV macroblocks).

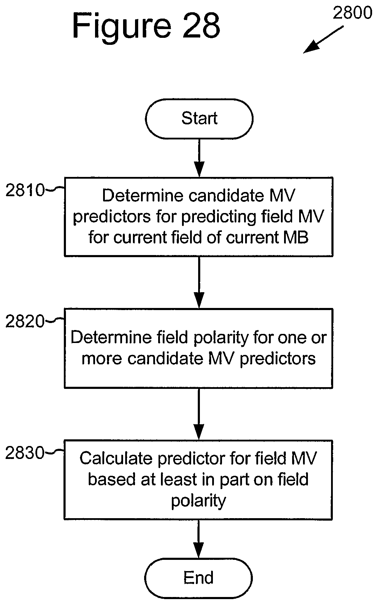

In some implementations, an encoder/decoder considers the polarity of a field referred to by a candidate motion vector when computing predictors. Figure 28 shows a technique 2800 for calculating motion vector predictors for a field-coded macroblock based on the polarity of candidate motion vectors. At 2810, the encoder/decoder determines candidate motion vectors for predicting a field motion vector for a current field of a current macroblock. At 2820, the encoder/decoder determines a field polarity for one or more valid candidates. Then, at 2830, the encoder/decoder calculates a motion vector predictor for the field motion vector based at least in part on the field polarities of the one or more valid candidates. For example, in one implementation, the candidate motion vectors are separated into two sets, where one set contains only motion vectors that point to the same field as the current field and the other set contains motion vectors that point to the opposite field. The encoder/decoder then uses the one of the two sets to calculate a motion vector predictor. While not shown in Figure 28, the process of calculating a motion vector predictor for a current macroblock can be repeated for each motion vector of the macroblock, and for additional macroblocks in a frame.

Assuming that the motion vectors are represented in quarter pixel units, the encoder/decoder can check whether a candidate motion vector points to the same field or opposite field (relative to the polarity of the current field) by performing the following check on its y-component:

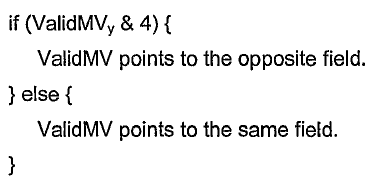

In the pseudo-code above, ValidMV_{y} is the y-component of the candidate motion vector measured in quarter-pixel increments. Therefore, in binary, the least significant bit of ValidMV_{y} is the quarter-pel bit, the second least significant bit is the half-pel bit, and the third least significant bit is the full-pel bit. The bitwise AND operation (ValidMV_{y} & 4) therefore determines whether the full-pel bit is 1 (indicating an odd integer) or 0 (indicating an even integer). If the integer offset is odd, the candidate motion vector references the opposite polarity field in the reference frame. If the integer offset is even, the candidate motion vector references the same polarity field in the reference frame.

Alternatively, the polarity of candidate motion vectors is determined in some other way, or the polarity of candidates is not considered during calculation of motion vector predictors.

The pseudo-code 5300 in Figure 53 describes how the motion vector predictor (PMVₓ, PMV_{y}) is computed for a field motion vector in one implementation. In the pseudo-code 5300, SameFieldMV [ ] and OppFieldMV [ ] denote the two sets of candidate motion vectors and NumSameFieldMV and NumOppFieldMV denote the number of candidate motion vectors that belong to each set. In the example shown in pseudo-code 5300, the number of available candidate motion vectors in these sets determines whether a median operation will be used to calculate a motion vector predictor.

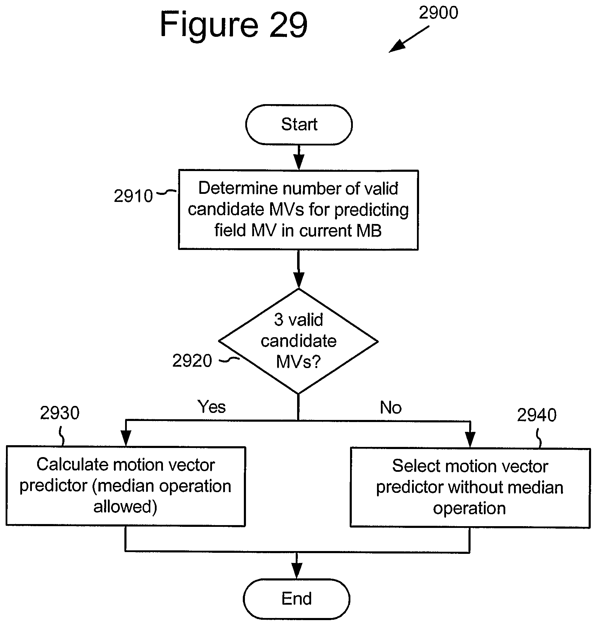

Figure 29 shows a technique 2900 for determining whether to perform a median operation when calculating a motion vector predictor for a field motion vector. At 2910, an encoder/decoder determines the number of valid candidate motion vectors for predicting a field motion vector in a current macroblock. At 2920, if there are three valid candidate motion vectors, then at 2930, a median operation can be used during calculation of the predictor. At 2940, if there are not three valid candidates (i.e., there are two or fewer valid candidates), a motion vector predictor is selected from among the available valid candidates using another method -- a median operation is not used.

In the example in the pseudo-code 5300, the encoder/decoder derives the motion vector predictor by performing a median operation (e.g., median3) on the candidate x-components or y-components when all three candidate motion vectors are valid, and when all three valid candidate motion vectors are of the same polarity. If all three candidate motion vectors are valid, but not all of them are the same polarity, the encoder/decoder chooses the set that has the most candidates to derive the motion vector predictor. In the case where both sets have the same number of candidates, the encoder/decoder uses the set SameFieldMV [ ]. For the case where there are less than three candidates, the encoder/decoder selects the first candidate from the chosen set in a pre-specified order. In this example, the order of candidate motion vectors in each set starts with candidate A if it exists, followed by candidate B if it exists, and then candidate C if it exists. For example, if the encoder/decoder uses set SameFieldMV [ ] and if the set SameFieldMV [ ] contains only candidate B and candidate C, then the encoder/decoder uses candidate B as the motion vector predictor. If the number of valid candidates is zero, the encoder/decoder sets the predictor to (0, 0).

Alternatively, motion vector predictors can be computed in ways other than those described above. For example, although pseudo-code 5300 includes a bias toward selecting same-field candidates, the computation of predictors can be adjusted to remove the bias or to use an opposite field bias. As another example, median operations can be used in more situations (e.g., when two valid field motion vector candidates are present), or not at all, or a non-median operation for two valid candidates may be an averaging operation. As yet another example, the ordering of the candidates in the sets can be adjusted, or the candidates can all be stored in one set.

### V. Innovations in Macroblock Information Signaling for Interlaced Frame Coded Pictures

Described examples include techniques and tools for signaling macroblock information for interlaced frame coded pictures (e.g., interlaced P-frames, interlaced B-frames, etc.). For example, described techniques and tools include techniques and tools for signaling macroblock information for interlaced P-frames, and techniques and tools for using and signaling skipped macroblocks in interlaced P-frames and other interlaced pictures (e.g., interlaced B-frames, interlaced P-fields, interlaced B-fields, etc.). Described examples implement one or more of the described techniques and tools including, but not limited to, the following:
1. Jointly coding motion compensation type (e.g., 1 Frame MV, 4 Frame MV, 2 Field MV, 4 Field MV, etc.), and potentially other information, with field/frame coding type information (e.g., using the macroblock-level syntax element MBMODE) for interlaced P-frames.
2. Signaling a macroblock skip condition. The signaling can be performed separately from other syntax elements such as MBMODE. The skip condition indicates that the macroblock is a 1 MV macroblock, has a zero differential motion vector, and has no coded blocks. The skip information can be coded in a compressed bitplane.

The described techniques and tools can be used in combination with one another or with other techniques and tools, or can be used independently.

### A. Skipped Macroblock Signaling

In some implementations, an encoder signals skipped macroblocks. For example, an encoder signals a skipped macroblock in an interlaced frame when a macroblock is coded with one motion vector, has a zero motion vector differential, and has no coded blocks (i.e., no residuals for any block). The skip information can coded as a compressed bitplane (e.g., at frame level) or can be signaled on a one bit per macroblock basis (e.g., at macroblock level). The signaling of the skip condition for the macroblock is separate from the signaling of a macroblock mode for the macroblock. A decoder performs corresponding decoding.

This definition of a skipped macroblock takes advantage of the observation that when more than one motion vector is used to encode a macroblock, the macroblock is rarely skipped because it is unlikely that all of the motion vector differentials will be zero and that all of the blocks will not be coded. Thus, when a macroblock is signaled as being skipped, the macroblock mode (1MV) is implied from the skip condition and need not be sent for the macroblock. In interlaced P-frames, a 1MV macroblock is motion compensated with one frame motion vector.

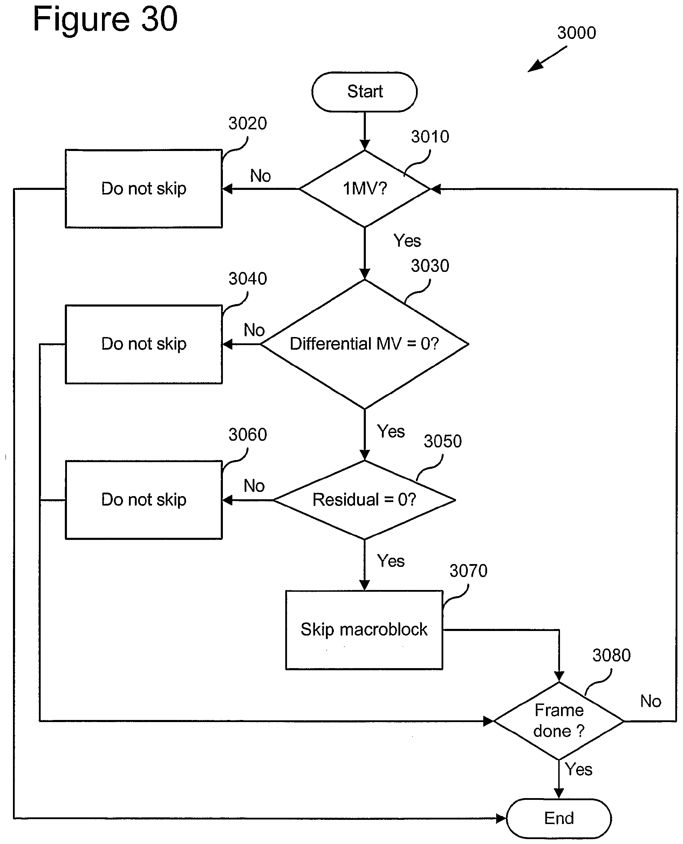

Figure 30 shows a technique 3000 for determining whether to skip coding of particular macroblocks in an interlaced predicted frame (e.g., an interlaced P-frame, an interlaced B-frame, or a frame comprising interlaced P-fields and/or interlaced B-fields). For a given macroblock, the encoder checks whether the macroblock is a 1MV macroblock at 3010. At 3020, if the macroblock is not a 1MV macroblock, the encoder does not skip the macroblock. Otherwise, at 3030, the encoder checks whether the one motion vector for the macroblock is equal to its causally predicted motion vector (e.g., whether the differential motion vector for the macroblock is equal to zero). At 3040, if the motion for a macroblock does not equal the causally predicted motion, the encoder does not skip the macroblock. Otherwise, at 3050, the encoder checks whether there is any residual to be encoded for the blocks of the macroblock. At 3060, if there is a residual to be coded, the encoder does not skip the macroblock. At 3070, if there is no residual for the blocks of the macroblock, the encoder skips the macroblock. At 3080, the encoder can continue to encode or skip macroblocks until encoding is done.

In one implementation, the macroblock-level SKIPMBBIT field (which can also be labeled SKIPMB, etc.) indicates the skip condition for a macroblock. If the SKIPMBBIT field is 1, then the current macroblock is skipped and no other information is sent after the SKIPMBBIT field. On the other hand, if the SKIPMBBIT field is not 1, the MBMODE field is decoded to indicate the type of macroblock and other information regarding the current macroblock, such as information described below in Section V.B.

At frame level, the SKIPMB field indicates skip information for macroblocks in the frame. In one implementation, the skip information can be encoded in one of several modes. For example, in raw coding mode, the SKIPMB field indicates the presence of SKIPMBBIT at macroblock level. In a bitplane coding mode, the SKIPMB field stores skip information in a compressed bit plane. Available bitplane coding modes include normal-2 mode, differential-2 mode, normal-6 mode, differential-6 mode, rowskip mode, and columnskip mode. Bitplane coding modes are described in further detail in Section VII, below. The decoded SKIPMB bitplane contains one bit per macroblock and indicates the skip condition for each respective macroblock.

Alternatively, skipped macroblocks are signaled in some other way or at some other level in the bitstream. For example, a compressed bitplane is sent at field level. As another alternative, the skip condition can be defined to imply information about a skipped macroblock other than and/or in addition to the information described above.

### B. Macroblock Mode Signaling

In some implementations, an encoder jointly encodes motion compensation type and potentially other information about a macroblock with field/frame coding type information for the macroblock. For example, an encoder jointly encodes one of five motion compensation types (1MV, 4 Frame MV, 2 Field MV, 4 Field MV, and intra) with a field transform/frame transform/no coded blocks event using one or more variable length coding tables. A decoder performs corresponding decoding.

Jointly coding motion compensation type and field/frame coding type information for a macroblock takes advantage of the observation that certain field/frame coding types are more likely to occur in certain contexts for a macroblock of a given motion compensation type. Variable length coding can then be used to assigned shorter codes to the more likely combinations of motion compensation type and field/frame coding type. For even more flexibility, multiple variable length coding tables can be used, and an encoder can switch between the tables depending on the situation. Thus, jointly coding motion compensation type and field/frame coding type information for a macroblock can provide savings in coding overhead that would otherwise be used to signal field/frame coding type separately for each macroblock.

For example, in some implementations an encoder selects a motion compensation type (e.g., 1MV, 4 Frame MV, 2 Field MV, or 4 Field MV) and a field/frame coding type (e.g., field, frame, or no coded blocks) for a macroblock. The encoder jointly encodes the motion compensation type and the field/frame coding type for the macroblock. The encoder also can encode other information jointly with the motion compensation type and field/frame coding type. For example, the encoder can jointly encode information indicating the presence or absence of a differential motion vector for the macroblock (e.g., for a macroblock having one motion vector).

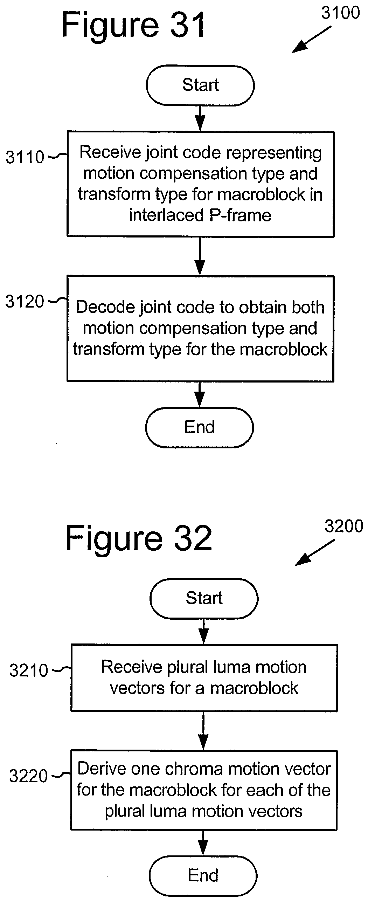

A decoder performs corresponding decoding. For example, Figure 31 shows a technique 3100 for decoding jointly coded motion compensation type information and field/frame coding type information for a macroblock in an interlaced P-frame in some implementations. At 3110, a decoder receives macroblock information which includes a joint code (e.g., a variable length code from a variable coding table) representing motion compensation type and field/frame coding type for a macroblock. At 3120, the decoder decodes the joint code (e.g., by looking up the joint code in a variable length coding table) to obtain motion compensation type information and field/frame coding type information for the macroblock.

In one implementation, the macroblock-level bitstream element MBMODE jointly specifies the type of macroblock (1MV, 4 Frame MV, 2 Field MV, 4 Field MV, or intra), field/frame coding types for inter-coded macroblock (field, frame, or no coded blocks), and whether there is a differential motion vector for a 1MV macroblock. In this example, MBMODE can take one of 15 possible values. Let <MVP> denote the signaling of whether a nonzero 1MV differential motion vector is present or absent. Let <Field/Frame transform> denote the signaling of whether the residual of the macroblock is (1) frame-coded; (2) field-coded; or (3) zero coded blocks (i.e. CBP = 0). MBMODE signals the following information jointly:

```
        MBMODE = { <1MV, MVP,' Field/Frame transform>, <2 Field MV, Field/Frame
        transform>, <4 Frame MV, Field/Frame transform>, <4 Field MV, Field/Frame
        transform>, <INTRA>};
```

The case <1MV, MVP=0, CBP=0>, is not signaled by MBMODE, but is signaled by the skip condition. (Examples of signaling this skip condition are provided above in Section V.A.)

In this example, for inter-coded macroblocks, the CBPCY syntax element is not decoded when <Field/frame Transform> in MBMODE indicates no coded blocks. On the other hand, if <Field/frame Transform> in MBMODE indicates field or frame transform, then CBPCY is decoded. For non-1MV inter-coded macroblocks, an additional field is sent to indicate which of the differential motion vectors is non-zero. In the case of 2 Field MV macroblocks, the 2MVBP field is sent to indicate which of the two motion vectors contain nonzero differential motion vectors. Similarly, the 4MVBP field is sent to indicate which of four motion vectors contain nonzero differential motion vectors. For intra-coded macroblocks, the Field/Frame coding types and zero coded blocks are coded in separate fields.

Alternatively, an encoder/decoder uses joint coding with different combinations of motion compensation types and field/frame coding types. As another alternative, an encoder/decoder jointly encodes/decodes additional information other than the presence of motion vector differentials.

In some implementations, an encoder/decoder uses one of several variable length code tables to encode MBMODE and can adaptively switch between code tables. For example, in some implementations, the frame-level syntax element MBMODETAB is a 2-bit field that indicates the table used to decode the MBMODE for macroblocks in the frame. In this example, the tables are grouped into sets of four tables, and the set of tables used depends on whether four-motion-vector coding is enabled for the frame.

Exemplary MBMODE variable length code tables (e.g., Tables 0-3 for each set -- Mixed MV or 1 MV) are provided below in Tables 1-8:

**Table 1: Interlace P-Frame Mixed MV MB Mode Table 0**

| MB Type | MV Present | Transform | VLC Codeword | VLC Size | VLC (binary) |
|---|---|---|---|---|---|
| 1MV | 1 | Frame | 22 | 5 | 10110 |
| 1MV | 1 | Field | 17 | 5 | 10001 |
| 1MV | 1 | No CBP | 0 | 2 | 00 |
| 1MV | 0 | Frame | 47 | 6 | 101111 |
| 1MV | 0 | Field | 32 | 6 | 100000 |
| 2 Field MV | N/A | Frame | 10 | 4 | 1010 |
| 2 Field MV | N/A | Field | 1 | 2 | 01 |
| 2 Field MV | N/A | No CBP | 3 | 2 | 11 |
| 4 Frame MV | N/A | Frame | 67 | 7 | 1000011 |
| 4 Frame MV | N/A | Field | 133 | 8 | 10000101 |
| 4 Frame MV | N/A | No CBP | 132 | 8 | 10000100 |
| 4 Field MV | N/A | Frame | 92 | 7 | 1011100 |
| 4 Field MV | N/A | Field | 19 | 5 | 10011 |
| 4 Field MV | N/A | No CBP | 93 | 7 | 1011101 |
| INTRA | N/A | N/A | 18 | 5 | 10010 |

**Table 2: Interlace Frame Mixed MV MB Mode Table 1**

| MB Type | MV Present | Transform | VLC Codeword | VLC Size | VLC (binary) |
|---|---|---|---|---|---|
| 1 MV | 1 | Frame | 3 | 3 | 011 |
| 1 MV | 1 | Field | 45 | 6 | 101101 |
| 1 MV | 1 | No CBP | 0 | 3 | 000 |
| 1 MV | 0 | Frame | 7 | 3 | 111 |
| 1 MV | 0 | Field | 23 | 5 | 10111 |
| 2 Field MV | N/A | Frame | 6 | 3 | 110 |
| 2 Field MV | N/A | Field | 1 | 3 | 001 |
| 2 Field MV | N/A | No CBP | 2 | 3 | 010 |
| 4 Frame MV | N/A | Frame | 10 | 4 | 1010 |
| 4 Frame MV | N/A | Field | 39 | 6 | 100111 |
| 4 Frame MV | N/A | No CBP | 44 | 6 | 101100 |
| 4 Field MV | N/A | Frame | 8 | 4 | 1000 |
| 4 Field MV | N/A | Field | 18 | 5 | 10010 |
| 4 Field MV | N/A | No CBP | 77 | 7 | 1001101 |
| INTRA | N/A | N/A | 76 | 7 | 1001100 |

**Table 3: Interlace Frame Mixed MV MB Mode Table 2**

| MB Type | MV Present | Transform | VLC Codeword | VLC Size | VLC (binary) |
|---|---|---|---|---|---|
| 1 MV | 1 | Frame | 15 | 4 | 1111 |
| 1 MV | 1 | Field | 6 | 3 | 110 |
| 1 MV | 1 | No CBP | 28 | 5 | 11100 |
| 1 MV | 0 | Frame | 9 | 5 | 01001 |
| 1 MV | 0 | Field | 41 | 7 | 0101001 |
| 2 Field MV | N/A | Frame | 6 | 4 | 0110 |
| 2 Field MV | N/A | Field | 2 | 2 | 10 |
| 2 Field MV | N/A | No CBP | 15 | 5 | 01111 |
| 4 Frame MV | N/A | Frame | 14 | 5 | 01110 |
| 4 Frame MV | N/A | Field | 8 | 5 | 01000 |
| 4 Frame MV | N/A | No CBP | 40 | 7 | 0101000 |
| 4 Field MV | N/A | Frame | 29 | 5 | 11101 |
| 4 Field MV | N/A | Field | 0 | 2 | 00 |
| 4 Field MV | N/A | No CBP | 21 | 6 | 010101 |
| INTRA | N/A | N/A | 11 | 5 | 01011 |

**Table 4: Interlace Frame Mixed MV MB Mode Table 3**

| MB Type | MV Present | Transform | VLC Codeword | VLC Size | VLC (binary) |
|---|---|---|---|---|---|
| 1 MV | 1 | Frame | 7 | 4 | 0111 |
| 1 MV | 1 | Field | 198 | 9 | 011000110 |
| 1 MV | 1 | No CBP | 1 | 1 | 1 |
| 1 MV | 0 | Frame | 2 | 3 | 010 |
| 1 MV | 0 | Field | 193 | 9 | 011000001 |
| 2 Field MV | N/A | Frame | 13 | 5 | 01101 |
| 2 Field MV | N/A | Field | 25 | 6 | 011001 |
| 2 Field MV | N/A | No CBP | 0 | 2 | 00 |
| 4 Frame MV | N/A | Frame | 97 | 8 | 01100001 |
| 4 Frame MV | N/A | Field | 1599 | 12 | 011000111111 |
| 4 Frame MV | N/A | No CBP | 98 | 8 | 01100010 |
| 4 Field MV | N/A | Frame | 398 | 10 | 0110001100 |
| 4 Field MV | N/A | Field | 798 | 11 | 01100011110 |
| 4 Field MV | N/A | No CBP | 192 | 9 | 011000000 |
| INTRA | N/A | N/A | 1598 | 12 | 011000111110 |

**Table 5: Interlace Frame 1 MV MB Mode Table 0**

| MB Type | MV Present | Transform | VLC Codeword | VLC Size | VLC (binary) |
|---|---|---|---|---|---|
| 1 MV | 1 | Frame | 9 | 4 | 1001 |
| 1 MV | 1 | Field | 22 | 5 | 10110 |
| 1 MV | 1 | No CBP | 0 | 2 | 00 |
| 1 MV | 0 | Frame | 17 | 5 | 10001 |
| 1 MV | 0 | Field | 16 | 5 | 10000 |
| 2 Field MV | N/A | Frame | 10 | 4 | 1010 |
| 2 Field MV | N/A | Field | 1 | 2 | 01 |
| 2 Field MV | N/A | No CBP | 3 | 2 | 11 |
| INTRA | N/A | N/A | 23 | 5 | 10111 |

**Table 6: Interlace Frame 1 MV MB Mode Table 1**

| MB Type | MV Present | Transform | VLC Codeword | VLC Size | VLC (binary) |
|---|---|---|---|---|---|
| 1 MV | 1 | Frame | 7 | 3 | 111 |
| 1 MV | 1 | Field | 0 | 4 | 0000 |
| 1 MV | 1 | No CBP | 5 | 6 | 000101 |
| 1 MV | 0 | Frame | 2 | 2 | 10 |
| 1 MV | 0 | Field | 1 | 3 | 001 |
| 2 Field MV | N/A | Frame | 1 | 2 | 01 |
| 2 Field MV | N/A | Field | 6 | 3 | 110 |
| 2 Field MV | N/A | No CBP | 3 | 5 | 00011 |
| INTRA | N/A | N/A | 4 | 6 | 000100 |

**Table 7: Interlace Frame 1 MV MB Mode Table 2**

| MB Type | MV Present | Transform | VLC Codeword | VLC Size | VLC (binary) |
|---|---|---|---|---|---|
| 1 MV | 1 | Frame | 1 | 2 | 01 |
| 1 MV | 1 | Field | 0 | 2 | 00 |
| 1 MV | 1 | No CBP | 10 | 4 | 1010 |
| 1 MV | 0 | Frame | 23 | 5 | 10111 |
| 1 MV | 0 | Field | 44 | 6 | 101100 |
| 2 Field MV | N/A | Frame | 8 | 4 | 1000 |
| 2 Field MV | N/A | Field | 3 | 2 | 11 |
| 2 Field MV | N/A | No CBP | 9 | 4 | 1001 |
| INTRA | N/A | N/A | 45 | 6 | 101101 |

**Table 8: Interlace Frame 1 MV MB Mode Table 3**

| MB Type | MV Present | Transform | VLC Codeword | VLC Size | VLC (binary) |
|---|---|---|---|---|---|
| 1 MV | 1 | Frame | 7 | 4 | 0111 |
| 1 MV | 1 | Field | 97 | 8 | 01100001 |
| 1 MV | 1 | No CBP | 1 | 1 | 1 |
| 1 MV | 0 | Frame | 2 | 3 | 010 |
| 1 MV | 0 | Field | 49 | 7 | 0110001 |
| 2 Field MV | N/A | Frame | 13 | 5 | 01101 |
| 2 Field MV | N/A | Field | 25 | 6 | 011001 |
| 2 Field MV | N/A | No CBP | 0 | 2 | 00 |
| INTRA | N/A | N/A | 96 | 8 | 01100000 |

### VI. Innovations in Derivation of Chroma Motion Vectors

Described examples include techniques and tools for deriving chrominance (or "chroma") motion vectors from luminance (or "luma") motion vectors. Some of the described techniques and tools relate to deriving chroma motion vectors in frame-coded interlaced pictures (e.g., interlaced P-frames, interlaced B-frames, etc.) and improve the rate/distortion performance of interlace frame coded pictures. In described techniques and tools, chroma motion vectors are not sent explicitly in the bitstream. Rather, they are derived from the luma motion vectors that are encoded and sent for macroblocks or blocks of a frame.

Described examples implement one or more of the described techniques and tools including, but not limited to, the following:
1. An encoder/decoder obtains a one-to-one correspondence between luma and chroma motion vectors in interlace frame coded pictures (e.g., interlaced P-frames, interlaced B-frames, etc.) by deriving a chroma motion vector for each luma motion vector in a macroblock. The chroma motion vectors are then used to motion compensate the respective chroma block or field.
2. An encoder/decoder maintains coherence between the luma and chroma motion vector when the corresponding macroblock is field coded by adding a variable offset (e.g., using a lookup table) to the chroma motion vector after sub-sampling.

Although described techniques apply to a 4:2:0 macroblock format in interlaced video, described techniques can be applied to other macroblock formats (e.g., 4:2:2, 4:4:4, etc.) and other kinds of video. The described techniques and tools can be used in combination with one another or with other techniques and tools, or can be used independently.

### A. One-to-one Chroma Motion Vector Correspondence

In some implementations, an encoder/decoder derives and uses the same number of chroma motion vectors to predict a macroblock as the number of luma motion vectors used to predict the macroblock. For example, when an encoder/decoder uses one, two or four luma field- or frame-type motion vectors for a given macroblock, the encoder/decoder derives one, two or four chroma motion vectors for the given macroblock, respectively. Such a technique differs from previous encoders and decoders (e.g., in a progressive frame or interlaced P-field context) in which the previous encoder or decoder always derives a single chroma motion vector for any number of luma motion vectors (e.g., one or four) in each macroblock.

Figure 32 is a flow chart showing a technique 3200 for deriving a chroma motion vector for each of plural luma motion vectors in a macroblock. At 3210, an encoder/decoder receives plural luma motion vectors for the macroblock. At 3220, the encoder/decoder derives a chroma motion vector for each of the plural luma motion vectors. The number of derived chroma motion vectors varies depending on the number of luma motion vectors used to predict the current macroblock.

In some implementations, an encoder/decoder derives one chroma motion vector for a 1MV macroblock, two field chroma motion vectors for a 2 Field MV macroblock, four frame chroma motion vectors for a 4 Frame MV macroblock, and four field chroma motion vectors for a 4 Field MV macroblock.

For example, referring to again to Figures 23-25, Figure 23 shows corresponding top and bottom field chroma motion vectors derived from luma motion vectors in a 2 Field MV macroblock. The derived top and bottom field chroma motion vectors describe the displacement of the even and odd lines, respectively, of the chroma blocks.

Figure 24 shows corresponding frame chroma motion vectors (MV1', MV2', MV3' and MV4') derived from frame luma motion vectors for each of four blocks in a 4 Frame MV macroblock. The four derived chroma motion vectors describe the respective displacements of the four 4x4 chroma sub-blocks.

Figure 25 shows corresponding field chroma motion vectors derived from field luma motion vectors in a 4 Field MV macroblock. Two field chroma motion vectors describe the displacement of each field in the chroma blocks. The lines of the chroma block is subdivided vertically to form two 4x8 regions each having a 4x4 region of top field lines interleaved with a 4x4 region of bottom field lines. For the top field lines, the displacement of the left 4x4 region is described by the top left field chroma block motion vector and the displacement of the right 4x4 region is described by the top right field chroma block motion vector. For the bottom field lines, the displacement of the left 4x4 region is described by the bottom left field chroma block motion vector and the displacement of the right 4x4 region is described by the bottom right field chroma block motion vector.

Each of the chroma block regions can be motion compensated using a derived motion vector. This allows greater resolution in chroma motion compensation than in previous encoders and decoder which derive a single chroma motion vector from any number of luma motion vectors (e.g., where one chroma motion vector is derived from four luma motion vectors in a macroblock), typically by sub-sampling (also known as "down-sampling") and/or averaging.

Alternatively, the encoder/decoder can derive chroma motion vectors from different numbers and/or types of luma motion vectors (e.g., two frame chroma motion vectors from a macroblock encoded with two frame luma motion vectors, more than four chroma motion vectors from a macroblock encoded with more than four luma motion vectors, etc.). Or, the chroma motion vectors can be derived in some other way while maintaining a 1:1 correspondence with the number of luma motion vectors for the macroblock.

### B. Field-based Rounding in Field-coded Macroblocks

In some implementations, an encoder/decoder uses field-based rounding to maintain coherence between luma motion vectors and a chroma motion vectors during chroma motion vector derivation for field-coded macroblocks.

Given a luma frame motion vector or field motion vector, an encoder/decoder derives a corresponding chroma frame motion vector or field motion vector to perform motion compensation for a portion (and potentially all) of the chroma (Cb/Cr) block. In some implementations, chroma motion vector derivation for interlace frame coded pictures (e.g., interlaced P-frames, interlaced B-frames, etc.) comprises rounding and sub-sampling. For example, when deriving chroma motion vectors from luma field motion vectors, the encoder/decoder adds a variable offset (e.g., using a lookup table) to the chroma motion vector after sub-sampling.

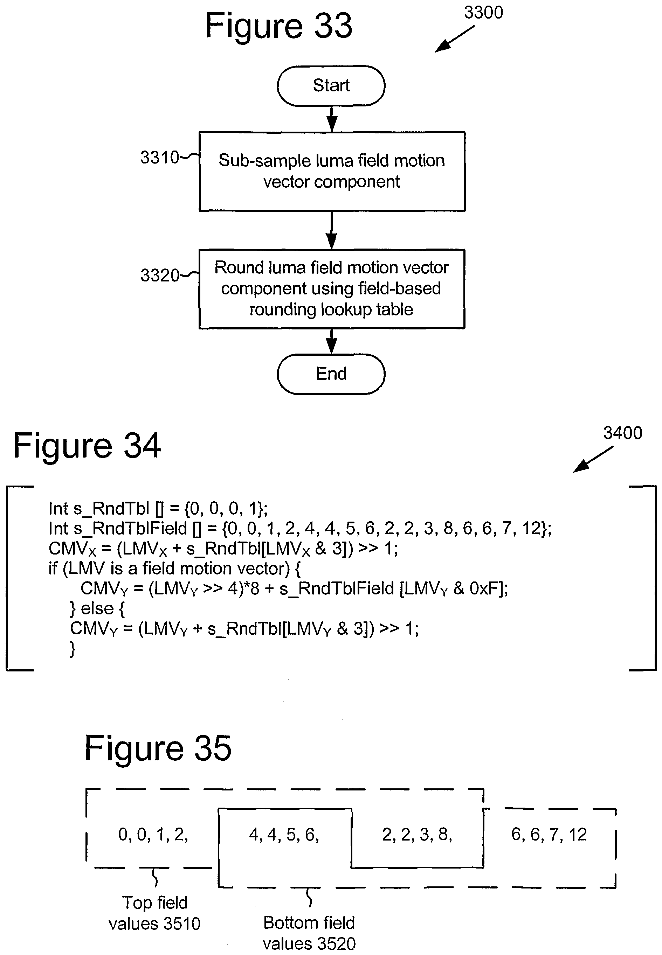

Figure 33 is a flow chart showing a technique 3300 for using a field-based rounding lookup table to derive a chroma motion vector in a macroblock. At 3310, an encoder/decoder sub-samples a luma field motion vector component (e.g., by dividing the y-component value by two in a 4:2:0 macroblock format). At 3320, the encoder/decoder then performs rounding using a field-based rounding lookup table.

The pseudocode 3400 in Figure 34 describes how a chroma motion vector component (CMV_{X}, CMV_{Y}) is derived from a luma motion vector component (LMV_{X}, LMV_{Y}) in a 4:2:0 macroblock in one implementation. As shown in the pseudocode 3400, the encoder/decoder uses a simple rounding strategy (using rounding lookup table s_RndTbl[ ]) to round up the ¾-pel positions of the x-component of the motion vector prior to horizontal sub-sampling. The encoder/decoder uses the same rounding lookup table prior to vertical sub-sampling for the y-component if the macroblock is frame-coded. However, if the macroblock is field-coded, the encoder/decoder treats the y-component of the chroma motion vector differently. In a field-coded macroblock, a chroma motion vector corresponds to the top or bottom field. The top and bottom fields each comprise alternating horizontal lines of the chroma block. Therefore, in this case the encoder/decoder uses the field-based rounding lookup table s_RndTblField[ ] shown in the pseudocode 3400. A field-based rounding lookup table allows the encoder/decoder to maintain correct field offsets while rounding, so that the luma and chroma motion vectors map to consistent field offsets. For example, referring to Figure 35, the values 0, 0, 1, 2 and 2, 2, 3, 8 (top field values 3510 in Figure 35) in s_RndTb_Field[ ] apply to one field (e.g., the top field), and the values 4, 4, 5, 6 and 6, 6, 7, 12 (bottom field values 3520 in Figure 35) apply to the other field (e.g., the bottom field) in the macroblock.

Alternatively, an encoder/decoder can use a different field-based rounding lookup table or perform rounding and/or sub-sampling in some other way. For example, an encoder/decoder processing macroblocks in different formats could use different sub-sampling factors and/or lookup table values.

### VII. Combined Implementations

A detailed combined implementation for a bitstream syntax, semantics, and decoder are now described, in addition to an alternative combined implementation with minor differences from the main combined implementation.

### A. Bitstream Syntax

In various combined implementations, data for interlaced pictures is presented in the form of a bitstream having plural layers (e.g., sequence, entry point, frame, field, macroblock, block and/or sub-block layers).

In the syntax diagrams, arrow paths show the possible flows of syntax elements. Syntax elements shown with square-edged boundaries indicate fixed-length syntax elements; those with rounded boundaries indicate variable-length syntax elements and those with a rounded boundary within an outer rounded boundary indicate a syntax element (e.g., a bitplane) made up of simpler syntax elements. A fixed-length syntax element is defined to be a syntax element for which the length of the syntax element is not dependent on data in the syntax element itself; the length of a fixed-length syntax element is either constant or determined by prior data in the syntax flow. A lower layer in a layer diagram (e.g., a macroblock layer in a frame-layer diagram) is indicated by a rectangle within a rectangle.

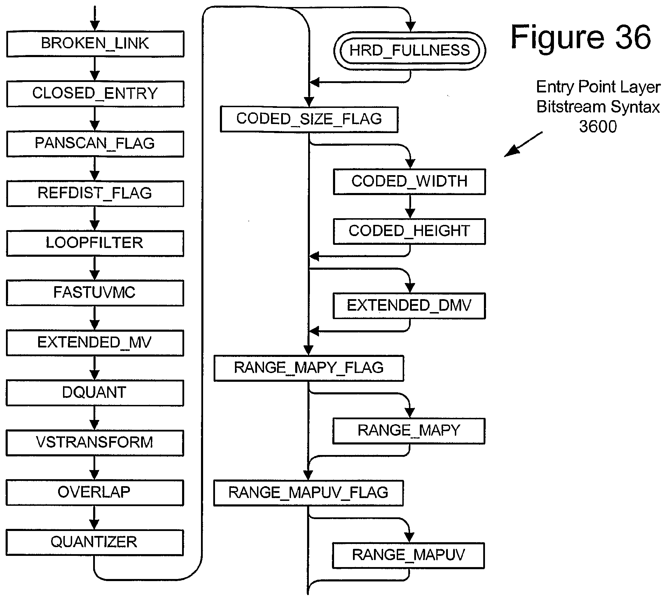

Entry-point-level bitstream elements are shown in Figure 36. In general, an entry point marks a position in a bitstream (e.g., an I-frame or other key frame) at which a decoder can begin decoding. In other words, no pictures before the entry point in the bitstream are needed to decode pictures after the entry point. An entry point header can be used to signal changes in coding control parameters (e.g., enabling or disabling compression tools (e.g., in-loop deblocking filtering) for frames following an entry point).

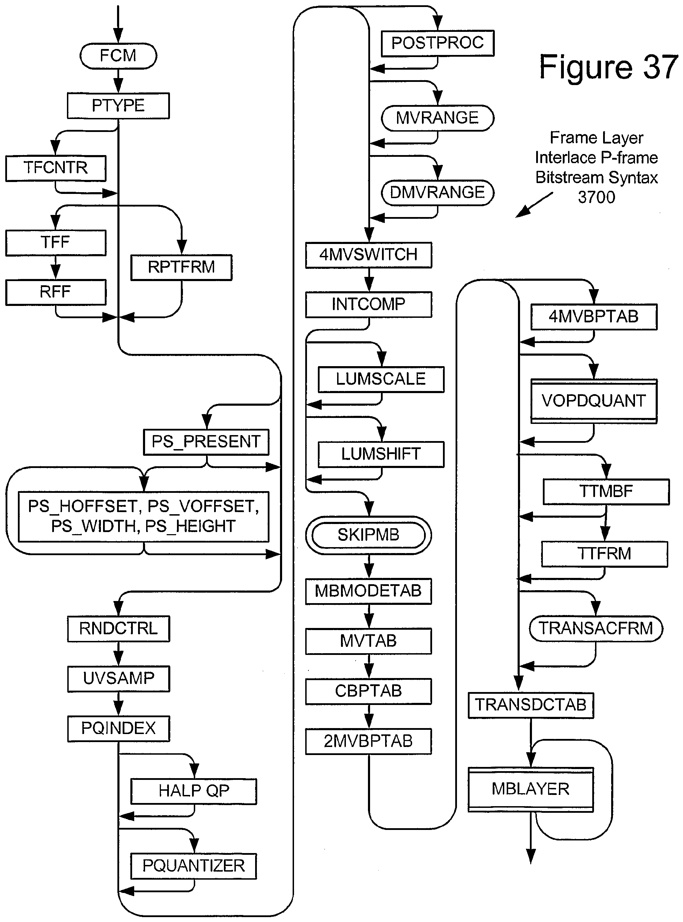

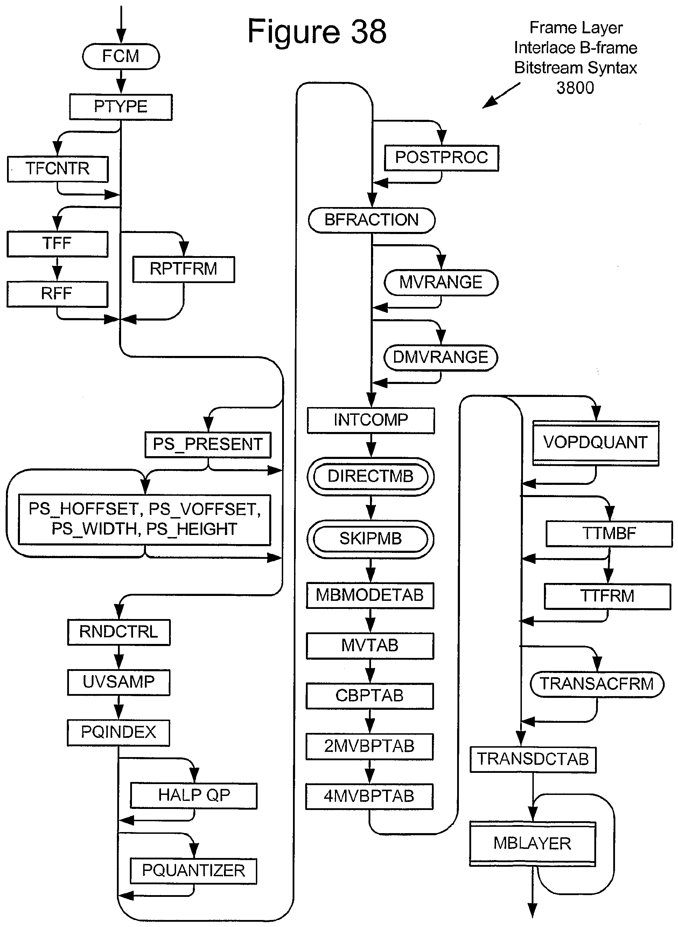

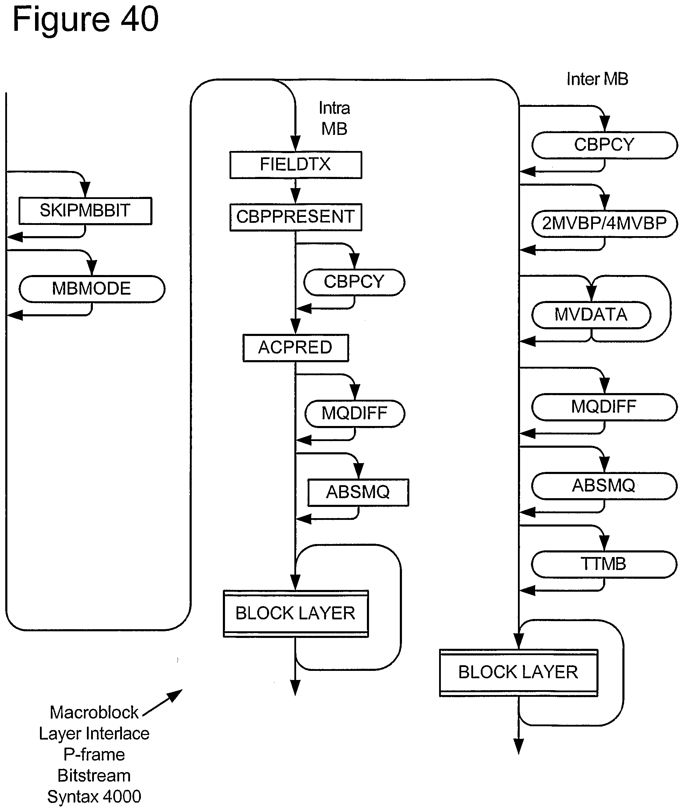

For interlaced P-frames and B-frames, frame-level bitstream elements are shown in Figures 37 and 38, respectively. Data for each frame consists of a frame header followed by data for the macroblock layer (whether for intra or various inter type macroblocks). The bitstream elements that make up the macroblock layer for interlaced P-frames (whether for intra or various inter type macroblocks) are shown in Figure 40. Bitstream elements in the macroblock layer for interlaced P-frames may be present for macroblocks in other interlaced pictures (e.g., interlaced B-frames, interlaced P-fields, interlaced B-fields, etc.)

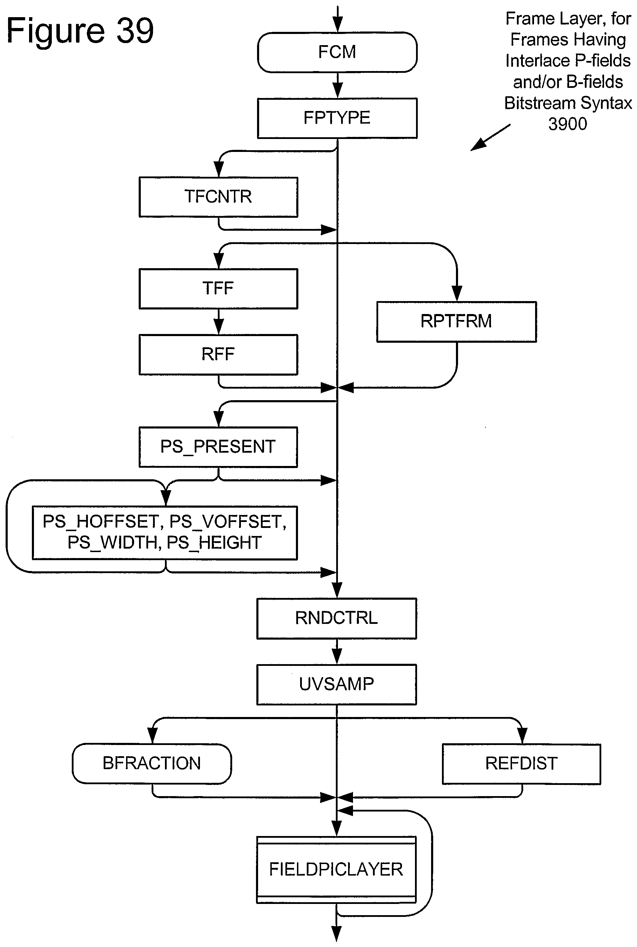

For interlaced video frames with interlaced P-fields and/or B-fields, frame-level bitstream elements are shown in Figure 39. Data for each frame consists of a frame header followed by data for the field layers (shown as the repeated "FieldPicLayer" element per field) and data for the macroblock layers (whether for intra, 1MV, or 4MV macroblocks).

The following sections describe selected bitstream elements in the frame and macroblock layers that are related to signaling for interlaced pictures. Although the selected bitstream elements are described in the context of a particular layer, some bitstream elements can be used in more than one layer.

### 1. Selected Entry Point Layer Elements

### Loop Filter (LOOPFIL TER) (1 bit)

LOOPFILTER is a Boolean flag that indicates whether loop filtering is enabled for the entry point segment. If LOOPFILTER = 0, then loop filtering is not enabled. If LOOPFILTER = 1, then loop filtering is enabled. In an alternative combined implementation, LOOPFILTER is a sequence level element.

### Extended Motion Vectors (EXTENDED_MV) (1 bit)

EXTENDED_MV is a 1-bit syntax element that indicates whether extended motion vectors is turned on (value 1) or off (value 0). EXTENDED_MV indicates the possibility of extended motion vectors (signaled at frame level with the syntax element MVRANGE) in P-frames and B-frames.

### Extended Differential Motion Vector Range (EXTENDED_DMV)(1 bit)

EXTENDED_DMV is a 1-bit syntax element that is present if EXTENDED_MV = 1. If EXTENDED_DMV is 1, extended differential motion vector range (DMVRANGE) shall be signaled at frame layer for the P-frames and B-frames within the entry point segment. If EXTENDED_DMV is 0, DMVRANGE shall not be signaled.

### FAST UV Motion Comp (FASTUVMC) (1 bit)

FASTUVMC is a Boolean flag that controls the sub-pixel interpolation and rounding of chroma motion vectors. If FASTUVMC = 1, the chroma motion vectors that are at quarter-pel offsets will be rounded to the nearest half or full-pel positions. If FASTUVMC = 0, no special rounding or filtering is done for chroma. The FASTUVMC syntax element is ignored in interlaced P-frames and interlaced B-frames.

### Variable Sized Transform (VSTRANSFORM) (1 bit)

VSTRANSFORM is a Boolean flag that indicates whether variable-sized transform coding is enabled for the sequence. If VSTRANSFORM = 0, then variable-sized transform coding is not enabled. If VSTRANSFORM = 1, then variable-sized transform coding is enabled.

### 2. Selected Frame Layer Elements

Figures 37 and 38 are diagrams showing frame-level bitstream syntaxes for interlaced P-frames and interlaced B-frames, respectively. Figure 39 is a diagram showing a frame-layer bitstream syntax for frames containing interlaced P-fields, and/or B-fields (or potentially other kinds of interlaced fields). Specific bitstream elements are described below.

### Frame Coding Mode (FCM) (Variable size)

FCM is a variable length codeword ["VLC"] used to indicate the picture coding type. FCM takes on values for frame coding modes as shown in Table 9 below:

**Table 9: Frame Coding Mode VLC**

| **FCM value** | **Frame Coding Mode** |
|---|---|
| 0 | Progressive |
| 10 | Frame-Interlace |
| 11 | Field-Interlace |

### Field Picture Type (FPTYPE) (3 bits)

FPTYPE is a three-bit syntax element present in the frame header for a frame including interlaced P-fields and/or interlaced B-fields, and potentially other kinds of fields. FPTYPE takes on values for different combinations of field types in the interlaced video frame, according to Table 10 below.

**Table 10: Field Picture Type FLC**

| **FPTYPE FLC** | **First Field Type** | **Second Field Type** |
|---|---|---|
| 000 | I | I |
| 001 | I | P |
| 010 | P | I |
| 011 | P | P |
| 100 | B | B |
| 101 | B | BI |
| 110 | BI | B |
| 111 | BI | BI |

### Picture Type (PTYPE) (variable size)

PTYPE is a variable size syntax element present in the frame header for interlaced P-frames and interlaced B-frames (or other kinds of interlaced frames such as interlaced I-frames). PTYPE takes on values for different frame types according to Table 11 below.

**Table 11: Picture Type VLC**

| **PTYPE VLC** | **Picture Type** |
|---|---|
| 110 | I |
| 0 | P |
| 10 | B |
| 1110 | BI |
| 1111 | Skipped |

If PTYPE indicates that the frame is skipped then the frame is treated as a P-frame which is identical to its reference frame. The reconstruction of the skipped frame is equivalent conceptually to copying the reference frame. A skipped frame means that no further data is transmitted for this frame.

### UV Sampling Format (UVSAMP) (1 bit)

UVSAMP is a 1-bit syntax element that is present when the sequence-level field INTERLACE = 1. UVSAMP indicates the type of chroma subsampling used for the current frame. If UVSAMP = 1, then progressive subsampling of the chroma is used, otherwise, interlace subsampling of the chroma is used. This syntax element does not affect decoding of the bitstream.

### Extended MV Range (MVRANGE) (Variable size)

MVRANGE is a variable-sized syntax element present when the entry-point-layer EXTENDED_MV bit is set to 1. The MVRANGE VLC represents a motion vector range.

### Extended Differential MV Range (DMVRANGE) (Variable size)

DMVRANGE is a variable-sized syntax element present if the entry-point-layer syntax element EXTENDED_DMV = 1. The DMVRANGE VLC represents a motion vector differential range.

### 4 Motion Vector Switch (4MVSWITCH) (Variable size or 1 bit)

For interlaced P-frames, the 4MVSWITCH syntax element is a 1-bit flag. If 4MVSWITCH is set to zero, the macroblocks in the picture have only one motion vector or two motion vectors, depending on whether the macroblock has been frame-coded or field-coded, respectively. If 4MVSWITCH is set to 1, there may be one, two or four motion vectors per macroblock.

### Skipped Macroblock Decoding (SKIPMB) (Variable size)

For interlaced P-frames, the SKIPMB syntax element is a compressed bitplane containing information that indicates the skipped/not-skipped status of each macroblock in the picture. The decoded bitplane represents the skipped/not-skipped status for each macroblock with 1-bit values. A value of 0 indicates that the macroblock is not skipped. A value of 1 indicates that the macroblock is coded as skipped. A skipped status for a macroblock in interlaced P-frames means that the decoder treats the macroblock as 1MV with a motion vector differential of zero and a coded block pattern of zero. No other information is expected to follow for a skipped macroblock.

### Macroblock Mode Table (MBMODETAB) (2 or 3 bits)

The MBMODETAB syntax element is a fixed-length field. For interlaced P-frames, MBMODETAB is a 2-bit value that indicates which one of four code tables is used to decode the macroblock mode syntax element (MBMODE) in the macroblock layer. There are two sets of four code tables and the set that is being used depends on whether 4MV is used or not, as indicated by the 4MVSWITCH flag.

### Motion Vector Table (MVTAB) (2 or 3 bits)

The MVTAB syntax element is a fixed length field. For interlaced P-frames, MVTAB is a 2-bit syntax element that indicates which of the four progressive (or, one-reference) motion vector code tables are used to code the MVDATA syntax element in the macroblock layer.

### 2MV Block Pattern Table (2MVBPTAB) (2 bits)

The 2MVBPTAB syntax element is a 2-bit value that signals which of four code tables is used to decode the 2MV block pattern (2MVBP) syntax element in 2 Field MV macroblocks.

### 4MV Block Pattern Table (4MVBPTAB) (2 bits)

The 4MVBPTAB syntax element is a 2-bit value that signals which of four code tables is used to decode the 4MV block pattern (4MVBP) syntax element in 4MV macroblocks. For interlaced P-frames, it is present if the 4MVSWITCH syntax element is set to 1.

### Macroblock-level Transform Type Flag (TTMBF) (1 bit).

This syntax element is present in P-frames and B-frames if the sequence-level syntax element VSTRANSFORM = 1. TTMBF is a one-bit syntax element that signals whether transform type coding is enabled at the frame or macroblock level. If TTMBF = 1, the same transform type is used for all blocks in the frame. In this case, the transform type is signaled in the Frame-level Transform Type (TTFRM) syntax element that follows. If TTMBF = 0, the transform type may vary throughout the frame and is signaled at the macroblock or block levels.

### Frame-level Transform Type (TTFRM) (2 bits)

This syntax element is present in P-frames and B-frames if VSTRANSFORM = 1 and TTMBF = 1. TTFRM signals the transform type used to transform the 8x8 pixel error signal in predicted blocks. The 8x8 error blocks may be transformed using an 8x8 transform, two 8x4 transforms, two 4x8 transforms or four 4x4 transforms.

### 3. Selected Macroblock Layer Elements

Figure 40 is a diagram showing a macroblock-level bitstream syntax for macroblocks interlaced P-frames in the combined implementation. Specific bitstream elements are described below. Data for a macroblock consists of a macroblock header followed by block layer data. Bitstream elements in the macroblock layer for interlaced P-frames (e.g., SKIPMBBIT) may potentially be present for macroblocks in other interlaced pictures (e.g., interlaced B-frames, etc.)

### Skip MB Bit (SKIPMBBIT) (1 bit)

SKIPMBBIT is a 1-bit syntax element present in interlaced P-frame macroblocks and interlaced B-frame macroblocks if the frame-level syntax element SKIPMB indicates that raw mode is used. If SKIPMBBIT = 1, the macroblock is skipped. SKIPMBBIT also may be labeled as SKIPMB at the macroblock level.

### Macroblock Mode (MBMODE) (Variable size).

MBMODE is a variable-size syntax element that jointly specifies macroblock type (e.g., 1MV, 2 Field MV, 4 Field MV, 4 Frame MV or Intra), field/frame coding type (e.g., field, frame, or no coded blocks), and the presence of differential motion vector data for 1MV macroblocks. MBMODE is explained in detail below and in Section V above.

### 2MV Block Pattern (2MVBP) (Variable size)

2MVBP is a variable-sized syntax element present in interlaced P-frame and interlaced B-frame macroblocks. In interlaced P-frame macroblocks, 2MVBP is present if MBMODE indicates that the macroblock has two field motion vectors. In this case, 2MVBP indicates which of the two luma blocks contain non-zero motion vector differentials.

### 4MV Block Pattern (4MVBP) (Variable size)

4MVBP is a variable-sized syntax element present in interlaced P-field, interlaced B-field, interlaced P-frame and interlaced B-frame macroblocks. In interlaced P-frame, 4MVBP is present if MBMODE indicates that the macroblock has four motion vectors. In this case, 4MVBP indicates which of the four luma blocks contain non-zero motion vector differentials.

### Field Transform Flag (FIELDTX) (1 bit)

FIELDTX is a 1-bit syntax present in interlaced B-frame intra-coded macroblocks. This syntax element indicates whether a macroblock is frame or field coded (basically, the internal organization of the macroblock). FIELDTX = 1 indicates that the macroblock is field-coded. Otherwise, the macroblock is frame-coded. In inter-coded macroblocks, this syntax element can be inferred from MBMODE as explained in detail below and in Section V above.

### CBP Present Flag (CBPPRESENT) (1 bit)

CBPPRESENT is a 1-bit syntax present in intra-coded macroblocks in interlaced P-frames and interlaced B-frames. If CBPPRESENT is 1, the CBPCY syntax element is present for that macroblock and is decoded. If CBPPRESENT is 0, the CBPCY syntax element is not present and shall be set to zero.

### Coded Block Pattern (CBPCY) (Variable size).

CBPCY is a variable-length syntax element indicates the transform coefficient status for each block in the macroblock. CBPCY decodes to a 6-bit field which indicates whether coefficients are present for the corresponding block. For intra-coded macroblocks, a value of 0 in a particular bit position indicates that the corresponding block does not contain any non-zero AC coefficients. A value of 1 indicates that at least one non-zero AC coefficient is present. The DC coefficient is still present for each block in all cases. For inter-coded macroblocks, a value of 0 in a particular bit position indicates that the corresponding block does not contain any non-zero coefficients. A value of 1 indicates that at least one non-zero coefficient is present. For cases where the bit is 0, no data is encoded for that block.

### Motion Vector Data (MVDATA) (Variable size)

MVDATA is a variable sized syntax element that encodes differentials for the motion vector(s) for the macroblock, the decoding of which is described in detail in below.

### MB-level Transform Type (TTMB) (Variable size)

TTMB is a variable-size syntax element in P-picture and B-picture macroblocks when the picture layer syntax element TTMBF = 0. TTMB specifies a transform type, transform type signal level, and subblock pattern.

### B. Decoding Interlaced P-frames

A process for decoding interlaced P-frames in a combined implementation is described below.

### 1. Macroblock Layer Decoding of Interlaced P-frames

In an interlaced P-frame, each macroblock may be motion compensated in frame mode using one or four motion vectors or in field mode using two or four motion vectors. A macroblock that is inter-coded does not contain any intra blocks. In addition, the residual after motion compensation may be coded in frame transform mode or field transform mode. More specifically, the luma component of the residual is re-arranged according to fields if it is coded in field transform mode but remains unchanged in frame transform mode, while the chroma component remains the same. A macroblock may also be coded as intra.

Motion compensation may be restricted to not include four (both field/frame) motion vectors, and this is signaled through 4MVSWITCH. The type of motion compensation and residual coding is jointly indicated for each macroblock through MBMODE and SKIPMB. MBMODE employs a different set of tables according to 4MVSWITCH.

Macroblocks in interlaced P-frames are classified into five types: 1 MV, 2 Field MV, 4 Frame MV, 4 Field MV, and Intra. These five types are described in further detail above in Section III. The first four types of macroblock are inter-coded while the last type indicates that the macroblock is intra-coded. The macroblock type is signaled by the MBMODE syntax element in the macroblock layer along with the skip bit. (A skip condition for the macroblock also can be signaled at frame level in a compressed bit plane.) MBMODE jointly encodes macroblock types along with various pieces of information regarding the macroblock for different types of macroblock.

### Skipped Macroblock Signaling

The macroblock-level SKIPMBBIT field indicates the skip condition for a macroblock. (Additional detail regarding skip conditions and corresponding signaling is provided in Section V, above.) If the SKIPMBBIT field is 1, then the current macroblock is said to be skipped and there is no other information sent after the SKIPMBBIT field. (At frame level, the SKIPMB field indicates the presence of SKIPMBBIT at macroblock level (in raw mode) or stores skip information in a compressed bit plane. The decoded bitplane contains one bit per macroblock and indicates the skip condition for each respective macroblock.) The skip condition implies that the current macroblock is 1MV with zero differential motion vector (i.e. the macroblock is motion compensated using its 1MV motion predictor) and there are no coded blocks (CBP = 0). In an alternative combined implementation, the residual is assumed to be frame-coded for loop filtering purposes.

On the other hand, if the SKIPMB field is not 1, the MBMODE field is decoded to indicate the type of macroblock and other information regarding the current macroblock, such as information described in the following section.

### Macroblock Mode Signaling

MBMODE jointly specifies the type of macroblock (1MV, 4 Frame MV, 2 Field MV, 4 Field MV, or intra), types of transform for inter-coded macroblock (i.e. field or frame or no coded blocks), and whether there is a differential motion vector for a 1MV macroblock. (Additional detail regarding signaling of macroblock information is provided in Section V, above.) MBMODE can take one of 15 possible values:
Let <MVP> denote the signaling of whether a nonzero 1MV differential motion vector is present or absent. Let <Field/Frame transform> denote the signaling of whether the residual of the macroblock is (1) frame transform coded; (2) field transform coded; or (3) zero coded blocks (i.e. CBP = 0). MBMODE signals the following information jointly:
MBMODE = { <1MV, MVP, Field/Frame transform>, <2 Field MV, Field/Frame transform>, <4 Frame MV, Field/Frame transform>, <4 Field MV, Field/Frame transform>, <INTRA>};

The case <1MV, MVP=0, CBP=0>, is not signaled by MBMODE, but is signaled by the skip condition.

For inter-coded macroblocks, the CBPCY syntax element is not decoded when <Field/frame Transform> in MBMODE indicates no coded blocks. On the other hand, if <Field/frame Transform> in MBMODE indicates field or frame transform, then CBPCY is decoded. The decoded <Field/frame Transform> is used to set the flag FIELDTX. If it indicates that the macroblock is field transform coded, FIELDTX is set to 1. If it indicates that the macroblock is frame transform coded, FIELDTX is set to 0. If it indicates a zero-coded block, FIELDTX is set to the same type as the motion vector, i.e., FIELDTX is set to 1 if it is a field motion vector and to 0 if it is a frame motion vector.

For non-1MV inter-coded macroblocks, an additional field is sent to indicate which of the differential motion vectors is non-zero. In the case of 2 Field MV macroblocks, the 2MVBP field is sent to indicate which of the two motion vectors contain nonzero differential motion vectors. Similarly, the 4MVBP field is sent to indicate which of the four motion vectors contain nonzero differential motion vectors.

For intra-coded macroblocks, the Field/Frame transform and zero coded blocks are coded in separate fields.

### 2. Motion Vector Decoding for Interlaced P-frames

### Motion Vector Predictors for Interlaced P-frames

The process of computing the motion vector predictor(s) for the current macroblock consists of two steps. First, three candidate motion vectors for the current macroblock are gathered from its neighboring macroblocks. Second, the motion vector predictor(s) for the current macroblock is computed from the set of candidate motion vectors. Figures 26A-26B show neighboring macroblocks from which the candidate motion vectors are gathered. The order of the collection of candidate motion vectors is important. In this combined implementation, the order of collection always starts at A, proceeds to B, and ends at C. A predictor candidate is considered to be non-existent if the corresponding block is outside the frame boundary or if the corresponding block is part of a different slice. Thus, motion vector prediction is not performed across slice boundaries.

The following sections describe how the candidate motion vectors are collected for different types of macroblocks and how the motion vector predictors are computed.

### 1MV Candidate Motion Vectors

In this combined implementation, the pseudo-code 4100 in Figure 41 is used to collect the up to three candidate motion vectors for the motion vector.

### 4 Frame MV Candidate Motion Vectors

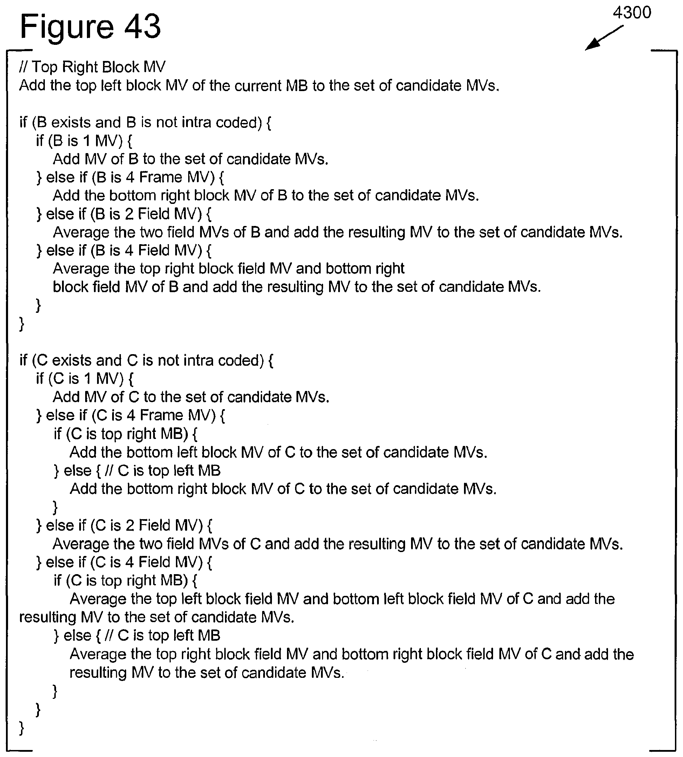

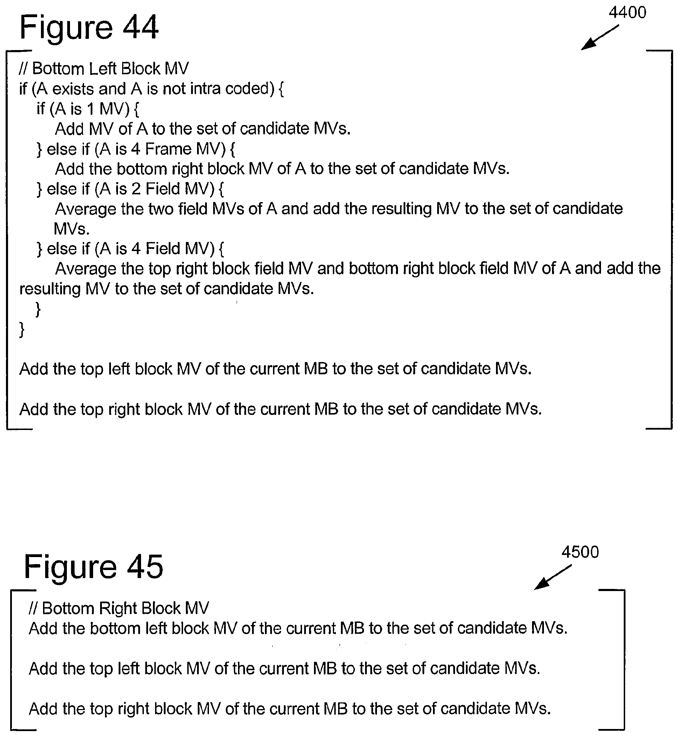

For 4 Frame MV macroblocks, for each of the four frame block motion vectors in the current macroblock, the candidate motion vectors from the neighboring blocks are collected. In this combined implementation, the pseudo-code 4200 in Figure 42 is used to collect the up to three candidate motion vectors for the top left frame block motion vector. The pseudo-code 4300 in Figure 43 is used to collect the up to three candidate motion vectors for the top right frame block motion vector. The pseudo-code 4400 in Figure 44 is used to collect the up to three candidate motion vectors for the bottom left frame block motion vector. The pseudo-code 4500 in Figure 45 is used to collect the up to three candidate motion vectors for the bottom right frame block motion vector.

### 2 Field MV Candidate Motion Vectors

For 2 Field MV macroblocks, for each of the two field motion vectors in the current macroblock, the candidate motion vectors from the neighboring blocks are collected. The pseudo-code 4600 in Figure 46 is used to collect the up to three candidate motion vectors for the top field motion vector. The pseudo-code 4700 in Figure 47 is used to collect the up to three candidate motion vectors for the bottom field motion vector.

### 4 Field MV Candidate Motion Vectors

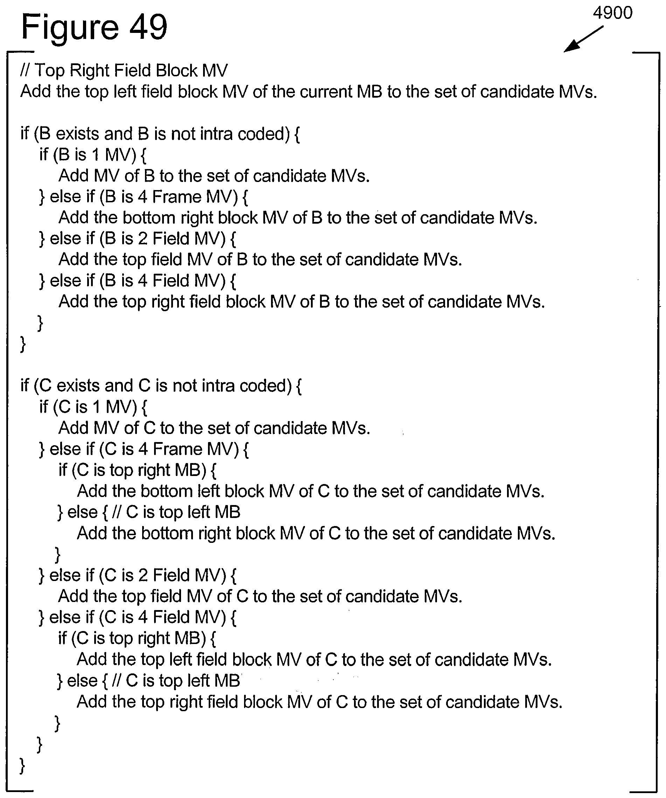

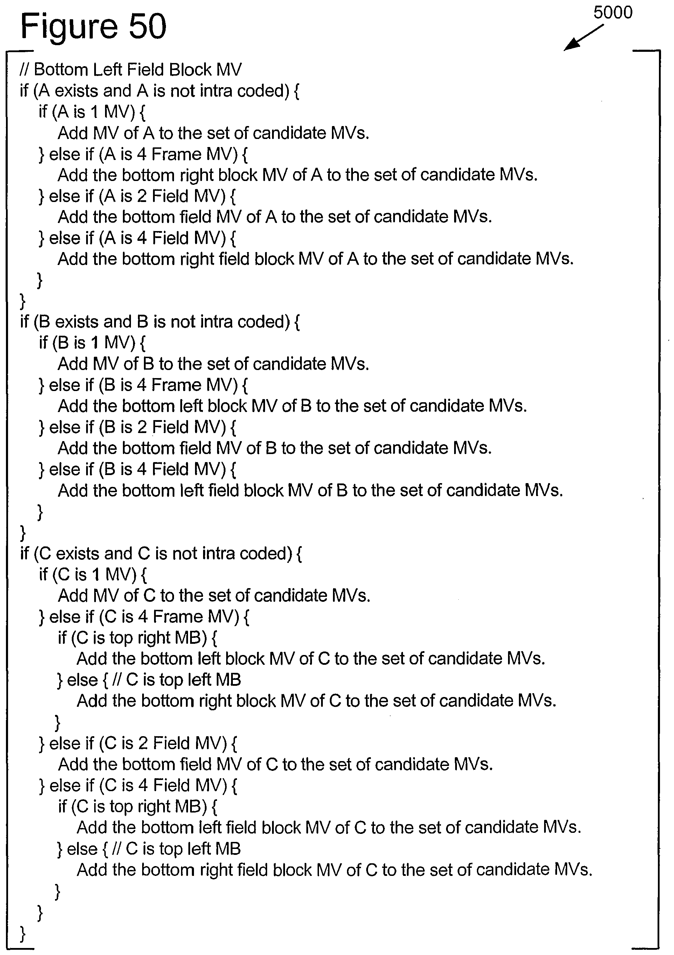

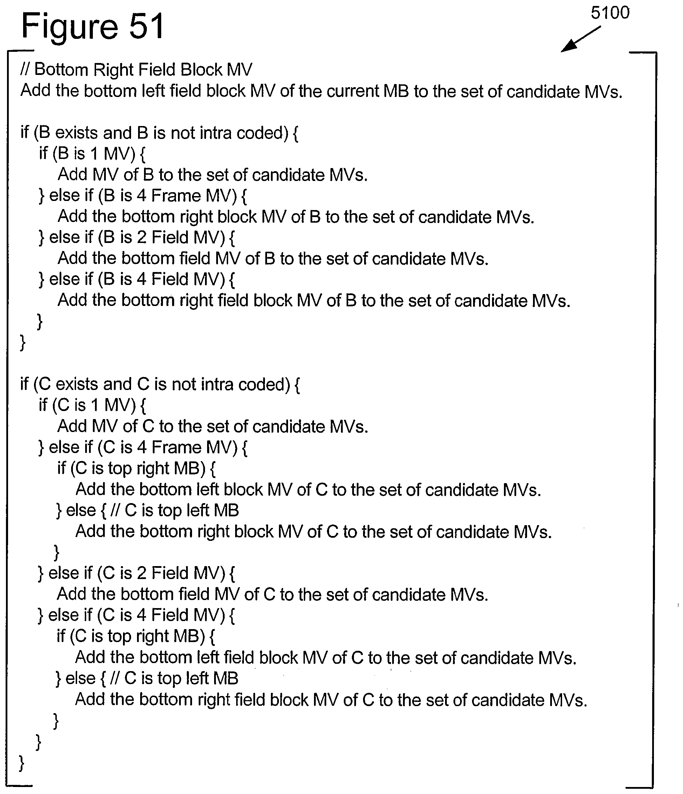

For 4 Field MV macroblocks, for each of the four field blocks in the current macroblock, the candidate motion vectors from the neighboring blocks are collected. The pseudo-code 4800 in Figure 48 is used to collect the up to three candidate motion vectors for the top left field block motion vector. The pseudo-code 4900 in Figure 49 is used to collect the up to three candidate motion vectors for the top right field block motion vector. The pseudo-code 5000 in Figure 50 is used to collect the up to three candidate motion vectors for the bottom left field block motion vector. The pseudo-code 5100 in Figure 51 is used to collect the up to three candidate motion vectors for the bottom right field block motion vector.

### Average Field Motion Vectors

Given two field motion vectors (MVX₁, MVY₁) and (MVX₂, MVY₂), the average operation used to form a candidate motion vector (MVX_{A}, MVY_{A}) is: ${MVX}_{A} = \left({MVX}_{1}+{MVX}_{2}+1\right) > > 1 ;$ ${MVY}_{A} = \left({MVY}_{1}+{MVY}_{2}+1\right) > > 1 ;$

### Computing Frame MV Predictors from Candidate Motion Vectors

This section describes how motion vector predictors are calculated for frame motion vectors given a set of candidate motion vectors. In this combined implementation, the operation is the same for computing the predictor for 1MV or for each one of the four frame block motion vectors in 4 Frame MV macroblocks.

The pseudo-code 5200 in Figure 52 describes how the motion vector predictor (PMVₓ, PMV_{y}) is computed for frame motion vectors. In the pseudo-code 5200, TotalValidMV denotes the total number of motion vectors in the set of candidate motion vectors (TotalValidMV = 0, 1, 2, or 3), and the ValidMV array denotes the motion vector in the set of candidate motion vectors.

### Computing Field MV Predictors from Candidate Motion Vectors

This section describes how motion vector predictors are computed for field motion vectors given the set of candidate motion vectors in a combined implementation. In this combined implementation, the operation is the same for computing the predictor for each of the two field motion vectors in 2 Field MV macroblocks or for each of the four field block motion vectors in 4 Field MV macroblocks.

First, the candidate motion vectors are separated into two sets, where one set contains only candidate motion vectors that point to the same field as the current field and the other set contains candidate motion vectors that point to the opposite field. Assuming that the candidate motion vectors are represented in quarter pixel units, the following check on its y-component verifies whether a candidate motion vector points to the same field:

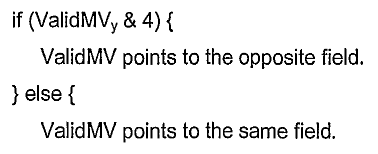

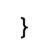

The pseudo-code 5300 in Figure 53 describes how the motion vector predictor (PMVₓ, PMV_{y}) is computed for field motion vectors. In the pseudo-code 5300, SameFieldMV and OppFieldMV denote the two sets of candidate motion vectors and NumSameFieldMV and NumOppFieldMV denote the number of candidate motion vectors that belong to each set. The order of candidate motion vectors in each set starts with candidate A if it exists, followed by candidate B if it exists, and then candidate C if it exists. For example, if the set SameFieldMV contains only candidate B and candidate C, then SameFieldMV[0] is candidate B.

### Decoding Motion Vector Differentials

The MVDATA syntax elements contain motion vector differential information for the macroblock. Depending on the type of motion compensation and motion vector block pattern signaled at each macroblock, there may be from zero to four MVDATA syntax elements per macroblock. More specifically,
- For 1MV macroblocks, there may be either zero or one MVDATA syntax element present depending on the MVP field in MBMODE.
- For 2 Field MV macroblocks, there may be either zero, one, or two MVDATA syntax element(s) present depending on 2MVBP.
- For 4 Frame / Field MV macroblocks, there may be either zero, one, two, three, or four MVDATA syntax element(s) present depending on 4MVBP.

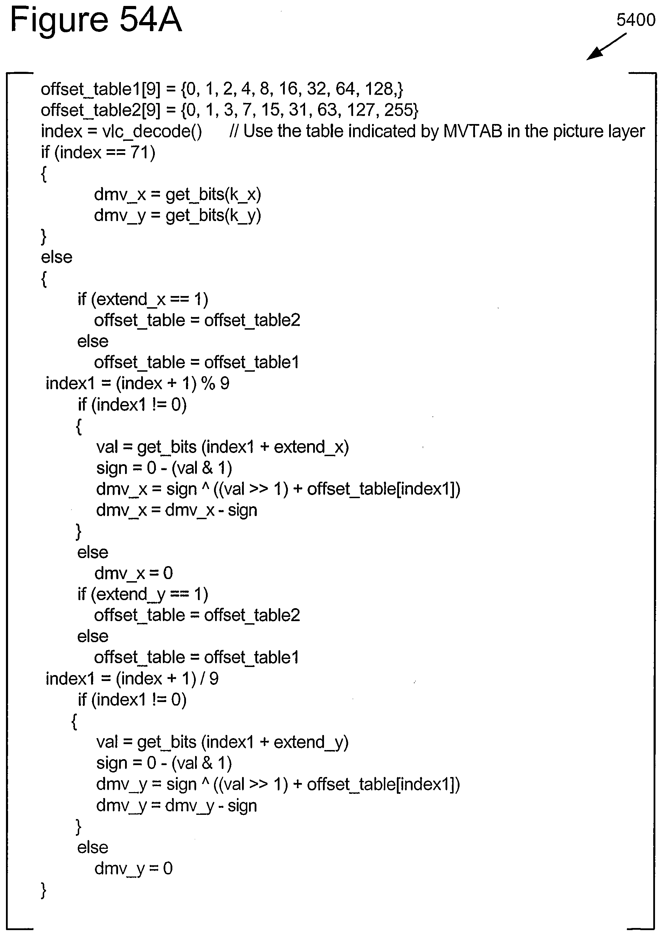

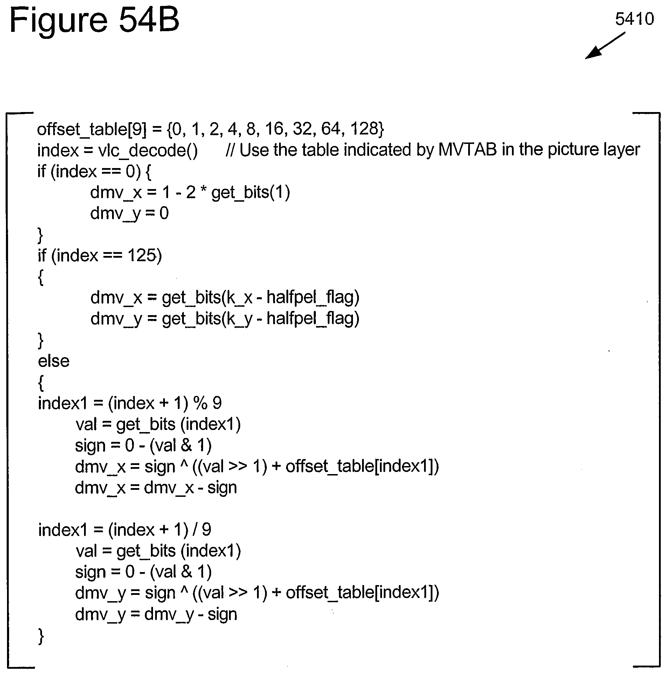

In this combined implementation, the motion vector differential is decoded in the same way as a one reference field motion vector differential for interlaced P-fields, without a half-pel mode. (The pseudo-code 5400 in Figure 54A illustrates how the motion vector differential is decoded for a one-reference field. The pseudo-code 5410 in Figure 54B illustrates how the motion vector differential is decoded for a one-reference field in an alternative combined implementation. Pseudo-code 5410 decodes motion vector differentials in a different way. For example, pseudo-code 5410 omits handling of extended motion vector differential ranges.)

### Reconstructing Motion Vectors

Given the motion vector differential dmv, the luma motion vector is reconstructed by adding the differential to the predictor as follows: $mv _ x = \left(dmv_x+predictor_x\right) smod range _ x$ $mv _ y = \left(dmv_y+predictor_y\right) smod range _ y$

The smod operation ensures that the reconstructed vectors are valid. (A smod b) lies within -b and b - 1. range_x and range_y depend on MVRANGE.

Given a luma frame or field motion vector, a corresponding chroma frame or field motion vector is derived to compensate a portion (or potentially all) of the chroma (C_{b}/Cᵣ) block. The FASTUVMC syntax element is ignored in interlaced P-frames and interlaced B-frames. The pseudo-code 3400 in Figure 34 describes how a chroma motion vector CMV is derived from a luma motion vector LMV in interlace P-frames.

### C. Bitplane Coding

Macroblock-specific binary information such as skip bits may be encoded in one binary symbol per macroblock. For example, whether or not a macroblock is skipped may be signaled with one bit. In these cases, the status for all macroblocks in a field or frame may be coded as a bitplane and transmitted in the field or frame header. One exception for this rule is if the bitplane coding mode is set to Raw Mode, in which case the status for each macroblock is coded as one bit per symbol and transmitted along with other macroblock level syntax elements at the macroblock level.

Field/frame-level bitplane coding is used to encode two-dimensional binary arrays. The size of each array is *rowMB* × *colMB*, where *rowMB* and *colMB* are the number of macroblock rows and columns, respectively, in the field or frame in question. Within the bitstream, each array is coded as a set of consecutive bits. One of seven modes is used to encode each array. The seven modes are:
1. raw mode - information coded as one bit per symbol and transmitted as part of MB level syntax;
2. normal-2 mode - two symbols coded jointly;
3. differential-2 mode - differential coding of the bitplane, followed by coding two residual symbols jointly;
4. normal-6 mode - six symbols coded jointly;
5. differential-6 mode - differential coding of the bitplane, followed by coding six residual symbols jointly;
6. rowskip mode - one bit skip to signal rows with no set bits; and
7. columnskip mode - one bit skip to signal columns with no set bits.

The syntax elements for a bitplane at the field or frame level are in the following sequence: INVERT, IMODE, and DATABITS.

### Invert Flag (INVERT)

The INVERT syntax element is a 1-bit value, which if set indicates that the bitplane has more set bits than zero bits. Depending on INVERT and the mode, the decoder shall invert the interpreted bitplane to recreate the original. Note that the value of this bit shall be ignored when the raw mode is used. Description of how the INVERT value is used in decoding the bitplane is provided below.

### Coding Mode (IMODE)

The IMODE syntax element is a variable length value that indicates the coding mode used to encode the bitplane. Table 12 shows the code table used to encode the IMODE syntax element. Description of how the IMODE value is used in decoding the bitplane is provided below.

**Table 12: IMODE VLC Codetable**

| **IMODE VLC** | **Coding mode** |
|---|---|
| 10 | Norm-2 |
| 11 | Norm-6 |
| 010 | Rowskip |
| 011 | Colskip |
| 001 | Diff-2 |
| 0001 | Diff-6 |
| 0000 | Raw |

### Bitplane Coding Bits (DATABITS)

The DATABITS syntax element is variable sized syntax element that encodes the stream of symbols for the bitplane. The method used to encode the bitplane is determined by the value of IMODE. The seven coding modes are described in the following sections.

### Raw mode

In this mode, the bitplane is encoded as one bit per symbol scanned in the raster-scan order of macroblocks, and sent as part of the macroblock layer. Alternatively, the information is coded in raw mode at the field or frame level and DATABITS is rowMB × coIMB bits in length.

### Normal-2 mode

If rowMB × coIMB is odd, the first symbol is encoded raw. Subsequent symbols are encoded pairwise, in natural scan order. The binary VLC table in Table 13 is used to encode symbol pairs.

**Table 13: Norm-2/Diff-2 Code Table**

| **Symbol 2n** | **Symbol 2n + 1** | **Codeword** |
|---|---|---|
| 0 | 0 | 0 |
| 1 | 0 | 100 |
| 0 | 1 | 101 |
| 1 | 1 | 11 |

### Diff-2 mode

The Normal-2 method is used to produce the bitplane as described above, and then the Diff⁻¹ operation is applied to the bitplane as described below.

### Normal-6 mode

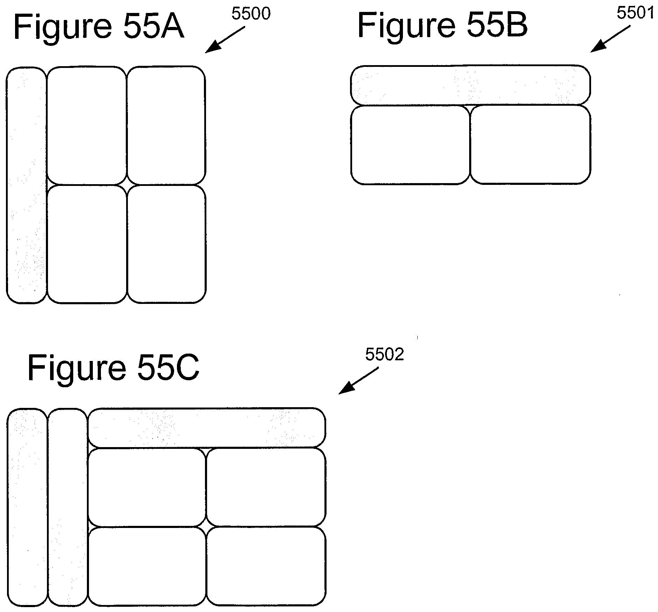

In the Norm-6 and Diff-6 modes, the bitplane is encoded in groups of six pixels. These pixels are grouped into either 2x3 or 3x2 tiles. The bitplane is tiled maximally using a set of rules, and the remaining pixels are encoded using a variant of row-skip and column-skip modes. 2x3 "vertical" tiles are used if and only if rowMB is a multiple of 3 and coIMB is not. Otherwise, 3x2 "horizontal" tiles are used. Figure 55A shows a simplified example of 2x3 "vertical" tiles. Figures 55B and 55C show simplified examples of 3x2 "horizontal" tiles for which the elongated dark rectangles are 1 pixel wide and encoded using row-skip and column-skip coding. For a plane tiled as shown in Figure 55C, with linear tiles along the top and left edges of the picture, the coding order of the tiles follows the following pattern. The 6-element tiles are encoded first, followed by the column-skip and row-skip encoded linear tiles. If the array size is a multiple of 2x3 or of 3x2, the latter linear tiles do not exist and the bitplane is perfectly tiled.

The 6-element rectangular tiles are encoded using an incomplete Huffman code, i.e., a Huffman code which does not use all end nodes for encoding. Let N be the number of set bits in the tile, i.e. 0 ≤N ≤6. For N < 3, a VLC is used to encode the tile. For N = 3, a fixed length escape is followed by a 5 bit fixed length code, and for N > 3, a fixed length escape is followed by the code of the complement of the tile.

The rectangular tile contains 6 bits of information. Let *k* be the code associated with the tile, where *k* = b*ᵢ* 2*ⁱ*, b*ᵢ* is the binary value of the *i*^{th} th bit in natural scan order within the tile. Hence 0 ≤*k* < 64. A combination of VLCs and escape codes please fixed length codes is used to signal *k.*

### Diff-6 mode

The Normal-6 method is used to produce the bitplane as described above, and then the Diff⁻¹ operation is applied to the bitplane as described below.

### Rowskip mode

In the rowskip coding mode, all-zero rows are skipped with one bit overhead. The syntax is as follows: for each row, a single ROWSKIP bit indicates if the row is skipped; if the row is skipped, the ROWSKIP bit for the next row is next; otherwise (the row is not skipped), ROWBITS bits (a bit for each macroblock in the row) are next. Thus, if the entire row is zero, a zero bit is sent as the ROWSKIP symbol, and ROWBITS is skipped. If there is a set bit in the row, ROWSKIP is set to 1, and the entire row is sent raw (ROWBITS). Rows are scanned from the top to the bottom of the field or frame.

### Columnskip mode

Columnskip is the transpose of rowskip. Columns are scanned from the left to the right of the field or frame.

### Diff⁻¹:: Inverse differential decoding

If either differential mode (Diff-2 or Diff-6) is used, a bitplane of "differential bits" is first decoded using the corresponding normal modes (Norm-2 or Norm-6 respectively). The differential bits are used to regenerate the original bitplane. The regeneration process is a 2-D DPCM on a binary alphabet. In order to regenerate the bit at location (i, j), the predictor b*ₚ*(i,j) is generated as follows (from bits b(i, j) at positions (i, j)): ${b}_{p} \left(i, j\right) = { \begin{matrix}A & i = j = 0 , or b \left(i,j-1\right) \neq b \left(i-1,j\right) \\ b \left(0,j-1\right) & i = = 0 \\ b \left(i-1,j\right) & otherwise\end{matrix}$

For the differential coding mode, the bitwise inversion process based on INVERT is not performed. However, the INVERT flag is used in a different capacity to indicate the value of the symbol A for the derivation of the predictor shown above. More specifically, A equal to 0 if INVERT equals to 0 and A equals to 1 if INVERT equals to 1. The actual value of the bitplane is obtained by xor'ing the predictor with the decoded differential bit value. In the above equation, b(i,j) is the bit at the i,jth position after final decoding (i.e. after doing Norm-2/Norm-6, followed by differential xor with its predictor).

Having described and illustrated the principles of our invention with reference to various embodiments, it will be recognized that the various embodiments can be modified in arrangement and detail without departing from such principles. It should be understood that the programs, processes, or methods described herein are not related or limited to any particular type of computing environment, unless indicated otherwise. Various types of general purpose or specialized computing environments may be used with or perform operations in accordance with the teachings described herein. Elements of embodiments shown in software may be implemented in hardware and vice versa.

In view of the many possible embodiments to which the principles of our invention may be applied, we claim as our invention all such embodiments as may come within the scope of the following claims.

## Claims

1. A method comprising:
computing a motion vector predictor for a current field motion vector for a current field of a current macroblock in an interlaced frame coded picture, said computing a motion vector predictor comprises:
determining a number of one, two or three valid candidate motion vectors for predicting a field motion vector for the current field of the current macroblock in the interlaced frame coded picture;
for each of the one, two or three valid candidate motion vectors, determining the field polarity of the reference frame referred to by the valid candidate motion vector;
calculating the motion vector predictor for the field motion vector based at least in part on the field polarities of the one, two or three valid candidate motion vectors, wherein
the calculating comprises:
determining the motion vector predictor depending on the number of valid candidate motion vectors, the number of same field candidate motion vectors and the number of opposite field candidate motion vectors, the same field candidate motion vectors referring to the same field relative to the polarity of the current field, the opposite field candidate motion vectors referring to the opposite field relative to the polarity of the current field, including, when the number of valid candidate motion vectors is three:
if the number of same field candidate motion vectors is three or the number of opposite field candidate motion vectors is three, computing a median of the valid candidate motion vectors,
otherwise, if the number of same field candidate motion vectors is greater than or equal to the number of opposite field candidate motion vectors, selecting one of the same field candidate motion vectors, and otherwise, selecting one of the opposite field candidate motion vectors; and
if the number of valid candidate motion vectors is less than three, the calculating comprises selecting one of the valid candidate motion vectors to use as the motion vector predictor without performing the median operation on the valid candidate motion vectors.

2. The method of claim 1, further comprising reconstructing the field motion vector based at least in part on the motion vector predictor and motion vector differential information.

3. The method of claim 2, wherein the motion vector differential information indicates that no motion vector differential is present for the field motion vector.

4. The method of claim 1, wherein the current macroblock is a two field motion vector macroblock.

5. The method of claim 1, wherein the current macroblock is a four field motion vector macroblock.

6. The method of claim 1, wherein at least one of the valid candidate motion vectors is a frame motion vector from a neighboring macroblock.

7. The method of claim 1, wherein at least one of the valid candidate motion vectors is a field motion vector from a neighboring macroblock.

8. The method of claim 1, further comprising calculating a predictor for one or more other field motion vectors for the current macroblock.

9. The method of claim 1, wherein the interlaced frame coded picture is an interlaced P-frame.

10. The method of claim 1, wherein the median operation is a component-wise median operation.

11. The method of claim 1, wherein each of the valid candidate motion vectors is **characterized by** being for a block, macroblock field, macroblock field portion, or macroblock within the interlaced frame coded picture.

12. The method of claim 1, wherein each of the valid candidate motion vectors is **characterized by** being for a block, macroblock field, macroblock field portion, or macroblock within the same slice as the current macroblock.

13. The method of claim 1, wherein each of the valid candidate motion vectors is **characterized by** being an actual motion vector value and not for an intra block, macroblock field, macroblock field portion, or macroblock.

14. The method of claim 1, further comprising:
receiving motion vector information for the macroblock in an interlaced frame-coded, forward-predicted picture, the motion vector information comprising information for four field motion vectors; and
processing the macroblock using the four field motion vectors;
wherein a first set of two of the four field motion vectors represents motion in a first field of the macroblock, and wherein a second set of two of the four field motion vectors represents motion in a second field of the macroblock.

15. The method of claim 14, wherein the information for the four field motion vectors includes motion vector differentials for the four field motion vectors.

16. A computer-readable medium having stored thereon computer-executable instructions for performing the method of any one of claims 1 to 15 in a video decoder.

17. A computer-readable medium having stored thereon computer-executable instructions for performing the method of any one of claims 1 to 15 in a video encoder.

18. A device that implements a video decoder, the device being adapted to perform a method comprising:
computing a motion vector predictor for a current field motion vector for a current field of a current macroblock in an interlaced frame coded picture, said computing a motion vector predictor comprises:
determining a number of one, two or three valid candidate motion vectors for predicting a field motion vector for the current field of the current macroblock in the interlaced frame coded picture;
for each of the one, two or three valid candidate motion vectors, determining the field polarity of the reference frame referred to by the valid candidate motion vector;
calculating the motion vector predictor for the field motion vector based at least in part on the field polarities of the one, two or three valid candidate motion vectors, wherein the calculating comprises:
determining the motion vector predictor depending on the number of valid candidate motion vectors, the number of same field candidate motion vectors and the number of opposite field candidate motion vectors, the same field candidate motion vectors referring to the same field relative to the polarity of the current field, the opposite field candidate motion vectors referring to the opposite field relative to the polarity of the current field, including, when the number of valid candidate motion vectors is three:
if the number of same field candidate motion vectors is three or the number of opposite field candidate motion vectors is three, computing a median of the valid candidate motion vectors,
otherwise, if the number of same field candidate motion vectors is greater than or equal to the number of opposite field candidate motion vectors, selecting one of the same field candidate motion vectors, and otherwise, selecting one of the opposite field candidate motion vectors; and
if the number of valid candidate motion vectors is less than three, the calculating comprises selecting one of the valid candidate motion vectors to use as the motion vector predictor without performing the median operation on the valid candidate motion vectors.

## Patentansprüche

1. Verfahren, umfassend:
Berechnen eines Bewegungsvektor-Prädiktors für einen aktuellen Vollbildbewegungsvektor für ein aktuelles Vollbild eines aktuellen Makroblocks in einem halbbildverschachtelten codierten Bild, wobei das Berechnen eines Bewegungsvektor-Prädiktors umfasst:
Bestimmen einer Anzahl von einem, zwei oder drei gültigen Kandidaten-Bewegungsvektoren zum Vorhersagen eines Vollbildbewegungsvektors für das aktuelle Vollbild des aktuellen Makroblocks in dem halbbildverschachtelten codierten Bild;
für jeden des einen, zwei oder drei gültigen Kandidaten-Bewegungsvektoren, Bestimmen der Vollbildpolarität des Referenz-Halbbildes, auf das sich der gültige Kandidaten-Bewegungsvektor bezieht;
Berechnen des Bewegungsvektor-Prädiktors für den Vollbildbewegungsvektor basierend wenigstens teilweise auf den Vollbildpolaritäten des einen, zwei oder drei gültigen Kandidaten-Bewegungsvektoren, wobei das Berechnen umfasst:
Bestimmen des Bewegungsvektor-Prädiktors in Abhängigkeit der Anzahl der gültigen Kandidaten-Bewegungsvektoren, der Anzahl der gleichen Vollbildkandidaten-Bewegungsvektoren und der Anzahl der entgegengesetzten Vollbildkandidaten-Bewegungsvektoren, wobei sich die gleichen Vollbildkandidaten-Bewegungsvektoren auf das gleiche Vollbild relativ zu der Polarität des aktuellen Vollbildes beziehen, wobei sich die entgegengesetzten Vollbildkandidaten-Bewegungsvektoren auf das entgegengesetzte Vollbild relativ zu der Polarität des aktuellen Vollbildes beziehen, einschließlich, wenn die Anzahl der gültigen Kandidaten-Bewegungsvektoren drei ist:
wenn die Anzahl der gleichen Vollbildkandidaten-Bewegungsvektoren drei ist oder die Anzahl der entgegengesetzten Vollbildkandidaten-Bewegungsvektoren drei ist, Berechnen eines Medians der gültigen Kandidaten-Bewegungsvektoren,
andernfalls, wenn die Anzahl der gleichen Vollbildkandidaten-Bewegungsvektoren größer oder gleich der Anzahl der entgegengesetzten Vollbildkandidaten-Bewegungsvektoren ist, Auswählen eines der gleichen Vollbildkandidaten-Bewegungsvektoren und andernfalls Auswählen eines der entgegengesetzten Vollbildkandidaten-Bewegungsvektoren; und
wenn die Anzahl der gültigen Kandidaten-Bewegungsvektoren kleiner als drei ist, die Berechnung das Auswählen eines der gültigen Kandidaten-Bewegungsvektoren umfasst, die als Bewegungsvektorprädiktor verwendet werden sollen, ohne die Medianoperation an den gültigen Kandidaten-Bewegungsvektoren auszuführen.

2. Verfahren nach Anspruch 1, weiterhin umfassend das Rekonstruieren des Vollbildbewegungsvektors basierend wenigstens teilweise auf dem Bewegungsvektorprädiktor und den Bewegungsvektor-Differentialinformationen.

3. Verfahren nach Anspruch 2, bei dem die Bewegungsvektor-Differentialinformationen anzeigen, dass für den Vollbildbewegungsvektor kein Bewegungsvektordifferential vorhanden ist.

4. Verfahren nach Anspruch 1, bei dem der aktuelle Makroblock ein Zwei-VollbildBewegungsvektor-Makroblock ist.

5. Verfahren nach Anspruch 1, bei dem der aktuelle Makroblock ein Vier-VollbildBewegungsvektor-Makroblock ist.

6. Verfahren nach Anspruch 1, bei dem wenigstens einer der gültigen Kandidaten-Bewegungsvektoren ein Halbbildbewegungsvektor von einem benachbarten Makroblock ist.

7. Verfahren nach Anspruch 1, bei dem wenigstens einer der gültigen Kandidaten-Bewegungsvektoren ein Vollbildbewegungsvektor von einem benachbarten Makroblock ist.

8. Verfahren nach Anspruch 1, weiterhin umfassend das Berechnen eines Prädiktors für einen oder mehrere andere Vollbildbewegungsvektoren für den aktuellen Makroblock.

9. Verfahren nach Anspruch 1, bei dem das halbbildverschachtelte Bild ein verschachteltes P-Halbbild ist.

10. Verfahren nach Anspruch 1, bei dem die Medianoperation eine komponentenweise Medianoperation ist.

11. Verfahren nach Anspruch 1, bei dem jeder der gültigen Kandidaten-Bewegungsvektoren **dadurch gekennzeichnet ist, dass** er für einen Block, ein Makroblockvollbild, einen Makroblockvollbildabschnitt oder einen Makroblock innerhalb des halbbildverschachtelten codierten Bildes bestimmt ist.

12. Verfahren nach Anspruch 1, bei dem jeder der gültigen Kandidaten-Bewegungsvektoren **dadurch gekennzeichnet ist, dass** er für einen Block, ein Makroblockvollbild, einen Makroblock-Vollbildabschnitt oder einen Makroblock innerhalb desselben Teilbildes wie der aktuelle Makroblock bestimmt ist.

13. Verfahren nach Anspruch 1, bei dem jeder der gültigen Kandidaten-Bewegungsvektoren **dadurch gekennzeichnet ist, dass** er ein tatsächlicher Bewegungsvektorwert ist und nicht für einen Intrablock, ein Makroblockvollbild, einen Makroblock-Vollbildabschnitt oder einen Makroblock bestimmt ist.

14. Verfahren nach Anspruch 1, weiterhin umfassend:
Empfangen von Bewegungsvektorinformationen für den Makroblock in einem halbbildverschachtelten codierten, vorwärts vorhergesagten Bild, wobei die Bewegungsvektorinformationen Informationen für vier Vollbildbewegungsvektoren umfassen; und
Verarbeiten des Makroblocks unter Verwendung der vier Vollbildbewegungsvektoren;
wobei ein erster Satz von zwei der vier Vollbildbewegungsvektoren eine Bewegung in einem ersten Vollbild des Makroblocks darstellt und ein zweiter Satz von zwei der vier Vollbildbewegungsvektoren eine Bewegung in einem zweiten Vollbild des Makroblocks darstellt.

15. Verfahren nach Anspruch 14, bei dem die Informationen für die vier Vollbildbewegungsvektoren Bewegungsvektordifferentiale für die vier Vollbildbewegungsvektoren umfassen.

16. Computerlesbares Medium, auf dem computerausführbare Anweisungen zum Ausführen des Verfahrens nach einem der Ansprüche 1 bis 15 in einem Videodecoder gespeichert sind.

17. Computerlesbares Medium, auf dem computerausführbare Anweisungen zum Ausführen des Verfahrens nach einem der Ansprüche 1 bis 15 in einem Videocodierer gespeichert sind.

18. Vorrichtung, die einen Videodecoder einsetzt, wobei die Vorrichtung dazu eingerichtet ist, ein Verfahren auszuführen, das umfasst:
Berechnen eines Bewegungsvektor-Prädiktors für einen aktuellen Vollbildbewegungsvektor für ein aktuelles Vollbild eines aktuellen Makroblocks in einem halbbildverschachtelten codierten Bild, wobei das Berechnen eines Bewegungsvektor-Prädiktors umfasst:
Bestimmen einer Anzahl von einem, zwei oder drei gültigen Kandidaten-Bewegungsvektoren zum Vorhersagen eines Vollbildbewegungsvektors für das aktuelle Vollbild des aktuellen Makroblocks in dem halbbildverschachtelten codierten Bild;
für jeden des einen, zwei oder drei gültigen Kandidaten-Bewegungsvektoren, Bestimmen der Vollbildpolarität des Referenz-Halbbildes, auf das sich der gültige Kandidaten-Bewegungsvektor bezieht;
Berechnen des Bewegungsvektor-Prädiktors für den Vollbildbewegungsvektor basierend wenigstens teilweise auf den Vollbildpolaritäten des einen, zwei oder drei gültigen Kandidaten-Bewegungsvektoren, wobei das Berechnen umfasst:
Bestimmen des Bewegungsvektor-Prädiktors in Abhängigkeit der Anzahl der gültigen Kandidaten-Bewegungsvektoren, der Anzahl der gleichen Vollbildkandidaten-Bewegungsvektoren und der Anzahl der entgegengesetzten Vollbildkandidaten-Bewegungsvektoren, wobei sich die gleichen Vollbildkandidaten-Bewegungsvektoren auf das gleiche Vollbild relativ zu der Polarität des aktuellen Vollbildes beziehen, wobei sich die entgegengesetzten Vollbildkandidaten-Bewegungsvektoren auf das entgegengesetzte Vollbild relativ zu der Polarität des aktuellen Vollbildes beziehen, einschließlich, wenn die Anzahl der gültigen Kandidaten-Bewegungsvektoren drei ist:
wenn die Anzahl der gleichen Vollbildkandidaten-Bewegungsvektoren drei ist oder die Anzahl der entgegengesetzten Vollbildkandidaten-Bewegungsvektoren drei ist, Berechnen eines Medians der gültigen Kandidaten-Bewegungsvektoren,
andernfalls, wenn die Anzahl der gleichen Vollbildkandidaten-Bewegungsvektoren größer oder gleich der Anzahl der entgegengesetzten Vollbildkandidaten-Bewegungsvektoren ist, Auswählen eines der gleichen Vollbildkandidaten-Bewegungsvektoren und andernfalls Auswählen eines der entgegengesetzten Vollbildkandidaten-Bewegungsvektoren; und
wenn die Anzahl der gültigen Kandidaten-Bewegungsvektoren kleiner als drei ist, die Berechnung das Auswählen eines der gültigen Kandidaten-Bewegungsvektoren umfasst, die als Bewegungsvektorprädiktor verwendet werden sollen, ohne die Medianoperation an den gültigen Kandidaten-Bewegungsvektoren auszuführen.

## Revendications

1. Procédé comprenant :
le calcul d'un prédicteur de vecteur de mouvement pour un vecteur de mouvement de champ actuel pour un champ actuel d'un macrobloc actuel dans une image codée à trame entrelacée, ledit calcul d'un prédicteur de vecteur de mouvement comprenant :
la détermination d'un nombre de un, deux ou trois vecteurs de mouvement candidats valides pour prédire un vecteur de mouvement de champ pour le champ actuel du macrobloc actuel dans l'image codée à trame entrelacée ;
pour chacun desdits un, deux ou trois vecteurs de mouvement candidats valides, la détermination de la polarité de champ de la trame de référence à laquelle se réfère le vecteur de mouvement candidat valide ;
le calcul du prédicteur de vecteur de mouvement pour le vecteur de mouvement de champ sur base au moins en partie des polarités de champ desdits un, deux ou trois vecteurs de mouvement candidats valides, dans lequel le calcul comprend :
la détermination du prédicteur de vecteur de mouvement en fonction du nombre de vecteurs de mouvement candidats valides, du nombre de vecteurs de mouvement candidats à champs identiques et du nombre de vecteurs de mouvement candidats à champs opposés, les vecteurs de mouvement candidats à champs identiques se référant au même champ par rapport à la polarité du champ actuel, les vecteurs de mouvement candidats à champs opposés se référant au champ opposé par rapport à la polarité du champ actuel, comprenant, quand le nombre de vecteurs de mouvement candidats valides est trois :
si le nombre de vecteurs de mouvement candidats à champs identiques est trois ou le nombre de vecteurs de mouvement candidats à champs opposés est trois, le calcul d'une médiane des vecteurs de mouvement candidats valides,
autrement, si le nombre de vecteurs de mouvement candidats à champs identiques est supérieur ou égal au nombre de vecteurs de mouvement candidats à champs opposés, la sélection d'un desdits vecteurs de mouvement candidats à champs identiques, et autrement, la sélection d'un desdits vecteurs de mouvement candidats à champs opposés ; et
si le nombre de vecteurs de mouvement candidats valides est inférieur à trois, le calcul comprend la sélection d'un des vecteurs de mouvement candidats valides pour l'utiliser comme prédicteur de vecteur de mouvement sans mettre en œuvre l'opération de médiane sur les vecteurs de mouvement candidats valides.

2. Procédé selon la revendication 1, comprenant en outre la reconstruction du vecteur de mouvement de champ sur base au moins en partie du prédicteur de vecteur de mouvement et d'information du différentiel de vecteur de mouvement.

3. Procédé selon la revendication 2, dans lequel l'information du différentiel de vecteur de mouvement indique qu'aucun différentiel de vecteur de mouvement n'est présent pour le vecteur de mouvement de champ.

4. Procédé selon la revendication 1, dans lequel le macrobloc actuel est un macrobloc à deux vecteurs de mouvement de champ.

5. Procédé selon la revendication 1, dans lequel le macrobloc actuel est un macrobloc à quatre vecteurs de mouvement de champ.

6. Procédé selon la revendication 1, dans lequel au moins un des vecteurs de mouvement candidats valides est un vecteur de mouvement de trame provenant d'un macrobloc voisin.

7. Procédé selon la revendication 1, dans lequel au moins un des vecteurs de mouvement candidats valides est un vecteur de mouvement de champ provenant d'un macrobloc voisin.

8. Procédé selon la revendication 1, comprenant en outre le calcul d'un prédicteur pour un ou plusieurs autres vecteurs de mouvement de champ pour le macrobloc actuel.

9. Procédé selon la revendication 1, dans lequel l'image codée à trame entrelacée est une trame P entrelacée.

10. Procédé selon la revendication 1, dans lequel l'opération de médiane est une opération de médiane par composant.

11. Procédé selon la revendication 1, dans lequel chacun des vecteurs de mouvement candidats valides est caractérisé comme correspondant à un bloc, un champ de macrobloc, une portion de champ de macrobloc ou un macrobloc dans l'image codée à trame entrelacée.

12. Procédé selon la revendication 1, dans lequel chacun des vecteurs de mouvement candidats valides est caractérisé comme correspondant à un bloc, un champ de macrobloc, une portion de champ de macrobloc ou un macrobloc dans la même tranche que le macrobloc actuel.

13. Procédé selon la revendication 1, dans lequel chacun des vecteurs de mouvement candidats valides est caractérisé comme correspondant à une valeur de vecteur de mouvement réelle et non à un intrabloc, un champ de macrobloc, une portion de champ de macrobloc ou un macrobloc.

14. Procédé selon la revendication 1, comprenant en outre :
la réception d'information de vecteur de mouvement pour le macrobloc dans une image entrelacée codée par trame et prédite en avant, l'information de vecteur de mouvement comprenant de l'information pour quatre vecteurs de mouvement de champ ; et
le traitement du macrobloc en utilisant les quatre vecteurs de mouvement de champ ;
dans lequel un premier ensemble de deux des quatre vecteurs de mouvement de champ représente un mouvement dans un premier champ du macrobloc, et dans lequel un deuxième ensemble de deux des quatre vecteurs de mouvement de champ représente un mouvement dans un deuxième champ du macrobloc.

15. Procédé selon la revendication 14, dans lequel l'information pour les quatre vecteurs de mouvement de champ comprend des différentiels de vecteur de mouvement pour les quatre vecteurs de mouvement de champ.

16. Support lisible par un ordinateur sur lequel sont stockées des instructions exécutables par un ordinateur pour mettre en œuvre le procédé selon l'une quelconque des revendications 1 à 15 dans un décodeur vidéo.

17. Support lisible par un ordinateur sur lequel sont stockées des instructions exécutables par un ordinateur pour mettre en œuvre le procédé selon l'une quelconque des revendications 1 à 15 dans un encodeur vidéo.

18. Dispositif implémentant un décodeur vidéo, le dispositif étant adapté pour mettre en œuvre un procédé comprenant :
le calcul d'un prédicteur de vecteur de mouvement pour un vecteur de mouvement de champ actuel pour un champ actuel d'un macrobloc actuel dans une image codée à trame entrelacée, ledit calcul d'un prédicteur de vecteur de mouvement comprenant :
la détermination d'un nombre de un, deux ou trois vecteurs de mouvement candidats valides pour prédire un vecteur de mouvement de champ pour le champ actuel du macrobloc actuel dans l'image codée à trame entrelacée ;
pour chacun desdits un, deux ou trois vecteurs de mouvement candidats valides, la détermination de la polarité de champ de la trame de référence à laquelle se réfère le vecteur de mouvement candidat valide ;
le calcul du prédicteur de vecteur de mouvement pour le vecteur de mouvement de champ sur base au moins en partie des polarités de champ desdits un, deux ou trois vecteurs de mouvement candidats valides, dans lequel le calcul comprend :
la détermination du prédicteur de vecteur de mouvement en fonction du nombre de vecteurs de mouvement candidats valides, du nombre de vecteurs de mouvement candidats à champs identiques et du nombre de vecteurs de mouvement candidats à champs opposés, les vecteurs de mouvement candidats à champs identiques se référant au même champ par rapport à la polarité du champ actuel, les vecteurs de mouvement candidats à champs opposés se référant au champ opposé par rapport à la polarité du champ actuel, comprenant, quand le nombre de vecteurs de mouvement candidats valides est trois :
si le nombre de vecteurs de mouvement candidats à champs identiques est trois ou le nombre de vecteurs de mouvement candidats à champs opposés est trois, le calcul d'une médiane des vecteurs de mouvement candidats valides,
autrement, si le nombre de vecteurs de mouvement candidats à champs identiques est supérieur ou égal au nombre de vecteurs de mouvement candidats à champs opposés, la sélection d'un desdits vecteurs de mouvement candidats à champs identiques, et autrement, la sélection d'un desdits vecteurs de mouvement candidats à champs opposés ; et
si le nombre de vecteurs de mouvement candidats valides est inférieur à trois, le calcul comprend la sélection d'un des vecteurs de mouvement candidats valides pour l'utiliser comme prédicteur de vecteur de mouvement sans mettre en œuvre l'opération de médiane sur les vecteurs de mouvement candidats valides.
